(19) Europäisches Patentamt
European Patent Office
Office européen des brevets

(11) EP 0 961 445 A2

(12) EUROPEAN PATENT APPLICATION

(43) Date of publication:
01.12.1999 Bulletin 1999/48

(51) Int. Cl.$^6$: H04L 12/56, H04Q 11/04

(21) Application number: 99109261.0

(22) Date of filing: 26.05.1999

(84) Designated Contracting States:
AT BE CH CY DE DK ES FI FR GB GR IE IT LI LU MC NL PT SE
Designated Extension States:
AL LT LV MK RO SI

(30) Priority: 27.05.1998 JP 14535598

(71) Applicant:
MATSUSHITA ELECTRIC INDUSTRIAL CO., LTD.
Kadoma-shi, Osaka-fu, 571 (JP)

(72) Inventor: Ikushima, Kimiya
Neyagawa-shi, Osaka-fu (JP)

(74) Representative:
Altenburg, Udo, Dipl.-Phys. et al
Patent- und Rechtsanwälte
Bardehle - Pagenberg - Dost - Altenburg - Geissler - Isenbruck,
Galileiplatz 1
81679 München (DE)

# (54) Flow control method, and communication element and communication terminal executing the same

(57) When establishing in an ATM communication network a connection using ABR service, an ABR transmission bandwidth calculation part (106) calculates in a communication element (100) an ABR allocation bandwidth allocated to the ABR service and a transmission bandwidth determination part (108) determines whether or not the ABR allocation bandwidth is not more than 50 Mbps. When as a result the ABR allocation bandwidth is not more than 50 Mbps, a PCR computation part (112) calculates the value of an RIF in the range of $1/4 \leqq RIF \leqq 1$, for example, calculates the value of a PCR in a range where the total value of the PCR is 20 % to 60 % of the ABR allocation bandwidth and decides that an RDF is 1. On the basis of the values obtained in this PCR computation part (112), a parameter set part (103) sets the values of the RIF, RDF and PCR which are ABR parameters. Flow control is performed on the basis of such ABR parameters, whereby cell loss in a cell buffer is suppressed and communication efficiency is improved.

FIG. 1

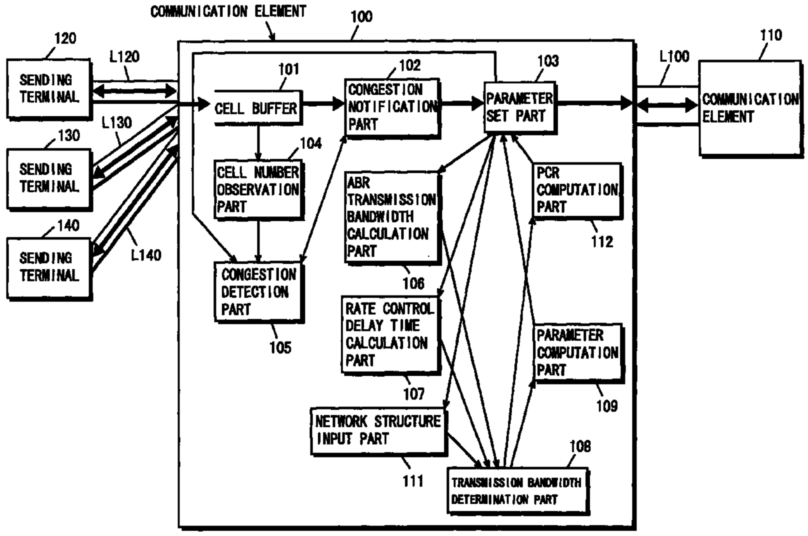


EP 0 961 445 A2

## Description

BACKGROUND OF THE INVENTION

Field of the Invention

The present invention relates to flow control methods, and more specifically to a method for flow control in an ATM (Asynchronous Transfer Mode) communication network for a connection of an ABR (Available Bit Rate) service category and a communication element and a communication terminal executing the same.

Description of the Background Art

Recently as a service category in an ATM (Asynchronous Transfer Mode) communication network, ABR (Available Bit Rate) having reliability with respect to cell loss and capable of attaining effective utilization of network resources is attracting attention (for example, refer to "News Letter" by ATM Forum Japan Committee, September 1995, Vol.2/No. 2, No. 6, pp. 2-3). In this ABR service category, flow control is performed between a plurality of communication elements (e.g., switches and multiplexers) forming the ATM communication network and terminals using the network. This flow control is implemented by informing the terminal of congestion occurring in the network so that the informed terminal suppresses traffic input in the network. Here, "terminal" stands for a device terminating the ABR service.

First, as a method of this flow control, a flow control method of EFCI (Explicit Forward Congestion Indication) marking defined in ATM Forum Document af-tm-0056.000 "ATM Forum Traffic Management Specification Version 4.0" is described.

A transmitting terminal using the ABR service category and sending information to a receiving terminal transmits one RM cell (Resource Management Cell) every time transmitting a prescribed number of data cells. After receiving the RM cell transmitted from the transmitting terminal, the receiving terminal sends back the RM cell to the transmitting terminal. An RM cell delivered from the transmitting terminal to the receiving terminal is called a forward RM cell, and a received RM cell sent back to the transmitting terminal is called a backward RM cell.

The transmitting terminal sets the value of EFCI field of a data cell to "0" when transmitting the same, and sets the value of CI field of a forward RM cell to "0" when transmitting the same. Further, the transmitting terminal holds the value of an allowed cell rate (called "ACR") and regularly transmits cells at a rate not more than the ACR. When the transmitting terminal starts sending cells, the ACR is set to a value called ICR (Initial Cell Rate), and thereafter every time the transmitting terminal receives a backward RM cell, the value of the ACR is updated in response to the value of the CI field of the backward RM cell in accordance with the following relational expressions:

When CI bit = 0

$$ACR = \min\{ACR + PCR \times RIF,\ PCR) \qquad (1)$$

When CI bit = 1

$$ACR = \max\{ACR - ACR \times RDF,\ MCR) \qquad (2),$$

where, RIF (Rate Increase Factor), RDF (Rate Decrease Factor), PCR (Peak Cell Rate) and MCR (Minimum Cell Rate) are parameters defined in the ABR service as parameters decided when establishing a connection using the ABR service (hereinafter these parameters are referred to as "ABR parameters"). It is assumed that max {A, B} indicates the larger one of values A and B and min {A, B} indicates the smaller one of the values A and B.

The receiving terminal sends back an RM cell arriving from the ATM communication network as a backward RM cell to the transmitting terminal. When receiving a data cell from the ATM communication network, the receiving terminal stores the value of the EFCI field of the data cell as an EFCI value. If the EFCI value is "1" when sending the backward RM cell to the transmitting terminal, the receiving terminal sets the value of the CI field of the backward RM cell to "1", thereafter sends the backward RM cell, and thereafter sets the EFCI value to "0".

When in the network congestion is detected or predicted, a communication element of the network can set the EFCI field of the data cell to "1" (EFCI marking). If the EFCI field of the data cell is set to "1", the value of the CI field of the backward RM cell is set to "1" when the receiving terminal transmits to the transmitting terminal the backward RM cell. And if the transmitting terminal receives the backward RM cell with the value of the CI field set to "1", the value of the ACR of the transmitting terminal is decreased in accordance with the above expression (2). Consequently, the cell transmission rate to the network is decreased and the congestion is eliminated. On the other hand, if in the network no congestion is detected or predicted, the value of the CI field of the backward RM cell is "0" when the transmitting terminal receives the backward RM cell and hence the value of the ACR of the transmitting terminal is increased in accordance with the above expression (1). Consequently, the cell transmission rate to the network is increased and a transmission bandwidth of the network can be effectively utilized. Here, the transmission bandwidth stands for the transmission rate of a communication path.

A congestion detecting method is not specified in the standard and is implementation specific. As an example of such a congestion detecting method, there is a method described in an article "Development of ABR Network and its Performance" reported by Koike, Ishizuka, Kitazume and Saito in NTT R & D, Vol. 45, No. 10, 1996. In this method, the system observes the number of cells stored in a cell buffer which is a queue for multiplexing cells and detects congestion when the number of cells is greater than a congestion detection threshold value, which is previously set. A flow control method of EFCI marking described above is now detailed.

FIG. 2 is a block diagram showing an exemplary ATM communication network executing a flow control method of EFCI marking employing the congestion detecting system described in "Development of ABR Network and its Performance". This communication network comprises transmitting terminals 220, 230 and 240 and communication elements 200 and 220. The communication element 200 includes a cell buffer 201, a congestion notification part 202, a parameter set part 203, a cell number observation part 204, and a congestion detection part 205. The communication elements 200 and 210 are interconnected through a communication path, and the transmitting terminals 220, 230 and 240 are connected to the communication element 200 through communication paths. In this example, the transmitting terminals 220, 230 and 240 transfer information in the form of cells through the communication element 200 to a receiving terminal (not shown) in the direction of the communication element 210. These respective cells are multiplexed in the cell buffer 201 of the communication element 200 and output toward the communication element 210. While FIG. 2 shows only a single structure for multiplexing, a similar structure is necessary for each of parts in which cells are multiplexed and congestion occurs.

Operations of the respective parts of the communication element 200 are now described. The cell buffer 201 stores cells arriving from the transmitting terminals 220, 230 and 240 in the arrival order and outputs the stored cells sequentially from the head one at a rate adapted to the transmission rate of the communication paths to the congestion notification part 202. When no cell is stored in the cell buffer 201, the cell buffer 201 outputs no cell.

The cell number observation part 204 observes the number of the cells stored in the cell buffer (hereinafter referred to as "in-buffer cell number"), and inputs, every time this in-buffer cell number changes, the value of the new in-buffer cell number in the congestion detection part 205.

The congestion detection part 205 stores values of a congestion detecting threshold Th_cg and a congestion state flag Fcg. The congestion detecting threshold Th_cg is previously set when starting operations of the network. The value of the congestion state indication flag Fcg is set to "0" when starting operations of the network, and thereafter updated in a method described below. When the in-buffer cell number is input from the cell number observation part 204, the congestion detection part 205 compares the value with the congestion detecting threshold Th_cg. On the basis of the result of the comparison, the congestion detection part 205 sets the congestion state indication flag Fcg to "1" when the in-buffer cell number is greater than the congestion detecting threshold Th_cg, and sets the congestion state indication flag Fcg to "0" when the in-buffer cell number is equal to or less than the congestion detecting threshold Th_cg.

When an RM cell is input from the cell buffer 201, the congestion notification part 202 passes the RM cell to the parameter set part 203, and when a data cell is input from the cell buffer 201, the congestion notification part 202 holds the data cell and inputs to the congestion detection part 205 a data cell receiving signal. When this data cell receiving signal is input, the congestion detection part 205 refers to the stored value of the congestion state indication flag Fcg and inputs the value to the congestion notification part 202. When this value of the congestion state indication flag Fcg is input, the congestion notification part 202 sets the value in the EFCI field of the held data cell and thereafter inputs the data cell to the parameter set part 203.

When the data cell is input from the congestion notification part 202, the parameter set part 203 outputs the data cell to the communication path at a rate equal to the transmission rate of the communication path. In addition thereto, the parameter set part 203 outputs, when a connection using the ABR service is newly established, a cell called a signaling cell to the communication path and negotiates with the transmitting terminal and the receiving terminal, thereby deciding the values of the ABR parameters such as RIF, RDF and PCR. For example, when the transmission distance between the transmitting terminal and the receiving terminal in which the connection is established is about 1000 km, the set values of RIF and RDF are decided in the range of not more than "1/8", and in practice values of not more than "1/32" are used as the set values of RIF and RDF. As described above, PCR, RIF and RDF are parameters used by the transmitting terminal for updating ACR when receiving a backward RM cell. It is defined that the values of these parameters are posted in connection establishment to each communication element with a signaling cell.

Problems in the aforementioned conventional flow control method (hereinafter referred to as "prior art") are described with reference to examples.

Consider that cells transmitted in respective connections C1 to C10, i.e., 10 connections in total are multiplexed in a cell buffer in a certain communication element. (a) of FIG. 3 shows, in the case of applying the flow control method of the prior art to a communication network where such multiplexing is performed, exemplary fluctuation of a total input rate when on all connections cells are input to cell buffers. In this example, it is assumed that on all connections cell input is started at a time T1. It is also assumed that on all connections after the time T1 cells are input regularly at the maximum rate allowed in the flow control, i.e., at a rate equal to the value of ACR of each connection. It is further assumed that at all times the cell input rates in the cell buffers on each connection change absolutely identically to each other. Under such assumptions, fluctuation of a total input rate which is the total of the input rates of the cells transmitted in the respective connections C1 to C10 into the cell buffers is now described.

In this example, input of cells is first started at the time T1 on the 10 connections C1 to C10. In the ABR service, it is defined that the input rate is set at ICR when starting data transmission on an established connection. In the ABR service, the first cell input from a transmitting terminal is a forward RM cell. This forward RM cell passes through each communication element in the communication network, thereafter is looped back in a receiving terminal, and sent back as a backward RM cell to the transmitting terminal. It is assumed here that at time T2 the transmitting terminal of each connection receives the backward RM cell which has been sent as a forward RM cell at time T1 by the transmitting terminal itself. Therefore, in the period from the time T1 to the time T2, the total input rate is $10 \times$ ICR.

At the time T2, the transmitting terminal receives the backward RM cell. In this example, the value of the CI field of this backward RM cell is "0". Therefore, at the time T2, the ACR of each of the connections C1 to C10 increases in accordance with the above expression (1), and the total input rate responsively increases to $10 \times$ (ICR + RIF $\times$ PCR) . After the time T2, the ACR of each of the connections C1 to C10 changes in accordance with the above expression (1) or (2) every time the transmitting terminal receives a backward RM cell. In this example, in the period from the time T2 to a time T3, the input rate is increased at a time interval of a time $\tau$ by $10 \times$ (RIF $\times$ PCR) . Here the time $\tau$ is the time interval at which the RM cell is received by each terminal of the connections C1 to C10.

In this example, it is assumed that the transmission rate of the transmission path connected to the parameter set part of the communication element is a constant value BW, size of the cells is a constant value CS (= 53 bytes), and the cell transmission time interval at the communication path is regularly equal to CS/BW. It is also assumed that the aforementioned time interval $\tau$ at which the RM cell is received by each terminal of the connections C1 to C10 is regularly given in the following relational expression, and it is further assumed that in the entire communication network except the cell buffer of the currently considered communication element no fluctuation of the cell sending time occurs.

$$\tau = (CS \times Nrm \times 10)/BW \qquad (3)$$

In the above expression (3), Nrm is a constant set as the interval at which the transmitting terminal transmits the forward RM cell in the ABR service. This Nrm is one of the parameters decided in connection establishment by negotiation made between the user and the communication element.

In this example, it is assumed that in the period from the time T1 to the time T3 the total input rate is greater than the transmission rate BW of the communication path connected to the parameter set part of the communication element. Under this assumption, in this example, the cell number stored in the cell buffer changes in the period from the time T1 to the time T3 as shown at (b) in FIG. 3. In other words, first from a time T10 the cell number starts to increase from "0". Thereafter at a time T4, the cell number exceeds the congestion detecting threshold Th_cg. After the time T4, congestion is detected in the congestion detection part and hence congestion notice by EFCI marking is performed in the congestion notification part. After EFCI marking is started at the time T4, the input rate responsively starts to decrease. However, there is a delay after starting the EFCI marking before the input rate starts to decrease, and in this example it is assumed that the input rate starts to decrease at the time T3.

Then, in a period from the time T3 to a time T5, the total input rate is decreased at the time interval of the time $\tau$ by "(total input rate) $\times$ RDF". In other words, the total input rate is decreased to (1 - RDF) times every time the transmitting terminal receives a backward RM cell.

In the ABR service, MCR is defined as the minimum value of the input rate for each connection. In this example, the input rate of each of the connections C1 to C10 is decreased at the time T5 to MCR, and in a period from the time T5 to a time T9, the total input rate stays at $10 \times$ MCR.

In this example, it is assumed that the total input rate is greater than the transmission rate BW of the communication path connected to the parameter set part in the period from the time T3 to a time T6 and the total input rate is less than the transmission rate BW in the period from the time T6 to the time T9. Under this assumption, in this example, the cell number in the cell buffer changes in the period from the time T3 to the time T9 as shown at (b) in FIG. 3. In other words, the cell number in the cell buffer is increased in the period from the time T3 to the time T6, and the cell number in the cell buffer is decreased in the period from the time T6 to the time T9. At a time T7 during this decrease, the cell number in the cell buffer becomes equal to the congestion detecting threshold Th_cg, and the congestion notification part terminates EFCI marking. For later discussion, the increment of the cell number in the cell buffer from the time T4 to the time T3, i.e., the increment of the queue length in this period is defined as Q1. Further, the increment of the queue length from the time T3 to the time T6 is defined as Q2. There is a delay after terminating EFCI marking at the time T7 before the cell input rate responsively starts to increase, and it has been assumed in this example that the input rate starts to increase at the time T9.

After the time T9, the total input rate continuously changes similarly to the change from the time T2 to the time T9.

In this example, it is assumed that the total input rate is less than the transmission rate BW in the period from the time T9 to a time T8 (> T9) and the total input rate is greater than the transmission rate after the time T8. Therefore, the cell number in the cell buffer is decreased from the time T9 to the time T8, and is thereafter increased. For later discussion, the decrement of the queue length from the time T7 to the time T8 is defined as Q3.

After the time T8, the cell number in the cell buffer continuously changes similarly to the change from the time T10 to the time T8.

In this example, the time interval $\tau$ at which the total input rate increases/decreases is inverse-proportional to the transmission rate BW as shown in the above expression (3). Therefore, when BW is small, $\tau$ gets large. It is understood that, when BW = 10 Mbps, for example, $\tau$ becomes 13.6 msec., which is an extremely large value, and reaches an extremely large value. When $\tau$ is large, a long time is necessary for the input rate to increase in the period from the time T2 to the time T3.

While in this example the case where all connections C1 to C10 regularly transmit cells has been considered, a transmitting terminal in an actual ATM communication network generates data of a finite size in an upper layer to the ATM layer, divides the data in the ATM layer into cells and transmits these cells in a period of finite length. For later discussion, this period is defined as "active period", and the length of the active period is defined as "data transmission time". After the active period the transmitting terminal performs no cell input until next data is generated in an upper layer. For later discussion, this period is defined as "idle period". In this case, if $\tau$ is large in a certain connection, a long time is necessary for the input rate to increase and the time necessary for transmitting single data in the connection is also extended. Therefore, in order to quickly send single data having a finite size, it is necessary to set the RIF to a large value to widen the increase width of the input rate.

It is conceivable for widening the increase width of the input rate to increase the PCR, however, when setting the RIF to a small value of not more than "1/64" and setting only the PCR to a large value, cell loss in the cell buffer frequently occurs as described below, When the PCR of a certain connection is large and the network is not congested in the active period, the input rate (ACR) of the connection becomes extremely large. And when the ACR is an extremely large value transition to the idle period may be made. In this case, in a next active period input of cells is abruptly started on the connection at an extremely high input rate. Therefore, when congestion occurs in the network, the cell number is remarkably increased and there is a high possibility that the cells overflow the buffer to cause cell loss.

It is understood from the above that, when the transmission rate BW is at a small value, the value of the RIF must be set to a large value in order to lower a cell loss ratio in the cell buffer and shorten the data transmission time.

When in the transmitting terminal an upper layer such as TCP/IP (Transmission Control Protocol/Internet Protocol) generates data and transmits to the receiving terminal the data, it is extremely important to reduce the cell loss ratio in the cell buffer and shorten the data transmission time. The reason is now described. When the upper layer such as TCP/IP transmits data, it retransmits the same data if the data is partially lost or the data transmission time is extremely long. Therefore, when the cell loss ratio is high, retransmission of data frequently takes place and hence communication efficiency (throughput) in the upper layer such as TCP/IP is remarkably lowered. Therefore, when the upper layer such as TCP/IP sends data through the ABR service and the transmission rate BW is low, it is extremely important to set the RIF to a large value so as to shorten the data transmission time and reduce the cell loss ratio in the cell buffer.

When setting the RIF to a large value, the aforementioned Q1 which is the increment of the queue length from the time T4 to the time T3 is increased. And as a result the cell loss ratio in the cell buffer gets high. In order to reduce the cell loss ratio, therefore, it is necessary to set the RDF to a large value and reduce the value of the aforementioned Q2 which is the increment of the queue length from the time T3 to the time T6.

From the above, it is necessary for shortening the data transmission time and reducing the cell loss ratio to set the values of RIF and RDF both to large values. Therefore, when the upper layer such as TCP/IP sends data through the ABR service and the transmission rate BW is low, it is extremely important to set both RIF and RDF to large values thereby shortening the data transmission time and reducing the cell loss ratio in the cell buffer.

However, as already described, in the flow control method of the prior art for a connection using the ABR service category in the ATM communication network the values of the parameters such as RIF and RDF are decided on the basis of study results as to the ATM communication network with a large bandwidth, and both RIF and RDF are set to small values in the range of not more than "1/8". For example, in the aforementioned article "Development of ABR Network and its Performance", performance evaluation as to the values of RIF and RDF not more than "1/8" is made. As understood from this evaluation result, when applying the flow control method of the prior art to an ATM communication network with a large bandwidth, in practice both RIF and RDF are set to values not more than "1/32" in order to obtain high throughput.

Therefore, when applying the flow control method of the prior art to an ATM communication network in which the transmission rate of a communication path is not more than 50 Mbps, for example, the data transmission time is extended and the cell loss ratio in the cell buffer gets high. Consequently, when the upper layer such as TCP/IP transmits data through the ABR service, retransmission of data frequently takes place and hence the communication efficiency (throughput) in the upper layer such as TCP/IP is remarkably lowered.

SUMMARY OF THE INVENTION

Therefore, an object of the present invention is to provide a flow control method which can suppress cell loss in a cell buffer in an ATM communication network not only for a connection of a wide bandwidth using an ABR service category but for a connection of a narrow band of not more than 50 Mbps and improve communication efficiency (throughput) and a communication element and a communication terminal executing the same.

The present invention has the following features to solve the problem above.

A first aspect of the present invention is directed to a communication element used in an ATM communication network in which one or a plurality of connections are established over which data is transported in the form of cells of fixed length in an ABR service category in a transmission bandwidth of not more than 50 Mbps for receiving, when information is transferred through the ATM communication network between a transmitting terminal and a receiving terminal, a cell inputted from the transmitting terminal into the ATM communication network, performing prescribed processing on the received cell and thereafter transmitting the cell to the receiving terminal, the communication element comprising:

a parameter decision part for deciding, when establishing a connection using the ABR service category between the transmitting terminal and the receiving terminal, values of ABR parameters defined in the ABR service;
a congestion detection part for detecting congestion in a part in which cells are multiplexed including a cell transmitted on the connection using the ABR service category; and
a congestion notification part for issuing an instruction for decreasing an ACR, which is an allowed cell rate held in the transmitting terminal, to the transmitting terminal when the congestion is detected while issuing an instruction for increasing the ACR to the transmitting terminal when the congestion is not detected,
wherein the parameter decision part decides the value of a parameter RIF, which is one of the ABR parameters, in the range of not less than "1/16" and not more than "1", the RIF defining the increase speed of a cell input rate from the transmitting terminal into the ATM communication network.

As described above, in the first aspect, the value of the RIF is decided in the range of $1/16 \leqq RIF \leqq 1$ excluding a range where high communication efficiency (throughput) cannot be attained, whereby a value proper as the value of the ABR parameter can be efficiently obtained. By setting such a proper parameter value when establishing the connection, a data transmission time and a cell loss ratio in a cell buffer are both reduced.

According to a second aspect, in the first aspect,

the parameter decision part decides the value of a parameter RDF, which is one of the ABR parameters, and which defines the decrease speed of the cell input rate from the transmitting terminal into the ATM communication network, in the range of not less than "1/16" and not more than "1".

As described above, in the second aspect, the values of the RIF and the RDF are decided in the ranges of $1/16 \leqq RIF \leqq 1$ and $1/16 \leqq RDF \leqq 1$ excluding ranges where high communication efficiency cannot be attained, whereby values proper as the values of the ABR parameters, i.e., such values that the data transmission time and the cell loss ratio in the cell buffer are both reduced and high communication efficiency can be attained, can be further efficiently obtained.

According to a third aspect, in the second aspect,

the parameter decision part decides the value of the RDF in the range of not less than "1/4" and not more than "1".

As described above, in the third aspect, the RDF is set to a value in the range of $1/4 \leqq RDF \leqq 1$ whereby in congestion notice the rate of cell input from the transmitting terminal into the ATM communication network is quickly decreased and hence the total cell loss ratio is reduced. When an upper layer such as TCP/IP transmits data through the ABR service, the cell loss ratio is so low that a probability of causing data retransmission is reduced, and communication efficiency in the upper layer is improved.

According to a fourth aspect, in the third aspect,

the value of the RDF is "1".

As described above, in the fourth aspect, the RDF is set to "1" so that the total cell loss ratio is further reduced, and when the upper layer such as TCP/IP transmits data through the ABR service, the communication efficiency in the upper layer is further improved.

According to a fifth aspect, in the first aspect,

the parameter decision part decides the value of the RIF in the range of not less than "1/4" and not more than "1".

As described above, in the fifth aspect, the RIF is set to a value in the range of $1/4 \leqq RIF \leqq 1$, whereby the data transmission time is shortened and the cell loss ratio in the cell buffer is reduced. Further, when the upper layer such as TCP/IP transmits data through the ABR service, the data transmission time is so short that a probability of causing data retransmission is reduced, and the communication efficiency in the upper layer is improved.

According to a sixth aspect, in the fifth aspect,

a parameter RDF, which is one of the ABR parameters, defining the decrease speed of the cell input rate from the transmitting terminal into the ATM communication network is "1".

As described above, in the sixth aspect, the RIF is set to a value in the range of $1/4 \leqq RIF \leqq 1$ while the RDF is set to "1", whereby the data transmission time is shortened, the cell loss ratio in the cell buffer is reduced and the total cell loss ratio is minimized. Further, when the upper layer such as TCP/IP transmits data through the ABR service, the communication efficiency in the upper layer is further improved.

According to a seventh aspect, in the sixth aspect, the communication element comprises:

a buffer provided in the part in which cells are multiplexed for multiplexing cells transferred in the ATM communication network; and
an observation part for observing the number of the cells stored in the buffer, while
the congestion detection part detects congestion on the basis of observation by the observation part when the number of the cells stored in the buffer exceeds a previously set congestion detecting threshold, and
the congestion detecting threshold is set to a value of not less than 1/10 and not more than 1/2 of the capacity of the buffer.

As described above, in the seventh aspect, the congestion detecting threshold is set to a value of not less than 1/10 and not more than 1/2 the buffer capacity of the cell buffer, whereby the cell loss ratio in the cell buffer is reduced. Further, when the upper layer such as TCP/IP transmits data through the ABR service, the cell loss ratio is so low that a probability of causing data retransmission is reduced, and the communication efficiency in the upper layer is further improved.

According to an eighth aspect, in the first aspect,

the parameter decision part decides, so that a cell loss ratio in the part in which cells are multiplexed is reduced and a cell transmission rate at which the transmitting terminal inputs cells in the ATM communication network is increased, the value of a parameter PCR, which is one of the ABR parameters, defining the maximum value of the cell transmission rate.

As described above, in the eighth aspect, the value of the PCR is set to such a value that the cell loss ratio in the buffer is reduced and the data transmission is shortened, whereby the total cell loss ratio is reduced. Further, when the upper layer such as TCP/IP transmits data through the ABR service, the total cell loss ratio is so low that a probability of causing data retransmission is reduced, and the communication efficiency in the upper layer is improved.

According to a ninth aspect, in the sixth aspect,

the parameter decision part decides the value of a parameter PCR, which is one of the ABR parameters, and which defines the maximum value of the cell input rate from the transmitting terminal into the ATM communication network, so that the total value of the PCR as to the connections is a value of not less than 20 % and not more than 60 % of the transmission bandwidth.

As described above, in the ninth aspect, the value of the PCR is so set that the total value of the PCR is not less than 20 % and not more than 60 % of the transmission bandwidth, whereby the data transmission time and the cell loss ratio in the cell buffer are both extremely reduced, and when the upper layer such as TCP/IP transmits data through the ABR service, the communication efficiency gets extremely high.

An tenth aspect of the present invention is directed to a communication element used in an ATM communication network in which one or a plurality of connections are established over which data is transported in the form of cells of fixed length in an ABR service category for receiving, when information is transferred through the ATM communication network between a transmitting terminal and a receiving terminal, a cell inputted from the transmitting terminal into the ATM communication network, performing prescribed processing on the received cell and thereafter transmitting the cell to the receiving terminal, the communication element including:

a parameter decision part for deciding, when establishing a connection using the ABR service category between the transmitting terminal and the receiving terminal, values of ABR parameters defined in the ABR service;
a congestion detection part for detecting congestion in a part in which cells are multiplexed including a cell transmitted on the connection using the ABR service category; and
a congestion notification part for issuing an instruction for decreasing an ACR which is an allowed cell rate held in the transmitting terminal to the transmitting terminal when the congestion is detected while issuing an instruction for increasing the ACR to the transmitting terminal when the congestion is not detected, and

the parameter decision part including:

an ABR transmission bandwidth calculation part for calculating an ABR allocation bandwidth, which is a band allocated when establishing the connection to the ABR service;

a transmission bandwidth determination part for determining whether or not the ABR allocation bandwidth is not more than 50 Mbps; and

a calculation part for obtaining, when the ABR allocation bandwidth is not more than 50 Mbps, the values of the ABR parameters in a predetermined range.

As described above, in the tenth aspect, the ABR allocation bandwidth is calculated when in the ATM communication network a connection using the ABR service is established, and when the ABR allocation bandwidth is not more than 50 Mbps, the ABR parameters are decided in the predetermined range. Therefore, values proper as the values of the ABR parameters can be efficiently obtained in a range corresponding to a narrow band of not more than 50 Mbps. By thus setting proper parameter values responsive to the value of the ABR allocation bandwidth, the data transmission time is shortened while the cell loss ratio in the cell buffer is reduced, and high communication efficiency can be attained.

According to a eleventh aspect, in the tenth aspect, the calculation part obtains the value of a parameter RIF, which is one of the ABR parameters, in the range of not less than "1/16" and not more than "1" when the ABR allocation bandwidth is not more than 50 Mbps, the RIF defining the increase speed of a cell input rate from the transmitting terminal into the ATM communication network.

According to a twelfth aspect, in the eleventh aspect,

the calculation part obtains, when the ABR allocation bandwidth is not more than 50 Mbps, the value of a parameter RDF, which is one of the ABR parameters, defining the decrease speed of the cell input rate from the transmitting terminal into the ATM communication network in the range of not less than "1/16" and not more than "1".

According to a thirteenth aspect, in the twelfth aspect,

the calculation part obtains, when the ABR allocation bandwidth is not more than 50 Mbps, the value of the RDF in the range of not less than "1/4" and not more than "1".

According to a fourteenth aspect, in the eleventh aspect,

the calculation part obtains the value of the RIF in the range of not less than "1/4" and not more than "1".

According to a fifteenth aspect, in the fourteenth aspect,

a parameter RDF, which is one of the ABR parameters, defining the decrease speed of the cell input rate from the transmitting terminal into the ATM communication network is "1".

A sixteenth aspect of the present invention is directed to a communication terminal for use as a transmitting terminal sending information to a receiving terminal through an ATM communication network in which one or a plurality of connections are established over which data is transported in the form of cells of fixed length in an ABR service category in a transmission bandwidth of not more than 50 Mbps, the communication terminal including:

a parameter decision part for deciding, when establishing a connection using the ABR service category between the transmitting terminal and the receiving terminal, values of ABR parameters defined in the ABR service;

a cell sending part holding an ACR, which is an allowed cell rate, for inputting, when sending to the receiving terminal information, at a rate not more than the ACR a cell including the information into the ATM communication network; and

an ACR computation part for decreasing the ACR on the basis of an RDF, which is one of the ABR parameters, when receiving an instruction issued from a communication element included in the ATM communication network for decreasing the ACR while increasing the ACR on the basis of an RIF, which is one of the ABR parameters, when receiving an instruction issued from the communication element for increasing the ACR, and

the parameter decision part decides the value of the RIF in the range of not less than "1/16" and not more than "1".

According to an seventeenth aspect, in the sixteenth aspect,

the parameter decision part decides the value of the RDF in the range of not less than "1/16" and not more than "1".

According to a eighteenth aspect, in the seventeenth aspect,

the parameter decision part decides the value of the RDF in the range of not less than "1/4" and not more than "1".

According to a nineteenth aspect, in the sixteenth aspect,

the parameter decision part decides the value of the RIF in the range of not less than "1/4" and not more than "1".

According to a twentieth aspect, in the nineteenth aspect,

the RDF is "1".

A twenty-first aspect of the present invention is directed to a method of flow control performed, when through an ATM communication network in which one or a plurality of connections are established over which data is transported in the form of cells of fixed length in an ABR service category in a transmission bandwidth of not more than 50 Mbps information is transmitted between a transmitting terminal and a receiving terminal, between a communication element included in the ATM communication network and the transmitting terminal and the receiving terminal, the method comprising:

a parameter decision step of deciding, when establishing a connection using the ABR service category between the transmitting terminal and the receiving terminal, the values of ABR parameters defined in the ABR service;
a cell sending step of inputting, when sending in the transmitting terminal information to the receiving terminal, at a rate not more than an ACR which is an allowed cell rate held in the transmitting terminal a cell including the information in the ATM communication network;
a congestion detection step of detecting in the communication element congestion in a part in which cells are multiplexed including a cell transmitted on the connection using the ABR service category;
a decrease instruction step of issuing, when in the communication element the congestion is detected, an instruction for decreasing the ACR to the transmitting terminal;
an increase instruction step of issuing, when in the communication element the congestion is not detected, an instruction for increasing the ACR to the transmitting terminal;
an ACR decrease step of decreasing, when receiving in the transmitting terminal the instruction for decreasing the ACR, the ACR on the basis of an RDF, which is one of the ABR parameters; and
an ACR increase step of increasing, when receiving in the transmitting terminal the instruction for increasing the ACR, the ACR on the basis of an RIF, which is one of the ABR parameters, and
in the parameter decision step the value of the RIF, which is one of the ABR parameters, is decided in the range of not less than "1/16" and not more than "1".

According to a twenty-second aspect, in the twenty-first aspect,
in the parameter decision step the value of the RDF, which is one of the ABR parameters, is decided in the range of not less than "1/16" and not more than "1".

According to a twenty-third aspect, in the twenty-second aspect,
in the parameter decision step the value of the RDF is decided in the range of not less than "1/4" and not more than "1".

According to a twenty-fourth aspect, in the twenty-third aspect,
the value of the RDF is "1".

According to a twenty-fifth aspect, in the twenty-first aspect,
in the parameter decision step the value of the RIF is decided in the range of not less than "1/4" and not more than "1".

According to a twenty-sixth aspect, in the twenty-fifth aspect,
the RDF is "1".

A twenty-seventh aspect of the present invention is directed to a method of flow control performed, when through an ATM communication network in which one or a plurality of connections are established over which data is transported in the form of cells of fixed length in an ABR service category information is transmitted between a transmitting terminal and a receiving terminal, between a communication element included in the ATM communication network and the transmitting terminal and the receiving terminal, the method including:

a parameter decision step of deciding, when establishing a connection using the ABR service category between the transmitting terminal and the receiving terminal, the values of ABR parameters defined in the ABR service;
a cell transmission step of inputting, when transmitting in the transmitting terminal information to the receiving terminal, at a rate not more than an ACR, an allowed cell rate held in the transmitting terminal, a cell including the information into the ATM communication network;
a congestion detection step of detecting in the communication element congestion in a part in which cells are multiplexed including a cell transmitted on the connection using the ABR service category;
a decrease instruction step of issuing, when in the communication element the congestion is detected, an instruction for decreasing the ACR to the transmitting terminal;
an increase instruction step of issuing, when in the communication element the congestion is not detected, an instruction for increasing the ACR to the transmitting terminal;
an ACR decrease step of decreasing, when receiving in the transmitting terminal the instruction for decreasing the ACR, the ACR on the basis of an RDF, which is one of the ABR parameters; and

an ACR increase step of increasing, when receiving in the transmitting terminal the instruction for increasing the ACR, the ACR on the basis of an RIF, which is one of the ABR parameters, and

the parameter decision step including:

an ABR transmission bandwidth calculation step of calculating in the communication element an ABR allocation bandwidth allocated to the ABR service when establishing the connection;

a step of determining whether or not the ABR allocation bandwidth is not more than 50 Mbps; and

a step of deciding, when the ABR allocation bandwidth is not more than 50 Mbps, the values of the ABR parameters in a predetermined range.

According to a twenty-eighth aspect, in the twenty-seventh aspect,

in the parameter decision step the value of the RIF is decided in the range of not less than "1/16" and not more than "1".

According to a twenty-ninth aspect, in the twenty-eighth aspect,

in the parameter decision step the value of the RDF is decided in the range of not less than "1/16" and not more than "1 ".

According to a thirtieth aspect, in the twenty-ninth aspect,

in the parameter decision step the value of the RDF is decided in the range of not less than "1/4" and not more than "1".

According to a thirty-first aspect, in the twenty-eighth aspect,

in the parameter decision step the value of the RIF is decided in the range of not less than "1/4" and not more than "1".

According to a thirty-second aspect, in the thirty-first aspect,

the RDF is "1".

The above described effects of the present invention can be confirmed through results of computer simulations shown in FIG. 9, FIG. 10, FIG. 11, FIG. 12, FIG. 13, FIG. 14, FIG. 15 and FIG. 24 to FIG. 32.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram showing the structure of a communication element for executing a flow control method according to an embodiment of the present invention;

FIG. 2 is a block diagram showing the structure of a communication element for executing a flow control method of the prior art;

FIG. 3 is a diagram showing, in the case of employing the flow control method of the prior art, exemplary fluctuation of an input rate at which cells are input into cell buffers and exemplary fluctuation of the number of cells stored in the cell buffer of the communication element;

FIG. 4 is a flow chart showing the procedure of computation of values of parameters in a parameter computation part in the communication element for executing the aforementioned embodiment;

FIG. 5 is a block diagram showing a detailed structure of the aforementioned parameter computation part;

FIG. 6 is a flow chart showing procedure of computing the values of the parameters in a transmission bandwidth determination part, a PCR computation part and the parameter computation part in the communication element for executing the aforementioned embodiment;

FIG. 7 is a block diagram showing the structure of a transmitting terminal for executing the aforementioned embodiment;

FIG. 8 is a block diagram showing the structure of an ATM part in the transmitting terminal for executing the aforementioned embodiment;

FIG. 9 is a diagram showing the relation between an in-switch cell loss ratio CLRsw and RIF and RDF in ABR service;

FIG. 10 is a diagram showing the relation between a delay cell loss ratio CLRdl and RIF and RDF in the ABR service;

FIG. 11 is a diagram showing the relation between a total cell loss ratio TCLR and RIF and RDF in the ABR service;

FIG. 12 is a diagram showing the relation between the in-switch cell loss ratio CLRsw and RIF and PCR in the ABR service;

FIG. 13 is a diagram showing the relation between the delay cell loss ratio CLRdl and RIF and PCR in the ABR service;
FIG. 14 is a diagram showing the relation between the total cell loss ratio TCLR and RIF and PCR in the ABR service;
FIG. 15 is a diagram showing the relation between a congestion detecting threshold Th_cg and the in-switch cell loss ratio CLRsw, the delay cell loss ratio CLRdl and the total cell loss ratio TCLR in the ABR service;
FIG. 16 is a diagram showing a network model employed in a first computer simulation;
FIG. 17 is a block diagram showing the structure of an ATM network based on the network model employed in the first computer simulation;
FIG. 18 is a diagram showing a transmitting terminal model employed in the first computer simulation;
FIG. 19 is a diagram showing a switch model employed in the first computer simulation;
FIG. 20 is a block diagram showing the structure of an ATM network based on a network model employed in a second computer simulation;
FIG. 21 is a block diagram showing the structure of a transmitting terminal based on a transmitting terminal model employed in the second computer simulation;
FIG. 22 is a block diagram showing the structure of an ATM switch based on a switch model employed in the second computer simulation;
FIG. 23 is a block diagram showing the structure of a receiving terminal based on a receiving terminal model employed in the second computer simulation;
FIG. 24 is a diagram showing the relation between TCP throughput and RIF and RDF;
FIG. 25 is a diagram showing the relation between the TCP throughput and RIF and RDF;
FIG. 26 is a diagram showing the relation between the TCP throughput and RIF and RDF;
FIG. 27 is a diagram showing the relation between the TCP throughput and RIF and RDF;
FIG. 28 is a diagram showing the relation between the TCP throughput and RIF and RDF;
FIG. 29 is a diagram showing the relation between the TCP throughput and RIF and RDF;
FIG. 30 is a diagram showing the relation between the TCP throughput and RIF and RDF;
FIG. 31 is a diagram showing the relation between the TCP throughput and RIF and RDF; and
FIG. 32 is a diagram showing the relation between the TCP throughput and RIF and RDF.

## DESCRIPTION OF THE PREFERRED EMBODIMENTS

### ⟨1. Basic Study⟩

As the basic study for implementing a communication element for executing a flow control method according to an embodiment of the present invention, the inventor has studied values to be set for a connection using ABR service in an ATM communication network as ABR parameters. Before describing the embodiment of the present invention, this basic study is described. The following description is made presupposing the structure of the ATM communication network shown in FIG. 2 with reference to FIG. 3 showing exemplary fluctuation of a cell input rate and the number of cells in a cell buffer corresponding thereto.

### ⟨1.1 Study of RIF and RDF⟩

As described above, for the following reason, it is necessary for shortening a data transmission time and lowering a cell loss ratio to set the values of RIF and RDF both large.

When a transmitting terminal repeats active periods and idle periods, it is necessary for shortening a data transmission time to widen the width of increase of a cell input rate. In order to widen the width of increase of the input rate, PCR or RIF may be set to a large value. If setting the PCR large, however, input of cells may be abruptly started at an extremely large input rate when the transmitting terminal makes transition from a state of the idle period to a state of the active period. In this case, when congestion occurs in the network, there is high possibility that the cell number remarkably is increased and cells overflow a buffer to cause cell loss. If setting the RIF large, on the other hand, the aforementioned Q1 shown at (b) in FIG. 3 is widened and the cell number in the cell buffer is increased to a large value, and hence the cell loss ratio in the cell buffer is increased. In this case the cell loss ratio can be reduced by setting the RDF large and narrowing the aforementioned Q2 shown at (b) in FIG. 3. In order to shorten the data transmission time and reduce the cell loss ratio, therefore, it is necessary to set the values of the RIF and the RDF both large.

As will be described later, according to detailed computation, it is shown that, when the transmission rate BW is 10 Mbps to 50 Mbps, the data transmission time is shortened and the cell loss ratio in the cell buffer is reduced by setting the RIF to a proper value in the range of not less than "1/16" and not more than "1" while setting the RDF at a proper value in the range of not less than "1/16" and not more than "1". It is also shown at this time that, when transmitting data in a transmission control protocol (hereinafter abbreviated as "TCP"), TCP throughput being the average of the rate at which data arrives at the receiving terminal is increased.

〈1.2 Study of Congestion detecting threshold Th_cg〉

Consideration is now made on, in the case of setting the RIF to a large value, what value to set the congestion detecting threshold Th_cg in order to shorten the data transmission time and reduce the cell loss ratio in the cell buffer.

Generally, when the congestion detecting threshold Th_cg is set large, the timing for starting a rate decrease instruction upon occurrence of congestion is delayed and hence there is a high possibility that upon occurrence of congestion the number of cells in the cell buffer exceeds the buffer capacity to cause cell loss and the cell loss ratio in the cell buffer becomes high. This corresponds to the high possibility that, in the aforementioned example shown in FIG. 3, the value of Th_cg + Q1 + Q2 becomes greater than the buffer capacity and cell loss takes place in the cell buffer.

When the congestion detecting threshold Th_cg is set small, on the other hand, the timing for starting a rate increase instruction upon elimination of congestion is delayed and hence there is a high possibility that upon elimination of congestion the number of cells in the cell buffer reaches zero, the cell transmission rate being the rate at which cells are actually transmitted in the communication path is decreased, and thus the data transmission time is lengthened. This corresponds to the high possibility that, in the aforementioned example shown in FIG. 3, Q3 becomes equal to the congestion detecting threshold Th_cg and the number of cells in the cell buffer reaches zero.

While it has been assumed in the example shown in FIG. 3 that the transmission rate of the communication path is constant, also in this case the value of the cell transmission rate being the rate at which cells are actually transmitted in the communication path fluctuates when no cell is stored in the cell buffer.

When setting the RIF to a large value, the value of the aforementioned Q3 is decreased. Therefore, even if the congestion detecting threshold Th_cg is set to a small value, the possibility that upon elimination of congestion the number of cells in the cell buffer reaches zero is low. Hence, even if the congestion detecting threshold Th_cg is set to a small value, the data transmission time is short. When setting the congestion detecting threshold value Th_cg to a small value, the delay of the timing for starting a rate decrease instruction upon occurrence of congestion is shortened and hence the cell loss ratio in the cell buffer is lowered.

From the above, when setting the RIF to a large value, the congestion detecting threshold Th_cg may be set to a small value so as to lower the cell loss ratio in the cell buffer and shorten the data transmission time.

As will be described later, according to detailed computation, it is shown that, when the transmission rate BW is not more than 50 Mbps, the data transmission time is extremely shortened and the cell loss ratio in the cell buffer is extremely lowered by setting the RIF at a value of not less than "1/4" and not more than "1" while setting the RDF to "1" and setting the congestion detecting threshold Th_cg to a value of not less than "1/10" and not more than "1/2" of the buffer capacity. Further, it is shown at this time that the TCP throughput being the average of the rate at which data arrives at the receiving terminal when transmitting the data in TCP is improved.

〈1.3 Study of PCR〉

Consideration is now made on, when setting the RIF to a large value, what value to set the PCR which is the parameter specifying the maximum value of the cell input rate of the transmitting terminal in the ABR service in order to shorten the data transmission time and lower the cell loss ratio in the cell buffer.

Generally, when the PCR is set large, the cell loss ratio in the cell buffers gets high for the aforementioned reason. When the PCR is small, on the other hand, the cell input rate cannot be increased also when a part in which cells are multiplexed is not congested. Therefore, the data transmission time is lengthened. Thus, it is desirable to set the PCR to such a value as to lower the cell loss ratio in the cell buffer and shorten the data transmission time.

Such a value of the PCR is obtained by modeling the communication network and performing a computer simulation. It is shown by the computer simulation that, when employing a communication element comprising a cell buffer having a capacity of 250 cells and multiplexing 10 connections, over which data (single data consists of 94 cells on the average) generated at a generation rate of 0.75 Mbps into cells and inputting the cells into a communication path having a transmission rate BW of 10 Mbps in the network for making communication, the RIF, the RDF, the congestion detecting threshold Th_cg and the PCR may be so set that RIF = 1/4, RDF = 1, Th_cg = 75 and PCR = 3.5 Mbps in order to render a total cell loss ratio defined in the following expression less than 1/1000. This computer simulation is described later in detail.

$$TCLR = CLRsw + CLRdl \qquad (4)$$

In the above expression (4), CLRsw represents an in-switch cell loss ratio and CLRdl represents a delay cell loss ratio. Here, the in-switch cell loss ratio CLRsw is defined as the ratio of the number of cells discarded in the cell buffer in the communication element to the total cell number, and the delay cell loss ratio CLRdl is defined in the following expres-

sion:

$$\text{CLRdl} = \{\text{the number of such cells that the cell transmission delay exceeds 350 msec.}\} \div \{\text{the number of cells arriving at the receiving terminal}\} \quad (5)$$

where the cell transmission delay is defined as a cell transmission time which is the time from cell generation to the time of arrival of the cell at the receiving terminal.

In the case of, when the cell transmission delay is greater than a certain constant value and when a cell is discarded, sending data with a protocol retransmitting data forming the cell, the possibility of causing retransmission of the data is lowered and the data transmission rate is increased as the aforementioned total cell loss ratio TCLR is low. For example, a case of sending data by TCP (Transmission Control Protocol) where the time-out period of the TCP is about 350 msec. corresponds to this case.

〈1.4 Study by Computer Simulation〉

By simulating a congestion phenomenon in an ATM communication network with a computer, the relation between the set values of the aforementioned parameters, an in-switch cell loss ratio (also simply referred to as "in-SW cell loss ratio"), which is a cell discard ratio in the cell buffer and the data transmission time is considered in detail.

〈1.4.1 First Computer Simulation〉

In order to make a simulation as to the aforementioned relation, the ATM communication network performing ABR service is modeled. The ATM communication network performing ABR service can be modeled with a network model shown in FIG. 16, for example. Further, transmitting terminals and switches forming the network model of FIG. 16 can be respectively modeled as shown in FIG. 18 and FIG. 19, for example.

The network model of FIG. 16 can be regarded as that modeled by noting only transmitting terminals, receiving terminals and a congestion point in an ATM communication network shown in FIG. 17, for example, and extracting the same. The transmitting terminals and receiving terminals shown in FIG. 16 represent ATM devices terminating the ABR service such as ATM-LAN switches, CLAD, ATM terminals, for example.

In the ATM communication network of FIG. 17, 10 transmitting terminals send data and these data are multiplexed with an in-switch buffer equipped at a multiplexing part of a certain switch into a single communication path. In the network of FIG. 17, the physical line speed of the communication path is 10 Mbps, the transmission distance between the transmitting terminals and the receiving terminals is 100 km as to all connections, and congestion in the network occurs only in a single in-switch buffer.

The transmitting terminal model shown in FIG. 18 is described. In a traffic source present in the transmitting terminal model, data is generated at a time interval according to exponential distribution. The generated data is formed by cells of a number according to geometric distribution. In the traffic source of each transmitting terminal, cells are generated in the ratio of 0.75 [Mbit/sec.] on the average. This cell generation ratio corresponds to about 1769 [cells/sec.]. The number of cells forming single data is about 94 on the average, which corresponds to data of 5 Kbytes in size. The generated data, i.e., the cells forming the same are stored in an in-transmitting terminal buffer present in the transmitting terminal model. A cell newly stored in the in-transmitting terminal buffer is stored on the tail end of the cells already stored in the in-transmitting terminal buffer. The cells stored in the in-transmitting terminal buffer are transmitted sequentially from the head cell to a communication path connecting the transmitting terminal with a switch. The transmission rate at which the cells are sent from the transmitting terminal to the communication path is according to the conventions of the ABR service. The buffer capacity of the in-transmitting terminal buffer is infinite and no cell loss occurs in the transmitting terminal. The transmitting terminal sends in accordance with the conventions of the ABR service a cell for network management called an RM cell.

For the following discussion, the elapsed time from a time when a certain cell is generated in the transmitting terminal to a time when the cell arrives at a receiving terminal is defined as a cell transmission delay.

The switch model shown in FIG. 19 is now described. Cells arriving at the switch are stored in an in-switch buffer. When stored in the in-switch buffer, the cells are stored in accordance with the arrival order from the head of the buffer. The in-switch buffer has a size of 250 cells, and if a cell arrives at the switch when 250 cells are already stored in the in-switch buffer, the cell is discarded. Hereinafter this is called "in-switch cell loss", and the ratio of the number of cells discarded to the number of cells arriving at the switch is defined as already described as "in-switch cell loss ratio". When stored in the in-switch buffer, the cells are sent sequentially from the head cell at a fixed rate of 10 Mbps to the communication path. When the buffer is empty, no sending of cells is performed. When the number of cells stored in the in-switch buffer is greater than the congestion detecting threshold Th_cg, congestion notification information is added to an EFCI bit of a data cell sent from the switch.

If a cell is sent from one communication element connected to the communication path to the communication path, the cell arrives at the other communication element connected to the communication path after a propagation delay of a fixed length elapses. The communication element stands for any of the transmitting terminals, the receiving terminals and the switches shown in FIG. 16. The propagation delay is proportionate to the transmission distance, and when the transmission distance is 100 km, the propagation delay is about 0.5 msec.

In the network model shown in FIG. 16, the receiving terminals transmit in accordance with the conventions of the ABR service arriving RM cells to the transmitting terminals.

Exemplary models of the ATM communication network performing the ABR service have been described. The network shown in FIG. 17 is a typical example of the ATM communication network using the ABR service, and when making a simulation experiment as to a network model prepared by modeling the ATM communication network, basic characteristics in the ABR service can be evaluated. Each of the models shown in FIG. 16, FIG. 18 and FIG. 19 is a model generally employed when modeling the ATM communication network, and effective for simulating motion of cells in the network.

While the aforementioned model presupposes such a situation where a connection using the ABR service monopolistically uses the network, also as to such a network that a connection using the ABR service and a connection using another service share the network, motion of cells of the connection using the ABR service can be simulated with a similar model.

FIG. 9, FIG. 10, FIG. 11, FIG. 12, FIG. 13, FIG. 14 and FIG. 15 show results of relation between the RIF, the RDF, the PCR and the congestion detecting threshold Th_cg and the in-switch cell loss ratio CLRsw, the delay cell loss ratio CLRdl and the total cell loss ratio TCLR obtained by employing the aforementioned network model, switch model and transmitting terminal model and making a computer simulation. As already described, the delay cell loss ratio CLRdl is defined as the ratio of such cells that the cell transmission delay is greater than 350 msec. among the cells arriving at the receiving terminal. In other words, the delay cell loss ratio CLRdl is defined in the following expression:

$$\text{CLRdl} = \{\text{the number of such cells that the cell transmission delay exceeds 350 msec.}\} \div \{\text{the number of cells arriving at the receiving terminal}\} \qquad (5)$$

The total cell loss ratio TCLR is defined as the total value of the in-switch cell loss ratio CLRsw and the delay cell loss ratio CLRdl.

When the delay cell loss ratio CLRdl is high, data retransmission is often required due to time-out in an upper layer and the throughput in the upper layer is decreased, and hence the delay cell loss ratio CLRdl is desirably low. It has been assumed here that such cells that the cell transmission delay is greater than 350 msec. are nullified due to time-out or the like in the upper layer such as TCP/IP. When the in-switch cell loss ratio CLRsw is high, the upper layer often requires retransmission and the throughput in the upper layer is decreased, and hence the in-switch cell loss ratio CLRsw is also desirably low. From the above, the throughput in the upper layer is decreased when the total cell loss ratio TCLR is high, and hence the total cell loss ratio TCLR is desirably low.

FIG. 9 is a diagram showing the relation between the RIF and the RDF and the in-switch cell loss ratio CLRsw. It is understood from FIG. 9 that the in-switch cell loss ratio CLRsw is increased to not less than five times when the value of the RDF changes from "1" to "1/4", whatever value the RIF is set to.

FIG. 10 is a diagram showing the relation between the RIF and the RDF and the delay cell loss ratio CLRdl. It is understood from FIG. 10 that the delay cell loss ratio CLRdl is large when the value of the RDF is large, and the delay cell loss ratio CLRdl is increased to about two to three times when the RDF changes from "1/4" to "1".

FIG. 11 is a diagram showing the relation between the RIF and the RDF and the total cell loss ratio TCLR. It is understood from FIG. 11 that the total cell loss ratio TCLR is minimized when RDF = 1. It is also understood that, in the flow control method of the prior art, the RIF and the RDF are both set to values of not more than "1/32" and hence the total cell loss ratio TCLR becomes not less than about 10 times as compared with the case where the RDF is "1" and the RIF is at a value not less than "1/4" and not more than "1". It should be noted that in the simulations shown in FIG. 9, FIG. 10, and FIG. 11 the PCR = 3.5 Mbps and the congestion detecting threshold Th_cg = 75.

FIG. 12 is a diagram showing the relation between the RIF and the PCR and the in-switch cell loss ratio CLRsw. It is understood from FIG. 12 that the in-switch cell loss ratio CLRsw is increased when increasing the RIF and the PCR. Particularly when increasing the PCR, the in-switch cell loss ratio CLRsw gets remarkably high. In the range where cell loss is observed, the in-switch cell loss ratio CLRsw increases to about five times when the RIF is increased from "1/4" to "1" while the in-switch cell loss ratio CLRsw increases to about 10 times when the PCR changes from 2 Mbps to 4 Mbps.

FIG. 13 is a diagram showing the relation between the RIF and the PCR and the delay cell loss ratio CLRdl. It is understood from FIG. 13 that the delay cell loss ratio CLRdl becomes high when reducing the RIF and the PCR, and the delay cell loss ratio CLRdl remarkably increases particularly when reducing the RIF. As compared with the case where the RIF is "1", the delay cell loss ratio CLRdl gets high to not less than 10 times when the RIF is not more than "1/64" while the delay cell loss ratio CLRdl gets high to not less than twice when the RIF is "1/16".

FIG. 14 is a diagram showing the relation between the RIF and the PCR and the total cell loss ratio TCLR. It is understood from FIG. 14 that the value of the total cell loss ratio TCLR varies with the values of the RIF and the PCR and the total cell loss ratio TCLR is minimized when RIF = 1/4 and PCR = 3.5 Mbps. It should be noted that in the simulations shown in FIG. 12, FIG. 13, and FIG. 14 the RDF = 1 and the congestion detecting threshold Th_cg = 75. While similar simulations have been made in the range of transmission distances of 10 km to 1000 km, it has been proved that the total cell loss ratio TCLR is minimized in the case of the following values respectively:

When transmission distance = 10 km:

PCR = 3.5 Mbps, RIF = 1/4 and RDF = 1

When transmission distance = 100 km:

PCR = 3.5 Mbps, RIF = 1/4 and RDF = 1

When transmission distance = 1000 km:

PCR = 2.5 Mbps, RIF = 1/4 and RDF = 1

FIG. 15 is a diagram showing the relation between the congestion detecting threshold Th_cg and the in-switch cell loss ratio CLRsw, the delay cell loss ratio CLRdl and the total cell loss ratio TCLR. It is understood from FIG. 15 that the in-switch cell loss ratio CLRsw becomes high substantially at a constant ratio along with increase of the congestion detecting threshold Th_cg. It is also understood that the delay cell loss ratio CLRdl reaches an extremely small value in the range where the congestion detecting threshold Th_cg is not less than "75". It is further understood that the total cell loss ratio TCLR is minimized when the congestion detecting threshold Th_cg is at a value from "25" to "75". It should be noted that in the simulation shown in FIG. 15 the RIF = 1/4 and the RDF = 1.

As a result of making simulations in the ranges of 25 ≦ Th_cg ≦ 225, 2 Mbps ≦ PCR ≦ 4 Mbps, 1/64 ≦ RIF ≦ 1, 1/64 ≦ RDF ≦ 1 and transmission distance = 100 km, it has been proved that the total cell loss ratio TCLR is minimized when congestion detecting threshold Th_cg = 75, RIF = 1/4, RDF = 1 and PCR = 3.5 Mbps.

Further, as a result of making simulation with varying the transmission bandwidth of the communication path, it has been proved that, if the transmission bandwidth is not more than 50 Mbps, the total cell loss ratio TCLR is regularly minimized when the RIF is at a value of not less than "1/4" and not more than "1", RDF = 1 and the congestion detecting threshold Th_cg is at a value of not less than "1/10" and not more than "1/2" of the buffer size.

While the above description has been made on simulation results on a specific network model, this model is a typical one as a model of the ATM communication network using the ABR service, and the basic characteristics of the ABR service considered with reference to this model hold when the total band used by the ABR service is not more than 50 Mbps, regardless of the network model.

The above description has been made on the results of the computer simulation employing a model carrying out a data generation operation and an operation of an ATM layer in a transmitting terminal and carrying out an operation of an ATM layer and a data receiving operation in a receiving terminal. From the aforementioned simulation results, it has been possible to obtain the relation between the total cell loss ratio TCLR and the parameter set values. In order to distinguish it from a computer simulation described below, the above computer simulation is referred to "first computer simulation".

〈1.4.2 Second Computer Simulation〉

Description is now made on results of a second computer simulation made with such a model that a transmitting terminal performs a data generation operation, an operation of a TCP layer and an operation of an ATM layer and a receiving terminal performs an operation of an ATM layer, an operation of a TCP layer and a data receiving operation. From the simulation results, the relation between TCP throughput and values of parameters can be obtained. Here, the TCP throughput is defined an average of a rate at which data is transmitted in the receiving terminal from the TCP layer to an upper layer.

First, a network model, a transmitting terminal model and a switch model employed in the second computer simulation are defined.

The second computer simulation employs a network model shown in FIG. 20. While in the network model of FIG. 17 employed in the first computer simulation data transmission is unidirectionally performed in the communication path, data is bidirectionally transmitted in a communication path in the network model shown in FIG. 20, and the physical line speed in each direction is 10 Mbps. In each connection the transmission distance between a transmitting terminal and a receiving terminal is 100 km.

The second computer simulation employs a transmitting terminal model shown in FIG. 21. Operations of respective parts in a transmitting terminal 1100 based on this transmitting terminal model are now described.

The transmitting terminal 1100 based on the transmitting terminal model shown in FIG. 21 comprises an application part 1110, a TCP part 1120 and, an ATM part 1130.

The application part 1110 consists of a traffic source, and data is generated in the traffic source. The size of single data follows similarly to the first computer simulation geometric distribution of 5 Kbytes. When single data is generated, the data is passed to the TCP part 1120, and no data is generated until the data is entirely passed from the TCP part 1120 to the TCP part 1120 to the ATM part 1130. When the data is entirely passed from the TCP part 1120, an idle period following exponential distribution starts, and thereafter when the idle period ends, next data is generated. A first idle period starts when starting the simulation, and thereafter generation of data and the idle period are alternately repeated. The aforementioned operation is independently performed in each transmitting terminal. It is assumed that the average value of the idle period is 40 msec.

The TCP part 1120 generates in a method following the Transmission Control Protocol (TCP) defined in RFC 793 and RFC 1122 one or a plurality of segments from a data arriving from the application layer, and passes these segments to the ATM part 1130. When receiving an Ack segment from the ATM part 1130, the TCP part 1120 performs a prescribed operation following the aforementioned transmission control protocol. Employed herein is a TCP model in "OPNET", which is a network simulation tool by MIL3, Inc., U.S.A.

The ATM part 1130 operates in accordance with the ABR service described in ATM Forum Traffic Management Specification Version 4.1. The outline of this operation is now described. The ATM part 1130 generates from a segment arriving from the TCP part 1120 one or a plurality of data cells, and sends these data cells to a communication path. At this time, an RM cell (Resource Management Cell) is inserted between the data cells and then sent. This RM cell is employed for congestion control of the ABR service. When receiving the RM cell from the communication path, the ATM part 1130 changes the value of ACR (Allowed Cell Rate) in accordance with the contents thereof. It is defined in the ABR service that the transmission rate at which the ATM part 1130 transmits cells to the communication path is not more than this ACR. Further, when receiving data cells from the communication path, the ATM part 1130 assembles the data cells to generate a segment, and passes the segment to the TCP part. As will be described later, this segment is a segment called an ACK segment in the TCP (Transmission Control Protocol), which has been sent from the receiving terminal.

A buffer for storing segments in the TCP part 1120 and a buffer for storing cells in the ATM part 1130 have infinite capacities, and none of data, segments and cells is discarded in the receiving terminal.

The second computer simulation employs a switch model shown in FIG. 22. Operations of respective parts in an ATM switch based on this switch model are now described.

An ATM switch 1200 based on the switch model shown in FIG. 22 comprises a plurality of in-switch buffers SWA1 to SWAn and SWB1 to SWBn, transmitting ports SPA1 to SPAn and SPB1 to SPBn and receiving ports RPA1 to RPAn and RPB1 to RPBn. The transmitting ports SPA1 to SPAn and SPB1 to SPBn and the receiving ports RPA1 to RPAn and RPB1 to RPBn are connected to communication paths, and the transmitting ports transmit cells while the receiving ports receive cells respectively. To a single communication path, a single transmitting port and a single receiving port are connected respectively, Cells arriving at the receiving ports are sent according to the destinations thereof to the respective in-switch buffers SWA1 to SWAn and SWB1 to SWBn, and stored in the in-switch buffers. The destinations of the cells are decided according to a connection (virtual channel) connecting the transmitting terminal and the receiving terminal. It is assumed that 10 connections are established in the overall network, each connection connects a single transmitting terminal and a single receiving terminal, and the combination thereof is fixed. When stored in the in-switch buffer, the cells are stored in accordance with the arrival order from the head of the in-switch buffer. The in-switch buffer has a size of 250 cells, and if a new cell arrives when 250 cells are already stored in the in-switch buffer, the cell is discarded. Hereinafter this is called "in-switch cell loss", and the ratio of discarded cells among cells arriving at the switch is defined as already described as "in-switch cell loss ratio". When stored in the in-switch buffer, the cells are sent sequentially from the head cell at a fixed rate of 10 Mbps through the transmitting port to the communication path. When the buffer is empty, no sending of cells is performed. When the number of cells stored in the in-switch buffer is greater than the congestion detecting threshold Th_cg, congestion notification information is added to an EFCI bit of a data cell transmitted from the switch.

It is assumed that the operation of the communication path is similar to that in the first computer simulation. However, it is assumed that, in the second computer simulation, cells are bidirectionally communicated.

The second computer simulation employs a receiving terminal model shown in FIG. 23. A receiving terminal 1300 based on the receiving terminal model shown in FIG. 23 comprises an application part 1310, a TCP part 1320, and an ATM part 1330. Operations of the respective parts in the receiving terminal 1300 based on this receiving terminal model are now described.

The ATM part 1330 in the receiving terminal 1300 operates similarly to the ATM part 1110 in the transmitting terminal 1100 in accordance with the ABR service. The outline of this operation is now described. When receiving a data cell, the receiving terminal 1300 stores the contents of the EFCI bit of the data cell as congestion notification information. The receiving terminal 1300 assembles received data cells to generate a segment, and passes the segment to the TCP part 1120. When receiving an RM cell from the communication path, the ATM part 1330 in this receiving terminal 1300 returns the RM cell to the transmitting terminal in accordance with the ABR service conventions. At this time, the ATM part 1330 copies the contents of the stored congestion information to a CI bit of the RM cell. When receiving an ACK segment from the TCP part 1320, the ARTM part 1330 divides the same to generate cells, and immediately sends these cells to the communication path.

The TCP part 1320 in the receiving terminal 1300 operates similarly to the TCP part 1120 in the transmitting terminal 1100 in accordance with the transmission control protocol. The outline of this operation is now described. The TCP part 1320 assembles the segments passed from the ATM part 1330 to generate data, and passes the data to the application part 1310. When receiving segments from the ATM 1330, the TCP part 1320 immediately passes the ACK segment to the ATM part 1330. The ACK segment is used for informing the transmitting terminal that the receiving terminal has received the segment or the like, and the numbers of the received segments and the free capacity of the TCP receiving buffer are described therein.

When receiving data from the TCP part 1320, the application part 1310 in the receiving terminal 1300 calculates the total receiving quantity of the data. Further, the application part 1310 divides the total data receiving quantity by the simulation time in termination of the simulation thereby obtaining the data receiving rate. In addition, the application part 1310 calculates the average value of the data receiving rate of each receiving terminal thereby obtaining a data receiving rate average value. In the following description of the results of the second computer simulation, the data receiving rate average value is simply called "TCP throughput", to show the relation between the TCP throughput and the ABR parameters.

In the aforementioned model, parameters of the TCP (Transmission Control Protocol) are set as follows:

i) The size of the TCP receiving buffer is 1 Mbyte.
ii) The threshold of the TCP receiving buffer is 0.01 Mbyte.
iii) The minimum value of the time-out period is 0.1 sec.
iv) The ACK delay is 0 sec.

While the segments arriving at the TCP receiving buffer are assembled into data as described above and transferred to the application part 1310, when the total size of segments in the TCP receiving buffer is not more than the threshold of the TCP receiving buffer, data transfer to the application part 1310 is suppressed. ACK, which is returned when a TCP segment is received, is returned simultaneously with segment receiving if the ACK delay is "0". As to set values of remaining parameters, defaults in the aforementioned OPNET are used.

In the aforementioned model, parameters of the ATM part 1130 in the transmitting terminal 1100 are set as follows:

i) Nrm is 32.
ii) ADTF (ACR Decrease Time Factor) is 0.5 sec.
iii) MCR (Minimum Cell Rate) is 0.5 Mbps.
iv) RIF (Rate Increase Factor) and RDF (Rate Decrease Factor) are values changed in the range of not less than 1/64 and not more than 1.
v) PCR is a value changed in the range of not less than 2 Mbps and not more than 10 Mbps.
vi) The congestion detecting threshold Th_cg is a value changed in the range of not less than 25 and not more than 225.

The models in the aforementioned first and second computer simulations have entirely been prepared by the aforementioned OPNET.

The results of the second computer simulation are now described. Each numerical value as this simulation result has been obtained by making simulations for 10 random number sequences while setting a simulation time at 5 sec. respectively and calculating the average value of these simulation results.

Diagrams in FIG. 24 to FIG. 32 show relation between the RIF and the RDF of the transmitting terminal model and the TCP throughput when changing the PCR of the transmitting terminal model and the congestion detecting threshold Th_cg of the switch model. Here the TCP throughput is, as described above, the average value of the data receiving rate in the application layer of the receiving terminal model.

From diagrams in FIG. 24 to FIG. 32 the followings are understood:

(1) When 1/4 ≦ RIF ≦ 1, RDF = 1, PCR = 5 Mbps and Th_cg = 75, the TCP throughput is maximized.

(2) When 1/4 ≦ RIF ≦ 1, RDF = 1, 3 Mbps ≦ PCR ≦ 5 Mbps and 25 ≦ Th_cg ≦ 125, the TCP throughput exhibits a high value of not less than 0.57 Mbps.

(3) Such values of the RIF and the RDF that the TCP throughput reaches a high value not less than about 0.55 Mbps are included in the ranges of 1/16 ≦ RIF ≦ 1 and 1/16 ≦ RDF ≦ 1 even if the congestion detecting threshold Th_cg and the PCR fluctuate. If the RIF and the RDF are set to values out of these ranges, high TCP throughput cannot be obtained.

(4) When in the flow control method of the prior art setting the RIF and the RDF both to values of not more than "1/32", it is predicted that the TCP throughput reaches a low value of not more than 0.50 Mbps. Namely, when setting the RIF and the RDF both to values of not more than "1/32" similarly to the prior art, it is predicted that, the TCP throughput reaches a small value of less than 90 % as compared with the case where 1/4 ≦ RIF ≦ 1, RDF = 1, 3 Mbps ≦ PCR ≦ 5 Mbps and 25 ≦ Th_cg ≦ 125.

Summarizing the above, when 1/4 ≦ RIF ≦ 1 and RDF =1, TPCR being the total value of the PCR is 20 % to 60 % of the transmission rate of the communication path and the congestion detecting threshold Th_cg is in the range between 1/10 and 1/2 of the in-switch buffer size, the value of the TCP throughput becomes extremely high. As to the PCR, the aforementioned range is set on the assumption that a similar tendency is observed also in a range around the value of the PCR subjected to the simulation. Such values of the RIF and the RDF that the TCP throughput reaches a high value whatever values the PCR and the congestion detecting threshold Th_cg are set to the ranges of 1/16 ≦ RIF ≦ 1 and 1/16 ≦ RDF ≦ 1.

The results of the aforementioned computer simulation show similar tendencies also when changing the transmission distance into 10 km and 1000 km, changing the in-switch buffer size up to 1000 cells, varying the MCR from 0.2 Mbps up to 0.7 Mbps and the like.

〈1.5 Problems in Prior Art〉

It is understood from the aforementioned simulation results that, when applying the flow control method of the prior art to such a communication element that the transmission rate of a communication path is not more than 50 Mbps, the RIF and the RDF are both set to values of not more than "1/32" and hence, as compared with the case where the RDF is "1" and the RIF is at a value of not less than "1/4" and not more than "1", for example, the total cell loss ratio TCLR reaches not less than about 10 times. Due to cell loss or a time-out operation in the upper layer, therefore, necessity for retransmitting data is caused in the upper layer, and there is such a problem that, as compared with the case where the RDF is "1" and the RIF is at a value of not less than "1/4" and not more than "1", for example, the throughput in the upper layer is lowered. Particularly when transmitting data by the TCP, according to the flow control method of the prior art in which the RIF and the RDF are both set to values of not more than "1/32", the TCP throughput reaches a small value of less than 90 % as compared with the case where 1/4 ≦ RIF ≦ 1, RDF = 1, 3 Mbps ≦ PCR ≦ 5 Mbps and 25 ≦ Th_cg ≦ 125.

There is no specification related to the setting values of the PCR and the congestion detecting threshold Th_cg, and hence there is such a problem that the throughput in the upper layer may be very small in the case of employing some setting values.

At the time of this patent application, no data related to the relation between the values of the PCR, the RIF, the RDF and the congestion detecting threshold Th_cg and the total cell loss ratio TCLR or the relation between the values of the PCR, the RIF, the RDF and the congestion detecting threshold Th_cg and the throughput in the upper layer in the case of employing the flow control method of the prior art in such a communication element that the transmission rate of the communication path is not more than 50 Mbps has been disclosed, and no convention related to the setting values of the PCR, the RIF, the RDF and the congestion detecting threshold Th_cg exists either. As evaluation results related to the characteristics of the ABR service, data related to the relation between some parameters and the throughput in the ATM layer and the in-switch cell loss ratio CLRsw have been disclosed in a specific network model, however, we can not estimate the relation between the value of the parameters and the magnitude of the cell transmission delay or the throughput of the upper layer from these data. From the aforementioned discussion, problems in the prior art are summarized as next below.

First, there is such a problem that, when applying the flow control method of the prior art in such a communication element that the transmission rate of the communication path is not more than 50 Mbps, the RIF and the RDF are set to values of not more than "1/32" and hence the total cell loss ratio TCLR gets high. Further, there is such a problem that, when an upper layer such as TCP/IP sends data employing the ABR service according to the flow control method of the prior art, in such a communication element that the transmission rate of the communication path is not more than 50 Mbps, data retransmission frequently takes place and hence the communication efficiency in the upper layer is lowered.

In addition, there is such a problem that, when applying the flow control method of the prior art, the RIF and the RDF must be set in the ranges of RIF ≦ 1/32 and RDF ≦ 1/32 and setting value of the PCR and the congestion detecting threshold Th_cg are not specified, and hence the data transmission time or the in-buffer cell loss ratio may be very large in the case of employing some setting values.

Further, there is such a problem that, assuming that the values of these parameters are so set by modeling the communication network and making a computer simulation that the data transmission time is shortened and the in-buffer cell loss ratio becomes low, a method of setting values of the parameters is not in the least specified and hence the number of combinations of setting values to be evaluated by the computer simulation is so enormous that it is extremely difficult to find out such a combination that the data transmission time is shortened and the in-buffer cell loss ratio becomes low.

〈1.6 Conclusion of Basic Study〉

In order to solve the aforementioned problems and improve the communication efficiency in the upper layer, it is necessary for the aforementioned reasons, when the transmission bandwidth is not more than 50 Mbps, to set the RIF at a value decided in the range of not less than "1/16" and not more than "1" and to set the RDF at a value decided in the range of not less than "1/16" and not more than "1". Particularly when setting the RIF at a value of not less than "1/4" and not more than "1", setting the RDF to "1", setting the congestion detecting threshold Th-cg at a value less than "1/10" and not more than "1/2" of the buffer capacity and setting the PCR at such a value that the data transmission time and the cell loss ratio both are reduced, the data transmission time and the cell loss ratio in the cell buffer both are extremely reduced. Further, when sending data in the TCP, the TCP throughput is remarkably increased. In order to set the PCR at such a value that the data transmission time and the cell loss ratio both are reduced, it is effective to set the PCR at such a value that the already defined total cell loss ratio TCLR is minimized. At this time, the throughput in the upper layer is increased. By making a computer simulation in practice, it is understood that, when the TPCR being the total value of the PCR of all connections is at a value of not less than 20 % and not more than 60 % of the transmission bandwidth, the data transmission time and the cell loss ratio in the cell buffer both are extremely reduced and the TCP throughput is extremely increased. Further, when setting the parameters in the aforementioned method, the number of combinations of the parameters to be evaluated by the computer simulation is also small and hence it is easy to find out such a combination of the parameters that the data transmission time is shortened and the in-buffer cell loss ratio becomes low.

While in the aforementioned example the case where the transmission bandwidth of the communication path is constant has been considered, similar discussion holds also when in the same communication path the ABR service is multiplexed along with another service and the transmission bandwidth of the communication path used by the ABR service fluctuates around the range of not more than 50 Mbps. In the aforementioned discussion, the transmission bandwidth stands for the transmission rate of the communication path.

〈2. Embodiment〉

An embodiment of the present invention is now described with reference to the drawings in detail.

〈2.1 Communication Element〉

FIG. 1 is a block diagram showing an exemplary structure of an ATM communication network executing a flow control method according to the embodiment of the present invention. This communication network comprises transmitting terminals 120, 130 and 140 and communication elements 100 and 120. The communication element 100 corresponds to an ATM switch, for example, and, similarly to the communication element 200 of the prior art shown in FIG. 2, includes a congestion notification part 102, a parameter set part 103, a cell number observation part 104 and a congestion detection part 105. In addition to these, the communication element 100 in this embodiment further includes an ABR transmission bandwidth calculation part 106, a rate control delay calculation part 107, a transmission bandwidth determination part 108, a parameter computation part 109, a network structure input part 111 and a PCR computation part 112. The communication elements 100 and 110 are connected with each other through a communication path L100. Further, the transmitting terminals 120, 130 and 140 are connected to the communication element 200 through communication paths L120, L130 and L140 respectively. In this example, the transmitting terminals 120, 130 and 140 transfer information through the communication element 100 to a receiving terminal (not shown) present in the direction of the communication element 110 in the form of cells. The respective cells are multiplexed in the cell buffer 101 of the communication element 100 and output toward the communication element 110. While only one structure for multiplexing is shown in FIG. 1, similar structures are necessary for respective parts where cells are multiplexed and congestion occurs.

Operations of the respective parts of the communication element 100 are now described. Also in the communication element 100, the cell buffer 101, the congestion notification part 102, the parameter set part 103, the cell number observation part 104 and the congestion detection part 105 respectively perform operations substantially identical to those of the cell buffer 201, the congestion notification part 202, the parameter set part 203, the cell number observation part 204 and the congestion detection part 205 in the communication element 200 of the ATM communication network in the structure shown in FIG. 2 executing the flow control method of the prior art.

However, in the operations of the aforementioned respective parts 101, 102, 103, 104 and 105 in the communication element 100 according to this embodiment, there are points different from the operations of the respective parts of the communication element 200 in the prior art, as described below.

The operations of the respective parts of the communication element 100 are now described in detail.

When establishing a connection using the ABR service, the parameter set part 103 inputs to the ABR transmission bandwidth calculation part 106, the rate control delay calculation part 107 and the network structure input part 111 an ABR connection establish signal.

When receiving the ABR connection establish signal, the ABR transmission bandwidth calculation part 106 calculates an ABR allocation bandwidth which is a band allocated to the ABR service in the transmission bandwidth of the communication path and inputs the obtained value to the transmission bandwidth determination part 108. This ABR allocation bandwidth can be obtained by, for example, calculating an alien service transmission bandwidth which is the total value of transmission bandwidths currently allocated to service other than the ABR and subtracting from the transmission bandwidth of the communication path this alien service transmission bandwidth. As another method of calculating the ABR allocation bandwidth, it is also possible to employ a method of observing the communication path for a prescribed time, obtaining an alien service transmission bandwidth average value which is the average value of the transmission bandwidths used in the service other than the ABR and subtracting from the transmission bandwidth of the communication path this alien service transmission bandwidth average value.

When receiving the ABR connection establish signal, the rate control delay calculation part 107 calculates the rate control delay of each communication terminal starting using the ABR service connection in accordance with the method defined in ATM Forum Document af-tm-0056.000 "Traffic Management Specification Version 4.0", and inputs the calculated value to the transmission bandwidth determination part 108. Here, the rate control delay is defined as below.

Generally when in the ABR service controlling the input rate of a transmitting terminal, there exists a delay from when a communication element in a communication network starts instructing the transmitting terminal to increase or decrease the rate up to when the input rate of the transmitting terminal starts increasing or decreasing in accordance with the instruction. This delay is defined here as the rate control delay. In the ABR service, the communication element transmits to the transmitting terminal a cell called an RM cell, thereby instructing the transmitting terminal to increase or decrease the rate. Due to a propagation delay in the communication path in transmitting of this RM cell, a time during which the RM cell is made to wait in a buffer in the communication element, a processing time for sending the RM cell in the communication element, and so on, the rate control delay occurs.

The network structure input part 111 has an input unit and a display used by an operator of the communication element, and when receiving the ABR connection establish signal, displays a message prompting the communication element operator to input values of network attributes which specifies the network structure on the display. When the communication element operator follows this message and inputs the values of the network attributes, the network structure input part 111 outputs these values to the transmission bandwidth determination part 108. Here, the network attributes are, e.g., the number of connections using the ABR service, an average input rate at which the transmitting terminal inputs cells into the communication network or a predicted value thereof, the buffer capacity of the cell buffer 101 and the like.

When receiving from the ABR transmission bandwidth calculation part 106 the value of the ABR allocation bandwidth, receiving from the rate control delay calculation part 107 the value of the rate control delay and receiving from the network structure input part 111 one or a plurality of values of network attributes, the transmission bandwidth determination part 108 determines whether or not the received value of the ABR allocation bandwidth is greater than 50 Mbps. When as a result of the determination the value of the ABR allocation bandwidth is greater than 50 Mbps, the transmission bandwidth determination part 108 inputs to the parameter computation part 109 the value of the ABR allocation bandwidth, the value of the rate control delay and the values of the network attributes.

On the other hand, when as a result of the determination the value of the ABR allocation bandwidth is equal to 50 Mbps or less than 50 Mbps, the transmission bandwidth determination part 108 inputs to the PCR computation part 112 the value of the ABR allocation bandwidth, the value of the rate control delay and the values of the network attributes.

When receiving from the transmission bandwidth determination part 108 the value of the ABR allocation bandwidth, the value of the rate control delay and one or a plurality of values of network attributes, the parameter computation part 109 computes values of the ABR parameters such as the RIF, the RDF and the PCR and the congestion detecting threshold Th_cg (hereinafter these are simply referred to as "parameters") in a procedure shown in FIG. 4, and inputs the computed values of the parameters to the parameter set part 103. The procedure shown in FIG. 4 is now described.

As shown in FIG. 5, the parameter computation part 109 is formed by a simulation part 1001, a simulation iteration part 1002, a total cell loss ratio calculation part 1003, and a minimum cell loss ratio calculation part 1004.

The simulation part 1001 has a simulation program which can create a network model in correspondence to the inputted values of the network attributes, value of the rate control delay and value of the ABR allocation bandwidth and simulate motion of cells in an actual network with the network model, a storage unit storing the program and a processor for executing the program. This simulation program can be created employing "OPNET" which is a simulation tool obtainable from MIL3, Inc., Washington D.C., U.S.A., for example.

When the parameter computation part 109 receives the value of the ABR allocation bandwidth, the value of the rate control delay and the values of the network attributes, all these values are input to the simulation part 1001. When receiving the values of the ABR allocation bandwidth, the rate control delay and the network attributes, the simulation part 1001 inputs a computation start signal to the simulation iteration part 1002.

The simulation iteration part 1002 stores a plurality of combinations of the values of the parameters such as the RIF, the RDF, the PCR and the congestion detecting threshold Th_cg. Further, the simulation iteration part 1002 stores the number (hereinafter referred to as "parameter number") of the combinations and a value i of an iteration counter indicating the iteration count of a simulation described later. The value i of the iteration counter is set to "0" when the parameter computation part 109 starts the procedure shown in FIG. 4 (step S10).

It is assumed here that N represents the value of the parameter number stored in the simulation iteration part 1002, and the combinations of the parameter values stored in the simulation iteration part 1002 are expressed in C(1), C(2), C(3), ..., C(N). Combinations of N and C(1), ..., C(N) are previously set. When receiving the computation start signal, the simulation iteration part 1002 determines whether or not the value i of the iteration counter is equal to N, and if i is not equal to N, it advances to a step S14 to input a combination of parameter values expressed in C(i + 1) (hereinafter simply referred to as "value of C(i + 1)") to the simulation part 1001. When starting computation, i = 0 and i is less than N, and hence the process advances to the step S14.

When receiving the value of C(i + 1), the simulation part 1001 employs the simulation program and creates a network model corresponding to the value of C(i +1) and the precedingly received values of the ABR allocation bandwidth, the rate control delay and the network attributes (step S14). Then, the simulation part 1001 employs the simulation program and simulates motion of the cells in the actual network for a finite time on a computer (step S16). Hereinafter this simulation made by the simulation part 1001 is simply referred to as "simulation".

The simulation part 1001 computes in the simulation the in-SW cell loss ratio CLRsw and the delay cell loss ratio CLRdl defined next below. The in-SW cell loss ratio CLRsw is defined as the ratio of number of cells discarded due to buffer overflow to the number of cells arriving at the buffer of the communication element. The delay cell loss ratio CLRdl is defined as the ratio of the number of such cells that:

$$(\text{cell transmission delay}) > (\text{delay assurance value})$$

to the number of the cells arriving at the receiving terminal. However, it is assumed that the cell transmission delay is defined as the elapsed time from a time when a cell is generated in the transmitting terminal to a time when the cell arrives at the receiving terminal, and the delay assurance value is a value previously set. This delay assurance value is 350 msec., for example. When terminating the simulation, the simulation part 1001 inputs finally computed values of the in-SW cell loss ratio CLRsw, the delay cell loss ratio CLRdl and C(i + 1) to the total cell loss ratio calculation part 1003.

When receiving the values of the in-SW cell loss ratio CLRsw, the delay cell loss ratio CLRdl and C(i + 1), the total cell loss ratio calculation part 1003 calculates the total cell loss ratio TCLR defined as the total value of the in-SW cell loss ratio CLRsw and the delay cell loss ratio CLRdl, and inputs the values of the total cell loss ratio TCLR and C(i + 1) to the minimum cell loss ratio calculation part 1004 (step S18).

The minimum cell loss ratio calculation part 1004 stores the combination (hereinafter referred to as "minimum combination") of the minimum cell loss ratio and the parameter value corresponding thereto. When receiving the total cell loss ratio TCLR and C(i + 1), the minimum cell loss ratio calculation part 1004 compares the received total cell loss ratio TCLR with the stored minimum cell loss ratio (step S20). When as a result of the comparison the received total cell loss ratio TCLR is less than the stored minimum cell loss ratio, the minimum cell loss ratio calculation part 1004 newly stores the received total cell loss ratio TCLR as the minimum cell loss ratio, stores the received value of C(i + 1) as the minimum combination, and inputs a simulation end signal to the simulation iteration part 1002 (step S22). However, it is assumed that the minimum cell loss ratio stored in the minimum cell loss ratio calculation part 1004 is set to a sufficiently large value when the parameter computation part starts the procedure shown in FIG. 4. When as a result of comparison at the step S20 the received total cell loss ratio TCLR is not less than the stored minimum cell loss ratio, the minimum cell loss ratio calculation part 1004 updates neither the stored minimum cell loss ratio nor the minimum combination but inputs the simulation end signal to the simulation iteration part 1002.

When receiving the simulation end signal, the simulation iteration part 1002 updates the value i of the iteration counter to a value increased by 1 (step S24). After updating the value i of the iteration counter, the simulation iteration part 1002 again determines whether or not the value i of the iteration counter is equal to N (step S12). Thereafter until the value i of the iteration counter becomes equal to N, i.e., while $i < N$, the steps S12 to S24 are repetitively executed. When during this the value of the iteration counter becomes equal to N, the simulation iteration part 1002 inputs a parameter computation end signal to the minimum cell loss ratio calculation part 1004.

When receiving the parameter computation end signal, the minimum cell loss ratio calculation part 1004 inputs the stored values of the minimum combination as the values of the parameters finally computed in the parameter computation part 109 to the parameter set part 103 (step S26).

The above is the description of the procedure shown in FIG. 4.

When receiving from the transmission bandwidth determination part 108 the value of the ABR allocation bandwidth, the value of the rate control delay and one or a plurality of values of network attributes, the PCR computation part 112 calculates the values of the parameters such as the RIF, the RDF, the PCR and the congestion detecting threshold Th_cg in a procedure similar to that shown in FIG. 4, and inputs the computed values of the parameters to the parameter set part 103. The structure of the PCR computation part 112 is also similar to that of the parameter computation part 109. However, the procedure through which the PCR computation part 112 computes the values of the parameters is different from that shown in FIG. 4 in the following points. In the combination of parameter values stored by the simulation iteration part 1002 in the PCR computation part 112, the value of the RIF is in the range of not less than "1/4" and not more than "1", the value of RDF is "1", and the congestion detecting threshold Th_cg is at a value in the range of not less than "1/10" and not more than "1/2" of the buffer capacity of the cell buffer 101. Therefore, it is predetermined that the values of the RIF, the RDF and the congestion detecting threshold Th_cg computed by the PCR computation part 112 are respectively in the aforementioned ranges, and hence the value of the parameter mainly computed by the PCR computation part 112 is the value of the PCR.

When receiving the values of the parameters from the parameter computation part 109 or the PCR computation part 112, the parameter set part 103 outputs a signaling cell to the communication path and negotiates with the transmitting terminal and the receiving terminal, thereby setting the ABR parameters (RIF, RDF, PCR and the like) of the connection using the ABR service to the values received from the parameter computation part 109 or the PCR computation part 112. Among the received values of the parameters, the parameter set part 103 then inputs the value of the congestion detecting threshold Th_cg to the congestion determination part 105.

When receiving the value of the congestion detecting threshold Th_cg, the congestion determination part 105 updates the stored congestion detecting threshold Th_cg to the received value.

FIG. 6 is a flow chart showing operations when the communication element 100 computes in the transmission bandwidth determination part 108, the PCR computation part 112, and the parameter computation part 109 the values of the parameters. The communication element 100 is, when starting its operation, in a state waiting for the ABR connection establish signal (step S50). Every time receiving the ABR connection establish signal after starting the operation, the transmission bandwidth determination part 108 in the communication element 100 compares the ABR allocation bandwidth with 50 Mbps (step S52). If as a result of the comparison the ABR allocation bandwidth is less than 50 Mbps, the PCR computation part 112 computes the RIF, the RDF and the total value TPCR of PCR, which are the ABR parameters, and the congestion detecting threshold value Th_cg in the following ranges (step S54):

$$1/4 \leqq \mathrm{RIF} \leqq 1 \quad (6)$$

$$\mathrm{RDF} = 1 \quad (7)$$

$$\mathrm{TPCR} = \mathrm{B_ABR} \times C \ (0.2 \leqq C \leqq 0.6) \quad (8)$$

$$\mathrm{Th_cg} = \mathrm{S_buf} \times D \ (0.1 \leqq D \leqq 0.5) \quad (9)$$

where B_ABR represents the ABR allocation bandwidth, S_buf represents the size of the in-switch buffer, and TPCR represents the total value of PCR for all ABR connections. If as a result of the comparison at the step S52 the ABR allocation bandwidth is in excess of 50 Mbps, on the other hand, the parameter computation part 109 computes the aforementioned parameters RIF, RDF, PCR and Th_cg in arbitrary ranges (step S56).

〈2.2 Transmitting terminal〉

FIG. 7 is a block diagram showing an exemplary structure of the transmitting terminal for executing this embodiment. This transmitting terminal 500 corresponds to the transmitting terminal 120, 130 or 140 shown in FIG. 1, and comprises an application part 510, a TCP part 520, an IP part 530, and an ATM part 540.

The application part 510, performing data transfer between the same and the TCP part 520 thereby performing prescribed processing, performs file transfer or the like in accordance with a protocol called FTP (File Transfer Protocol), for example. This file transfer is performed by the application part 510 passing data forming a file to be transferred to the TCP part 520.

The TCP part 520 performs the following operations according to the TCP (Transmission Control Protocol). The TCP part 520 divides the data received from the application part 510 into units called TCP segments and passes the same to the IP part 530. When receiving TCP segments from the IP part 530, the TCP part 520 passes an ACK segment for noticing receipt of the TCP segments to the IP part 530. Further, the TCP part 520 generates data from these TCP segments and passes the same to the application part 510.

The IP part 530 performs operations according to IP (Internet Protocol). When receiving the TCP segments from the TCP part 520, the IP part 530 creates from the data a data unit called an IP packet and passes the same to the ATM part 540. After receiving an IP packet from the ATM part 540, the IP part 530 creates from the IP packet TCP segments and passes the same to the TCP part 520.

The ATM part 540 performs operations described later in accordance with ATM (Asynchronous Transfer Mode) and the protocol of ABR (Available Bit Rate) service.

FIG. 8 is a block diagram showing the structure of the ATM part 540. The ATM part 540 has a cell division part 542, a cell assembling part 544, an RM cell generation part 548, an ACR computation part 552, a cell buffer 546, a cell receiving part 554, and a parameter decision part 556.

When receiving a packet, the cell division part 542 divides the packet into units called cells and inputs the same to the cell buffer 546. The cells generated in the cell division part 542 are called data cells. When receiving a cell from a communication path L, the cell receiving part 554 passes the cell to the sell assembling part 544 if the received cell is a data cell, while passing the cell to the ACR computation part 552 if the received cell is an RM cell. When receiving an RM cell, the ACR computation part 552 computes the ACR (Allowed Cell Rate) in accordance with the conventions of the ABR service. Further, the ACR computation part 552 measures the transmission interval of the RM cell, and updates, if the count value is greater than a prescribed value, the value of the ACR to ICR (Initial Cell Rate). When the value of the ACR changes, the ACR computation part 552 posts the cell buffer 546 and the RM cell generation part 548 the new value. The cell buffer 546 stores received cells in received order, while sending the stored cells in accordance with the conventions of the ABR service to the communication path L. When storing no cell, the cell buffer 546 sends to the communication path L no cell. The RM cell generation part 548 generates in accordance with the ABR service conventions an RM cell at a prescribed timing and sends the same to the communication path L. In the ABR service, it is specified that transmission of data cells and RM cells are regularly performed at a transmission rate of not more than the ACR. An RM cell transmitted from the transmitting terminal 500 is returned by the receiving terminal. The cell assembling part 544 assembles received cells thereby generating an IP packet and passes the IP packet to the IP part 530. The parameter decision part 556 sends/receives in connection establishment a cell called a signaling cell to/from communication elements such as a switch and the receiving terminal, thereby deciding the values of the ABR parameters defined in the ABR service.

The ABR parameters decided by the parameter decision part 556 include the RIF, the RDF, the PCR and the like. In the conventional flow control, the RIF and the RDF are both set to values of not more than "1/32". In this embodiment, on the other hand, the parameter decision part 556 performs operations corresponding to the operations of the communication element 100 shown in FIG. 6. Therefore, when the ABR allocation bandwidth B_ABR is not more than 50 Mbps, the RIF, the RDF and the PCR are decided in the parameter decision part 556 in the following ranges:

$$1/4 \leqq \text{RIF} \leqq 1 \qquad (10)$$

$$\text{RDF} = 1 \qquad (11)$$

$$0.2 \times \text{B_ABR} \leqq \text{TPCR} \leqq 0.6 \times \text{B_ABR} \qquad (12)$$

where TPCR represents the total value of PCR of all ABR connections.

⟨2.3 Effects of Embodiment⟩

According to the aforementioned embodiment, when in the ATM communication network the connection using the ABR service is established, in the communication element 100 the ABR transmission bandwidth calculation part 106 calculates the ABR allocation bandwidth and the transmission bandwidth determination part 108 determines whether or not the calculated ABR allocation bandwidth is not more than 50 Mbps. If the ABR allocation bandwidth is not more than 50 Mbps, the PCR computation part 112 in the communication element 100 and the parameter decision part 556 in the transmitting terminal decide the RIF, the RDF and the PCR, which are the ABR parameters, and the congestion detecting threshold Th_cg in the ranges satisfying the expressions (6) to (9) and the expressions (10) to (12). When the values of the parameters are set in such ranges, as clarified in the already described basic study, if the transmission bandwidth is not more than 50 Mbps the data transmission time and the cell loss ratio in the cell buffer are both extremely reduced and the TCP throughput is extremely increased. Further, the PCR is set to such a value that the total cell loss ratio TCLR is minimized. According to this embodiment, therefore, also for a connection in a narrow bandwidth not more than 50 Mbps using the ABR service category, the data transmission time and the cell loss ratio in the cell buffer are both extremely reduced and the communication efficiency (TCP throughput) is extremely improved.

According to the aforementioned embodiment, not only the ranges of the RIF and the RDF but also the ranges of the PCR and the congestion detecting threshold Th_cg are given by the expressions (8), (9) and (12), whereby such proper values of the parameters that the data transmission time and the cell loss ratio in the cell buffer are both short and low and the communication efficiency is improved can be efficiently obtained by a computer simulation.

〈3. Modification〉

When in the aforementioned embodiment a connection using the ABR service is established and if the ABR allocation bandwidth is not more than 50 Mbps, the RIF, the RDF and the PCR, which are the ABR parameters, and the congestion detecting threshold Th_cg are so decided, as shown in the expressions (6) to (9), the expressions (10) to (12) and the step S54 of FIG. 6, as to satisfy the following expressions:

$$1/4 \leqq \text{RIF} \leqq 1$$

$$\text{RDF} = 1$$

$$0.2 \leqq \text{TPCR} \leqq 0.6$$

$$\text{S_buf} \times 0.1 \leqq \text{Th_cg} \leqq \text{S_buf} \times 0.5$$

where TPCR represents the total value of PCR of all ABR connections.

However, according to the already described basic study, as shown in FIG. 11, if in the case where the RIF is greater than 1/16 and the RDF is set to a value in the range of $1/4 \leqq \text{RDF} \leqq 1$, the total cell loss ratio TCLR becomes not more than 1/10 as compared with the prior art in which the RIF and the RDF are both set to values of not more than "1/32". Therefore, in the aforementioned embodiment, if the ABR allocation bandwidth is not more than 50 Mbps when establishing a connection using the ABR service category, the set values of the parameters may be decided in ranges satisfying the following expressions (100) and (101) in place of the expressions (6) to (9) and the expressions (10) to (12).

$$1/16 \leqq \text{RIF} \leqq 1 \tag{100}$$

$$1/4 \leqq \text{RDF} \leqq 1 \tag{101}$$

With such a structure, TCLR will be not more than 1/10 compared with the prior art, thereby improving communication efficiency with a large TCP throughput when transmitting data in a TCP, for example.

From the already described basic study, even if the PCR and the congestion detecting threshold Th_cg fluctuate, such values of the RIF and the RDF that the TCP protocol throughput reaches a high value are included in the ranges of:

$$1/16 \leqq \text{RIF} \leqq 1 \tag{13}$$

$$1/16 \leqq \text{RDF} \leqq 1 \tag{14}$$

and if the RIF and the RDF are set to values out of these ranges, high TCP throughput cannot be obtained. Therefore, for the connection in a narrow band not more than 50 Mbps using the ABR service category, the set values of the parameters may be decided in ranges satisfying the above expressions (13) and (14) in place of the expressions (6) to (9) and the expressions (10) to (12). According to such a structure, the set values of the parameters may be decided in restricted ranges as compared with the prior art, whereby such proper parameter set values that the data transmission time and the cell loss ratio in the cell buffer are both reduced and the TCP throughput is increased can be efficiently obtained by a computer simulation or the like.

The above embodiment has computed, when computing the values of the parameters in the parameter computation part 109 or the PCR computation part 112, by the simulation on the computer such values of the parameters that the total cell loss ratio TCLR is minimized. However, when simulating in the parameter computation part 109 or the PCR computation part 112 motion of cells in the network, the simulation may be performed not through the simulation program but by a unit formed by hardware such as an electric circuit for deciding on the basis of the result such values of the parameters that the total cell loss ratio TCLR is minimized.

While the above embodiment has simulated in the parameter computation part 109 or the PCR computation part 112 motion of the cells in the network, the total cell loss ratio TCLR may substitutionally be computed by monitoring motion of the cells in the actual communication network for a finite time.

In the aforementioned embodiment, further, in place of computing the total cell loss ratio TCLR and computing the parameter set values so that the value thereof is minimized, target values of the delay cell loss ratio CLRdl and the in-switch cell loss ratio CLRsw may be previously set for computing the values of the parameters so that the delay cell loss ratio CLRdl and the in-switch cell loss ratio CLRsw both become not more than the target values.

In the aforementioned embodiment, further, in place of the signaling cell negotiating with the terminal and the switch so as to decide the ABR parameters, the value of the ABR parameters may be determined for its own in the terminal or in the switch and shared the already-determined value therebetween using a network management protocol such as ILMI (Integrated Local Management Interface). Note that ILMI is defined in the ATM Forum Integrated Local Management Interface Specification Version 4.0.

Further, while the aforementioned embodiment has determined in the transmission bandwidth determination part 108 whether or not the magnitude of the transmission bandwidth is greater than 50 Mbps and computed in accordance with the result the values of the parameters in the PCR computation part 112 or the parameter computation part 109, the values of the parameters may be computed in the parameter computation part 109 regardless of the magnitude of the transmission bandwidth. Also in this case, effects substantially similar to those of the embodiment can be attained.

While in the flow control method according to the aforementioned embodiment the EFCI method of the ABR service is used, another method such as an ER (Explicit Cell Rate) method or a relative rate marking method of the ABR service may be employed.

While in the aforementioned embodiment the method of comparing the cell number in the cell buffer with the congestion detecting threshold value Th_cg has been used as the congestion detection method, another congestion detection method may be employed. For example, as the congestion detection method, a method of observing the rate of cells arriving at the cell buffer and comparing the rate with a previously set threshold thereby detecting congestion, a method detecting congestion through an increase speed of the cell number in the cell buffer, a method of detecting congestion using the information that cells is discarded in the cell buffer or the like can be used.

While the aforementioned embodiment has obtained the total cell loss ratio TCLR by the computer simulation, the value of the total cell loss ratio TCLR may be computed by analytically solving a mathematical model of the ATM communication network.

While the aforementioned embodiment has employed the total cell loss ratio TCLR for determining the magnitude of the throughput of the upper layer, the magnitude of the throughput of the upper layer may be determined through another measure. Herein, another measure includes TCP throughput defined in the basic study.

While the aforementioned embodiment has made a simulation when newly establishing a connection of ABR thereby deciding the values of the parameters, the values of the parameters may substitutionally be decided as below. Before starting operation of flow control, some situations of operation are assumed, a computer simulation is made on values of network attributes corresponding thereto thereby obtaining values of the parameters, and a table indicating the association between the values of the network attributes and the values of the parameters is prepared. When establishing a connection of ABR during operation of the flow control, the table is referred to thereby deciding the values of the parameters. Herein, in place of the computer simulation for obtaining the value of the parameters, a method of making a simulation experiment using a hardware devise, a method of monitoring motion of the cells in the actual communication network, or a method of analytically solving a mathematical model of the ATM communication network may be employed so as to obtain proper values of the parameters. Also, in place of determining the magnitude of the throughput of the upper layer using the total cell loss ratio TCLR for obtaining the values of the parameters, the magnitude of the throughput of the upper layer may be determined through another measure such as TCP throughput defined in the basic study.

While in the aforementioned embodiment the manager of the communication element has inputted the values of the network attributes, the communication element may manage values of some network attributes to automatically input the same to the transmission bandwidth determination part.

While in the description of the above embodiment such a structure that in the communication element cells of a connection using the ABR service are processed independently of cells of a connection using another service and the ABR allocation bandwidth and the buffer capacity of the cell buffer are at fixed magnitudes is mainly described, such a structure may be employed that the connection using the ABR service and the connection using another service share the cell buffer, the transmission bandwidth of the communication path and the like and the transmission bandwidth and the buffer capacity allocated to the ABR service fluctuate. In this case, as described above for example, the average value of the transmission bandwidth allocated to the ABR service in the transmission bandwidth of the communication path may be regarded as the ABR allocation bandwidth to create a network model. In place thereof, motion of the cells of the connection using another service may also be modeled to make a simulation thereby computing the values of the parameters.

While an ACR was updated by a transmitting terminal in accordance with the above equations (1) and (2) without limitation on the values of RIF and RDF in the aforementioned embodiment, the ACR may be updated by a transmitting terminal in accordance with the equations (1) and (2) with limitations on the values of RIF and RDF. On the assumption that ABR allocation bandwidth is not more than 50 Mbps and RIF=RDF=1, for example, the transmitting terminal may be set to update the ACR at the time of receiving an RM cell with the following equations:

$$\text{when CI bit} = 0,\ ACR = PCR$$

$$\text{when CI bit} = 1,\ ACR = MCR.$$

Then, when a transmission bandwidth is not more than 50 Mbps, communication efficiency can be improved and the structure of the transmitting terminal can be simplified with a possible easier ACR calculation taken place in the transmitting terminal.

While the invention has been described in detail, the foregoing description is in all aspects illustrative and not restrictive. It is understood that numerous other modifications and variations can be devised without departing from the scope of the invention.

## Claims

1. A communication element used in an ATM communication network in which one or a plurality of connections (C1 to C10) are established over which data is transported in the form of cells of fixed length in an ABR service category in a transmission bandwidth of not more than 50 Mbps for receiving, when information is transferred through said ATM communication network between a transmitting terminal (120, 130, 140) and a receiving terminal (110), a cell inputted from said transmitting terminal into said ATM communication network, performing prescribed processing on received said cell and thereafter transmitting said cell to said receiving terminal, said communication element comprising:

   parameter decision means (103, 106, 107, 108, 111, 112) for deciding, when establishing a connection using said ABR service category between said transmitting terminal and said receiving terminal, values of ABR parameters defined in the ABR service;
   congestion detection means (105) for detecting congestion in a part in which cells are multiplexed including a cell transmitted on said connection using said ABR service category; and
   congestion notification means (102) for issuing an instruction for decreasing an ACR being an allowed cell rate held in said transmitting terminal to said transmitting terminal when said congestion is detected while issuing an instruction for increasing said ACR to said transmitting terminal when said congestion is not detected, wherein
   said parameter decision means (112) decides the value of a parameter RIF, which is one of said ABR parameters, in the range of not less than "1/16" and not more than "1", said RIF defining the increase speed of a cell input rate from said transmitting terminal into said ATM communication network.

2. The communication element according to claim 1, wherein said parameter decision means (112) decides the value of a parameter RDF, which is one of said ABR parameters, and which defines the decrease speed of the cell input rate from said transmitting terminal into said ATM communication network, in the range of not less than "1/16" and not more than "1".

3. The communication element according to claim 2, wherein said parameter decision means (112) decides the value of said RDF in the range of not less than "1/4" and not more than "1".

4. The communication element according to claim 3, wherein the value of said RDF is "1".

5. The communication element according to claim 1, wherein said parameter decision means (112) decides the value of said RIF in the range of not less than "1/4" and not more than "1".

6. The communication element according to claim 5, wherein a parameter RDF, being one of said ABR parameters, defining the decrease speed of the cell input rate from said transmitting terminal into said ATM communication network is "1".

7. The communication element according to claim 6, comprising:

   a buffer (101) provided in said part in which cells are multiplexed for multiplexing cells transferred in said ATM communication network; and
   observation means (104) for observing the number of said cells stored in said buffer, wherein
   said congestion detection means (105) detects congestion on the basis of observation by said observation means when the number of said cells stored in said buffer exceeds a previously set congestion detecting threshold, and
   said congestion detecting threshold is set to a value of not less than 1/10 and not more than 1/2 of the capacity of said buffer.

8. The communication element according to claim 1, wherein said parameter decision means (112) decides, so that a cell loss ratio in said part in which cells are multiplexed is lowered and a cell transmission rate at which said transmitting terminal inputs cells in said ATM communication network is increased, the value of a parameter PCR, being one of said ABR parameters, defining the maximum value of said cell transmission rate.

9. The communication element according to claim 6, wherein said parameter decision means (112) decides said value of a parameter PCR, which is one of said ABR parameters, and which defines the maximum value of the cell input rate from said transmitting terminal into said ATM communication network, so that the total value of said PCR as to said connections is a value of not less than 20 % and not more than 60 % of said transmission bandwidth.

10. A communication element used in an ATM communication network in which one or a plurality of connections (C1 to C10) are established over which data is transported in the form of cells of fixed length in an ABR service category, when information is transferred through said ATM communication network between a transmitting terminal (120, 130, 140) and a receiving terminal (110), a cell inputted from said transmitting terminal into said ATM communication network, performing prescribed processing on received said cell and thereafter transmitting said cell to said receiving terminal, said communication element comprising:

    parameter decision means (103, 106, 107, 108, 111, 112) for deciding, when establishing a connection using said ABR service category between said transmitting terminal and said receiving terminal, values of ABR parameters defined in the ABR service;
    congestion detection means (105) for detecting congestion in a part in which cell are multiplexed including a cell transmitted on said connection using said ABR service category; and
    congestion notification means (102) for issuing an instruction for decreasing an ACR being an allowed cell rate held in said transmitting terminal to said transmitting terminal when said congestion is detected while issuing an instruction for increasing said ACR to said transmitting terminal when said congestion is not detected,
    said parameter decision means comprising:
    ABR transmission bandwidth calculation means (106) for calculating an ABR allocation bandwidth, being a bandwidth allocated when establishing said connection to said ABR service;
    transmission bandwidth determination means (108) for determining whether or not said ABR allocation bandwidth is not more than 50 Mbps; and
    calculation means (112) for obtaining, when said ABR allocation bandwidth is not more than 50 Mbps, the values of said ABR parameters in a predetermined range.

11. The communication element according to claim 10, wherein said calculation means (112) obtains the value of a parameter RIF, which is one of said ABR parameters, in the range of not less than "1/16" and not more than "1" when said ABR allocation bandwidth is not more than 50 Mbps, said RIF defining the increase speed of a cell input rate from said transmitting terminal into said ATM communication network.

12. The communication element according to claim 11, wherein said calculation means (112) obtains, when said ABR allocation bandwidth is not more than 50 Mbps, the value of a parameter RDF, being one of said ABR parameters, defining the decrease speed of the cell input rate from said transmitting terminal into said ATM communication network in the range of not less than "1/16" and not more than "1".

13. The communication element according to claim 12, wherein said calculation means (112) obtains, when said ABR allocation bandwidth is not more than 50 Mbps, the value of said RDF in the range of not less than "1/4" and not more than "1".

14. The communication element according to claim 13, wherein said calculation means (112) obtains the value of said RIF in the range of not less than "1/4" and not more than "1".

15. The communication element according to claim 14, wherein a parameter RDF, being one of said ABR parameters, defining the decrease speed of the cell input rate from said transmitting terminal into said ATM communication network is "1".

16. A communication terminal for use as a transmitting terminal sending information to a receiving terminal (110) through an ATM communication network in which one or a plurality of connections (C1 to C10) are established over which data is transported in the form of cells of fixed length in an ABR service category in a transmission bandwidth of not more than 50 Mbps, said communication terminal comprising:

parameter decision means (556) for deciding, when establishing a connection using said ABR service category between said transmitting terminal and said receiving terminal, values of ABR parameters defined in the ABR service;
cell sending means (546) holding an ACR, being an allowed cell rate, for inputting, when sending to said receiving terminal information, at a rate not more than said ACR a cell including said information into said ATM communication network; and
ACR computation means (552) for decreasing said ACR on the basis of an RDF, being one of said ABR parameters, when receiving an instruction issued from a communication element included in said ATM communication network for decreasing said ACR while increasing said ACR on the basis of an RIF, being one of said ABR parameters, when receiving an instruction issued from said communication element for increasing said ACR, wherein
said parameter decision means (556) decides the value of said RIF in the range of not less than "1/16" and not more than "1".

17. The communication terminal according to claim 16, wherein said parameter decision means (556) decides the value of said RDF in the range of not less than "1/16" and not more than "1".

18. The communication terminal according to claim 17, wherein said parameter decision means (556) decides the value of said RDF in the range of not less than "1/4" and not more than "1".

19. The communication terminal according to claim 16, wherein said parameter decision means (556) decides the value of said RIF in the range of not less than "1/4" and not more than "1".

20. The communication terminal according to claim 19, wherein said RDF is "1".

21. A method of flow control performed, when through an ATM communication network in which one or a plurality of connections (C1 to C10) are established over which data is transported in the form of cells of fixed length in an ABR service category in a transmission bandwidth of not more than 50 Mbps information is transmitted between a transmitting terminal (120, 130, 140) and a receiving terminal (110), between a communication element (100) included in said ATM communication network and said transmitting terminal and said receiving terminal, said method comprising:

a parameter decision step (103, 106, 107, 108, 111, 112, 556) of deciding, when establishing a connection using said ABR service category between said transmitting terminal and said receiving terminal, the values of ABR parameters defined in the ABR service;
a cell transmitting step (546) of inputting, when sending in said transmitting terminal information to said receiving terminal, at a rate not more than an ACR being an allowed cell rate held in said transmitting terminal a cell including said information into said ATM communication network;
a congestion detection step (105) of detecting in said communication element congestion in a part in which cells are multiplexed including a cell transmitted on said connection using said ABR service category;

a decrease instruction step (102) of issuing, when in said communication element said congestion is detected, an instruction for decreasing said ACR to said transmitting terminal;
an increase instruction step (102) of issuing, when in said communication element said congestion is not detected, an instruction for increasing said ACR to said transmitting terminal;
an ACR decrease step (552) of decreasing, when receiving in said transmitting terminal said instruction for decreasing said ACR, said ACR on the basis of an RDF, being one of said ABR parameters; and
an ACR increase step (552) of increasing, when receiving in said transmitting terminal said instruction for increasing said ACR, said ACR on the basis of an RIF, being one of said ABR parameters, wherein
in said parameter decision step the value of said RIF, being one of said ABR parameters, is decided in the range of not less than "1/16" and not more than "1".

**22.** The method of flow control according to claim 21, wherein in said parameter decision step (112, 556) the value of said RDF, being one of said ABR parameters, is decided in the range of not less than "1/16" and not more than "1".

**23.** The method of flow control according to claim 22, wherein in said parameter decision step (112, 556) the value of said RDF is decided in the range of not less than "1/4" and not more than "1".

**24.** The method of flow control according to claim 23, wherein the value of said RDF is "1".

**25.** The method of flow control according to claim 21, wherein in said parameter decision step (112, 556) the value of said RIF is decided in the range of not less than "1/4" and not more than "1".

**26.** The method of flow control according to claim 25, wherein said RDF is "1".

**27.** A method of flow control performed, when through an ATM communication network in which one or a plurality of connections (C1 to C10) are established over which data is transported in the form of cells of fixed length in an ABR service category information is transmitted between a transmitting terminal (120, 130, 140) and a receiving terminal (110), between a communication element (100) included in said ATM communication network and said transmitting terminal and said receiving terminal, said method comprising:

a parameter decision step (103, 106, 107, 108, 111, 112, 556) of deciding, when establishing a connection using said ABR service category between said transmitting terminal and said receiving terminal, the values of ABR parameters defined in the ABR service;
a cell transmission step (546) of inputting, when transmitting in said transmitting terminal information to said receiving terminal, at a rate not more than an ACR, an allowed cell rate held in said transmitting terminal, a cell including said information into said ATM communication network;
a congestion detection step (105) of detecting in said communication element congestion in a part in which cells are multiplexed including a cell transmitted on said connection using said ABR service category;
a decrease instruction step (102) of issuing, when in said communication element said congestion is detected, an instruction for decreasing said ACR to said transmitting terminal;
an increase instruction step (102) of issuing, when in said communication element said congestion is not detected, an instruction for increasing said ACR to said transmitting terminal;
an ACR decrease step (552) of decreasing, when receiving in said transmitting terminal said instruction for decreasing said ACR, said ACR on the basis of an RDF, being one of said ABR parameters; and
an ACR increase step (552) of increasing, when receiving in said transmitting terminal said instruction for increasing said ACR, said ACR on the basis of an RIF, being one of said ABR parameters, and
said parameter decision step comprising:
an ABR transmission bandwidth calculation step (106) of calculating in said communication element an ABR allocation bandwidth allocated to said ABR service when establishing said connection;
a step (S52, 108) of determining whether or not said ABR allocation bandwidth is not more than 50 Mbps; and
a step (S54, 112) of deciding, when said ABR allocation bandwidth is not more than 50 Mbps, the values of said ABR parameters in a predetermined range.

**28.** The method of flow control according to claim 27, wherein in said parameter decision step (112, 556) the value of said RIF is decided in the range of not less than "1/16" and not more than "1".

**29.** The method of flow control according to claim 28, wherein in said parameter decision step (112, 556) the value of said RDF is decided in the range of not less than "1/16" and not more than "1".

30. The method of flow control according to claim 29, wherein in said parameter decision step (112, 556) the value of said RDF is decided in the range of not less than "1/4" and not more than "1".

31. The method of flow control according to claim 28, wherein in said parameter decision step (112, 556) the value of said RIF is decided in the range of not less than "1/4" and not more than "1".

32. The method of flow control according to claim 31, wherein said RDF is "1".

FIG. 1

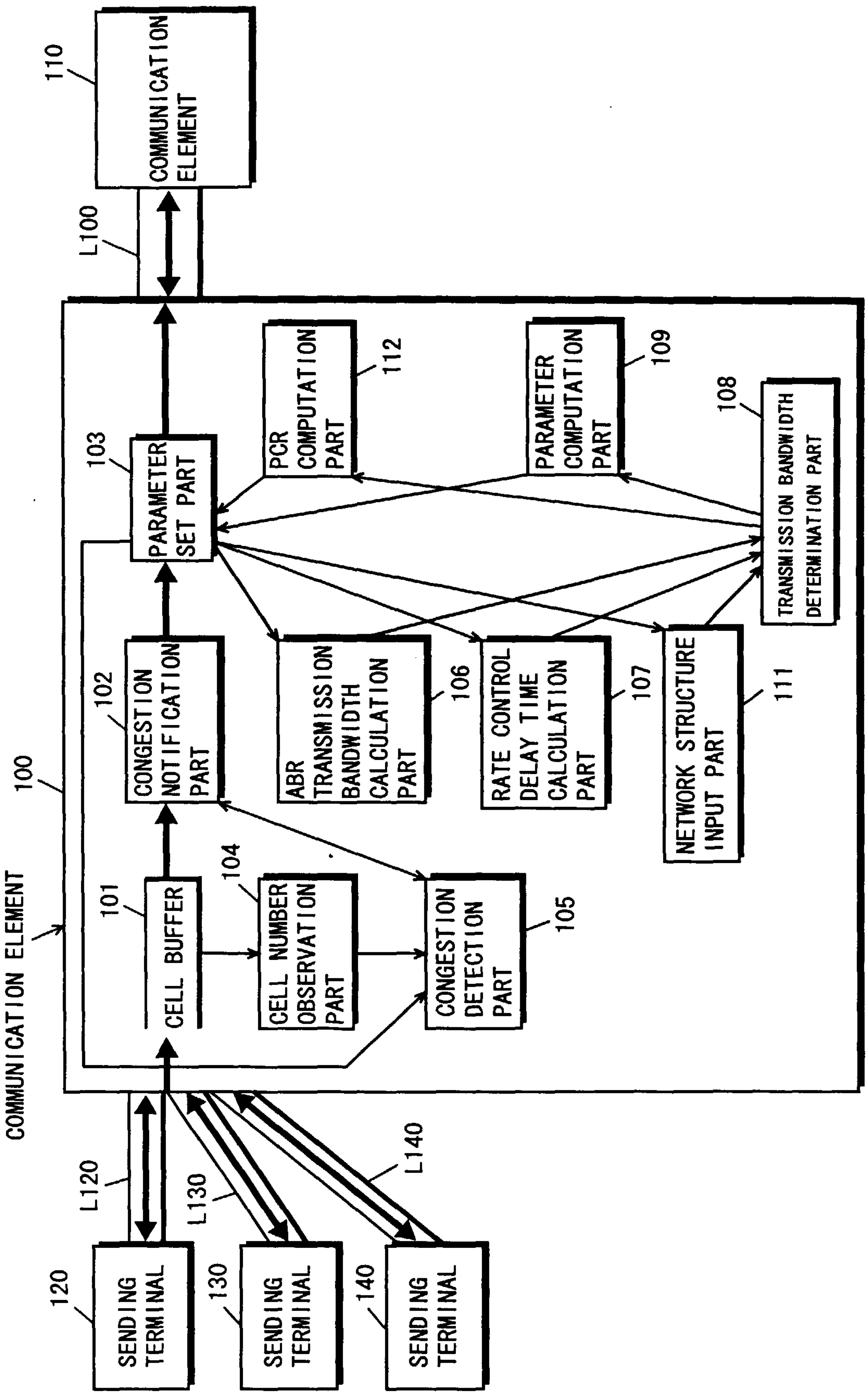
COMMUNICATION ELEMENT
100
110
COMMUNICATION ELEMENT
L100
101
CELL BUFFER
102
CONGESTION NOTIFICATION PART
103
PARAMETER SET PART
104
CELL NUMBER OBSERVATION PART
105
CONGESTION DETECTION PART
106
ABR TRANSMISSION BANDWIDTH CALCULATION PART
107
RATE CONTROL DELAY TIME CALCULATION PART
108
TRANSMISSION BANDWIDTH DETERMINATION PART
109
PARAMETER COMPUTATION PART
111
NETWORK STRUCTURE INPUT PART
112
PCR COMPUTATION PART
L120
L130
L140
120
SENDING TERMINAL
130
SENDING TERMINAL
140
SENDING TERMINAL

FIG. 2

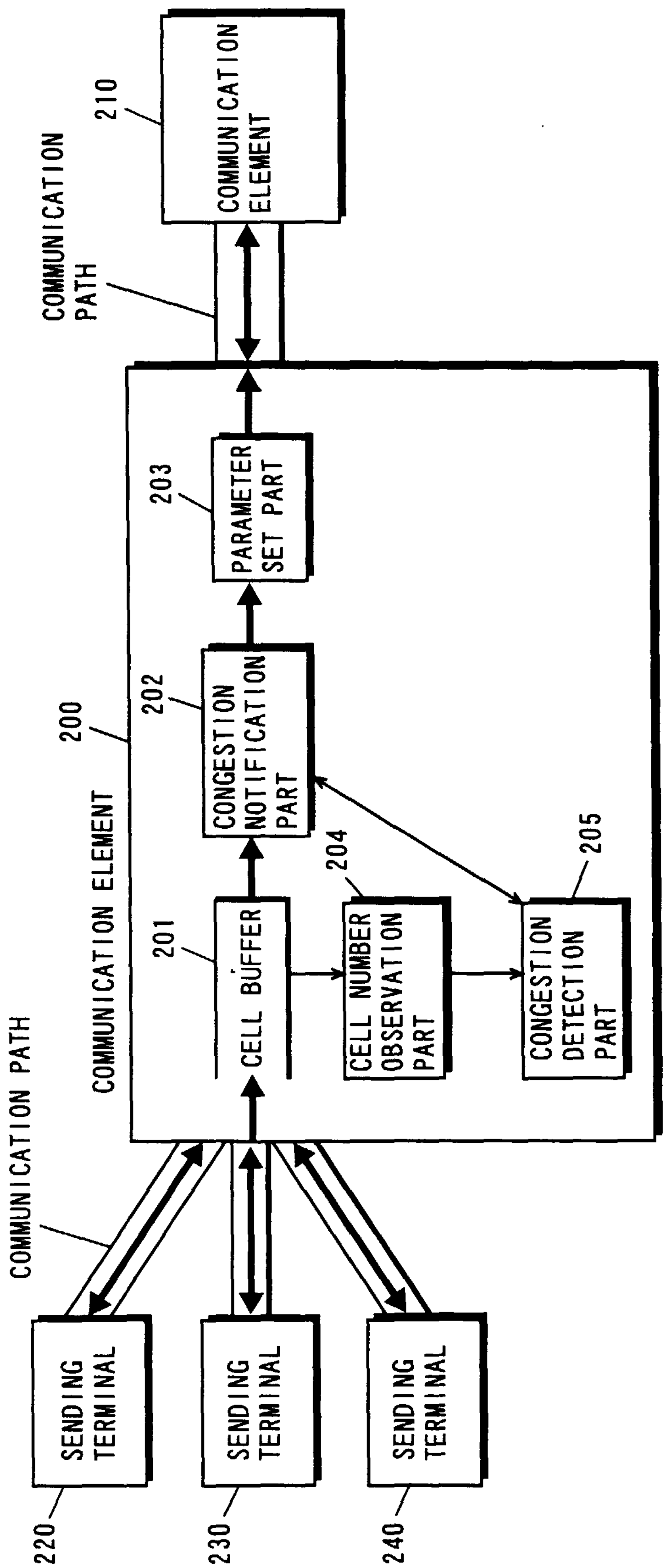
COMMUNICATION ELEMENT
200
CELL BUFFER
201
CONGESTION NOTIFICATION PART
202
PARAMETER SET PART
203
CELL NUMBER OBSERVATION PART
204
CONGESTION DETECTION PART
205
COMMUNICATION ELEMENT
210
COMMUNICATION PATH
COMMUNICATION PATH
SENDING TERMINAL
220
SENDING TERMINAL
230
SENDING TERMINAL
240

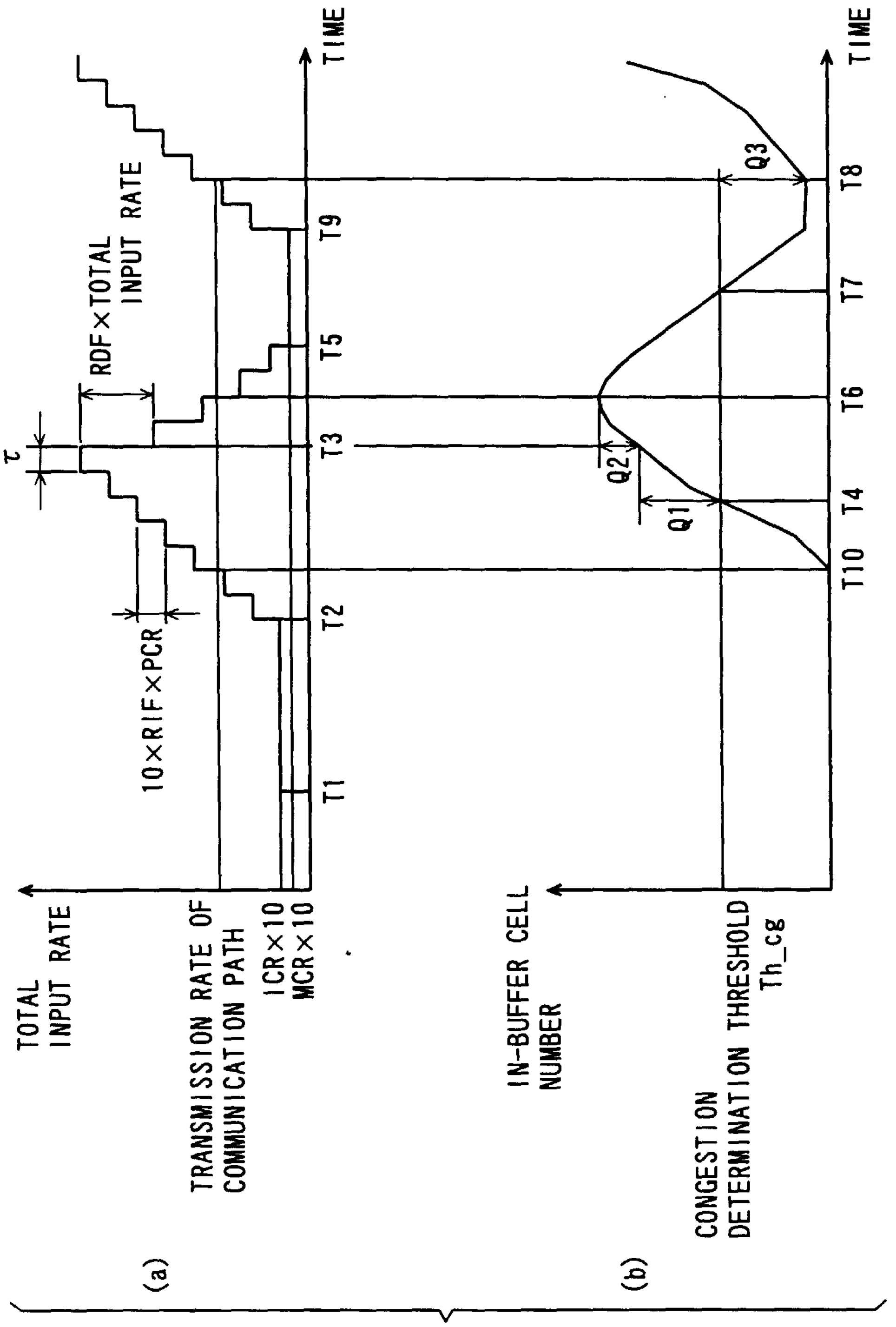
(a)
TOTAL INPUT RATE
TRANSMISSION RATE OF COMMUNICATION PATH
ICR×10
MCR×10
10×RIF×PCR
τ
RDF×TOTAL INPUT RATE
TIME
T1
T2
T3
T5
T9
(b)
IN-BUFFER CELL NUMBER
CONGESTION DETERMINATION THRESHOLD Th_cg
Q1
Q2
Q3
TIME
T10
T4
T6
T7
T8

FIG. 3

F I G. 4

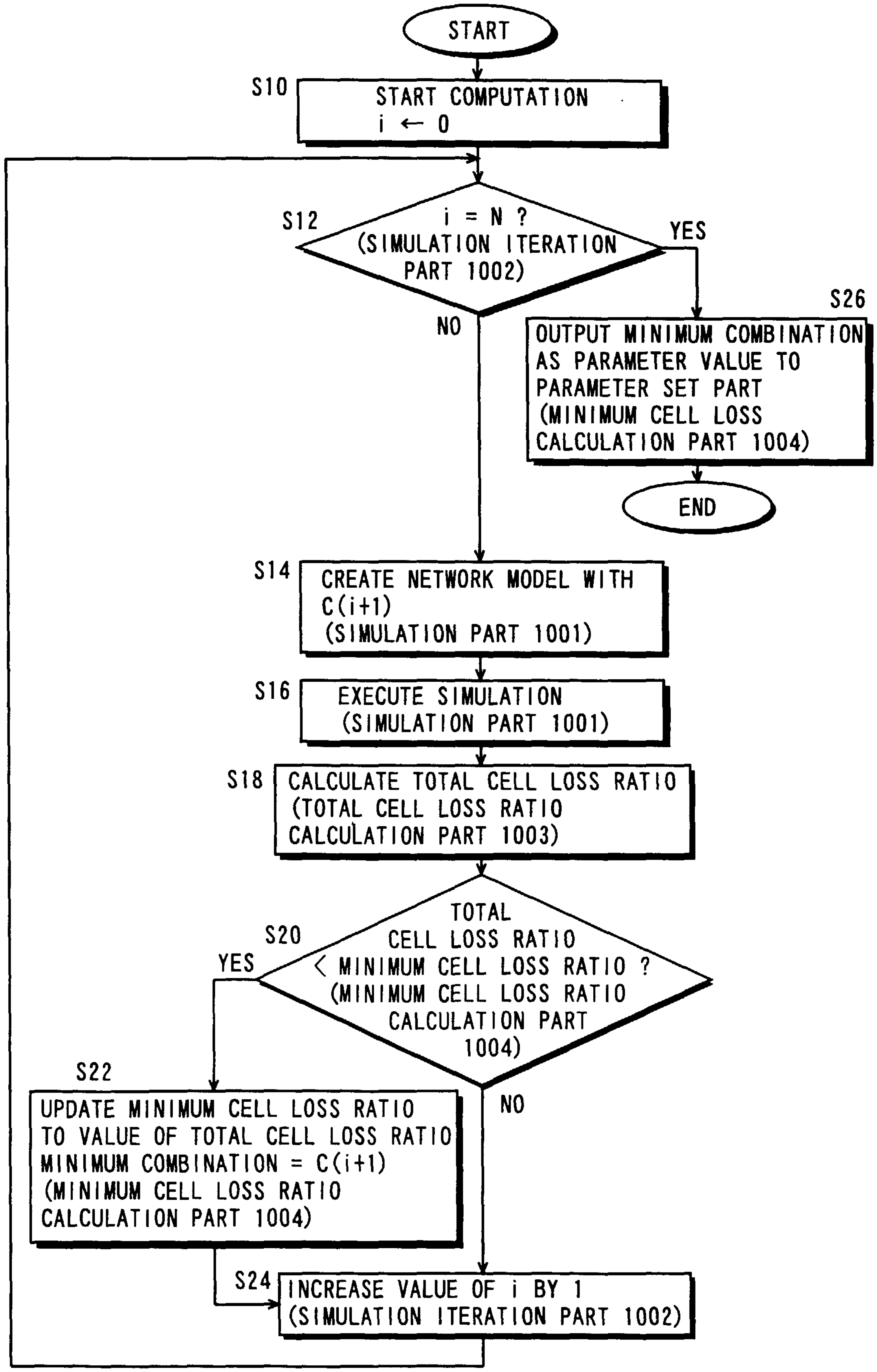
START
S10
START COMPUTATION
i ← 0
S12
i = N ?
(SIMULATION ITERATION
PART 1002)
YES
NO
S26
OUTPUT MINIMUM COMBINATION
AS PARAMETER VALUE TO
PARAMETER SET PART
(MINIMUM CELL LOSS
CALCULATION PART 1004)
END
S14
CREATE NETWORK MODEL WITH
C(i+1)
(SIMULATION PART 1001)
S16
EXECUTE SIMULATION
(SIMULATION PART 1001)
S18
CALCULATE TOTAL CELL LOSS RATIO
(TOTAL CELL LOSS RATIO
CALCULATION PART 1003)
S20
TOTAL
CELL LOSS RATIO
< MINIMUM CELL LOSS RATIO ?
(MINIMUM CELL LOSS RATIO
CALCULATION PART
1004)
YES
NO
S22
UPDATE MINIMUM CELL LOSS RATIO
TO VALUE OF TOTAL CELL LOSS RATIO
MINIMUM COMBINATION = C(i+1)
(MINIMUM CELL LOSS RATIO
CALCULATION PART 1004)
S24
INCREASE VALUE OF i BY 1
(SIMULATION ITERATION PART 1002)

F I G. 5

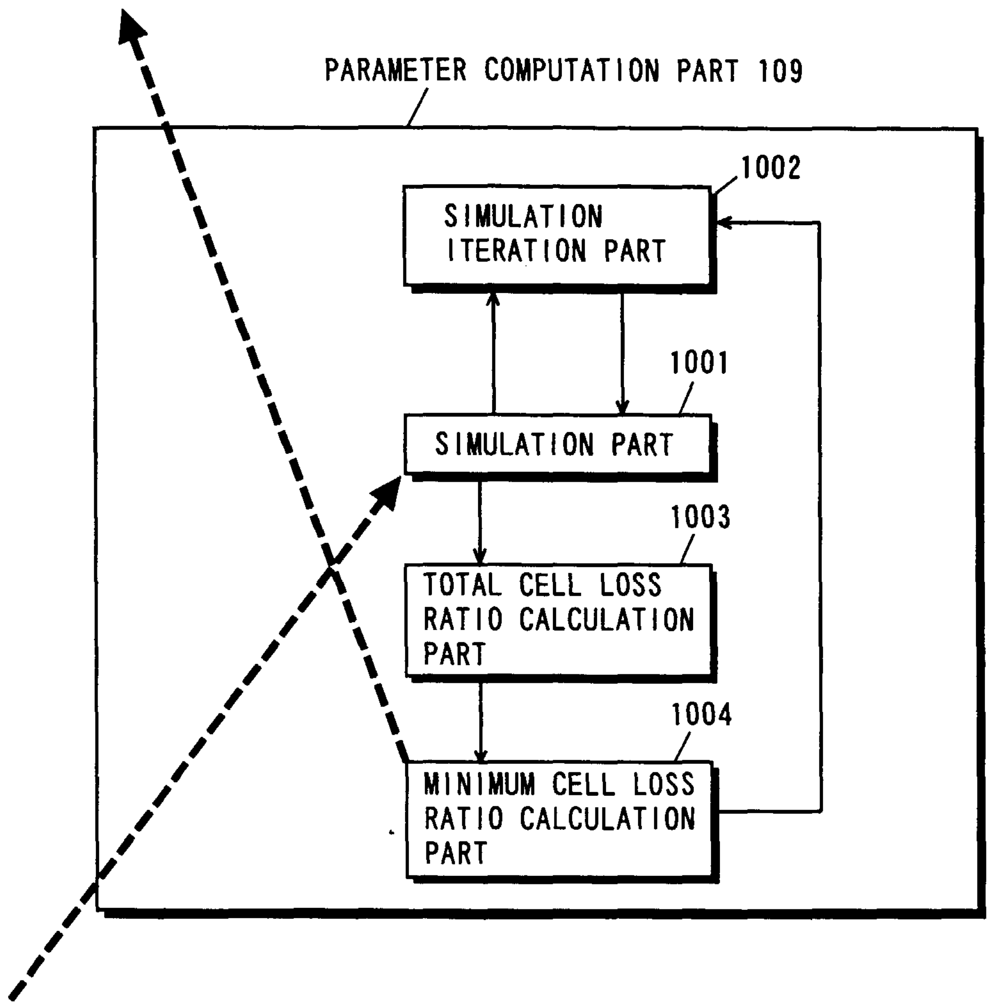
PARAMETER COMPUTATION PART 109
1002
SIMULATION ITERATION PART
1001
SIMULATION PART
1003
TOTAL CELL LOSS RATIO CALCULATION PART
1004
MINIMUM CELL LOSS RATIO CALCULATION PART

F I G. 6

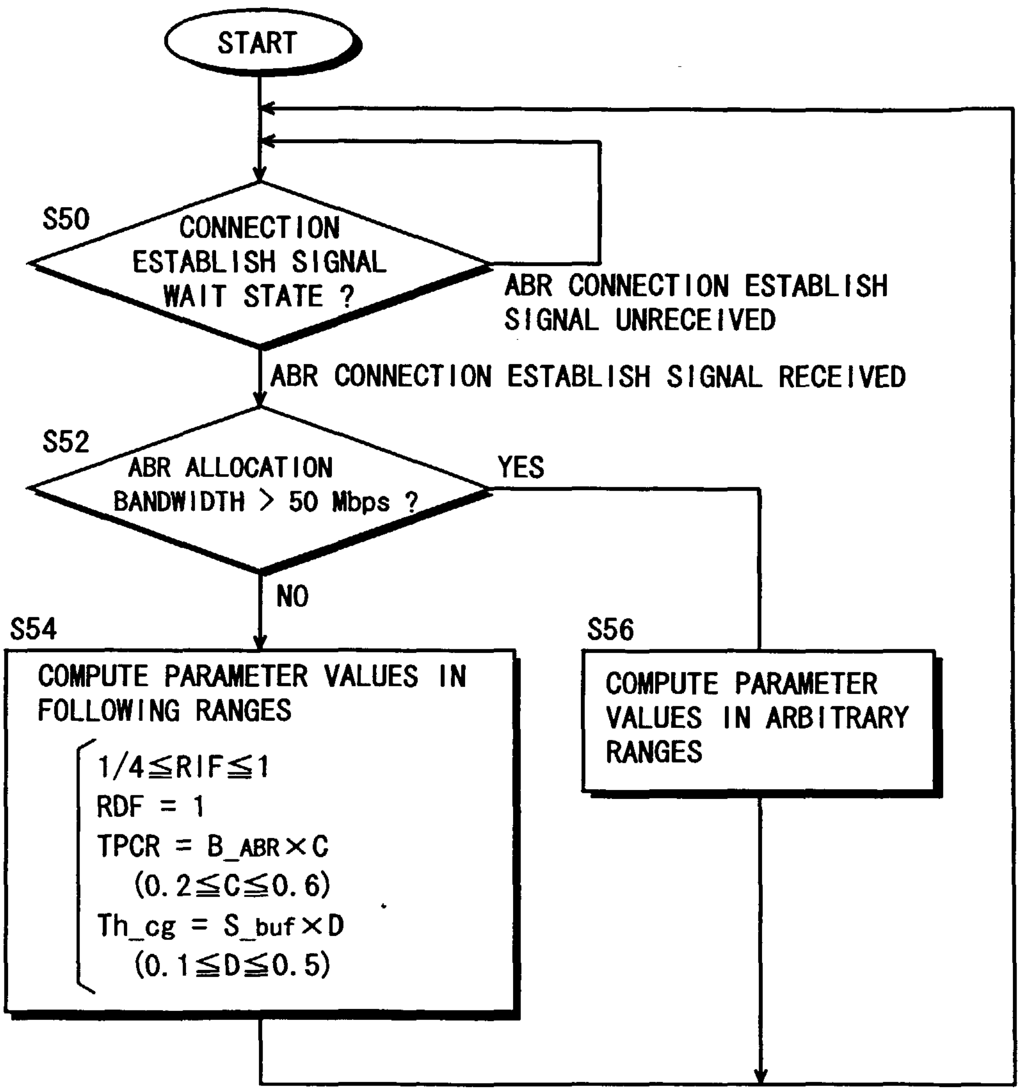
START
S50
CONNECTION ESTABLISH SIGNAL WAIT STATE ?
ABR CONNECTION ESTABLISH SIGNAL UNRECEIVED
ABR CONNECTION ESTABLISH SIGNAL RECEIVED
S52
ABR ALLOCATION BANDWIDTH > 50 Mbps ?
YES
NO
S54
COMPUTE PARAMETER VALUES IN FOLLOWING RANGES
1/4≦RIF≦1
RDF = 1
TPCR = B_ABR×C
(0.2≦C≦0.6)
Th_cg = S_buf×D
(0.1≦D≦0.5)
S56
COMPUTE PARAMETER VALUES IN ARBITRARY RANGES

FIG. 7

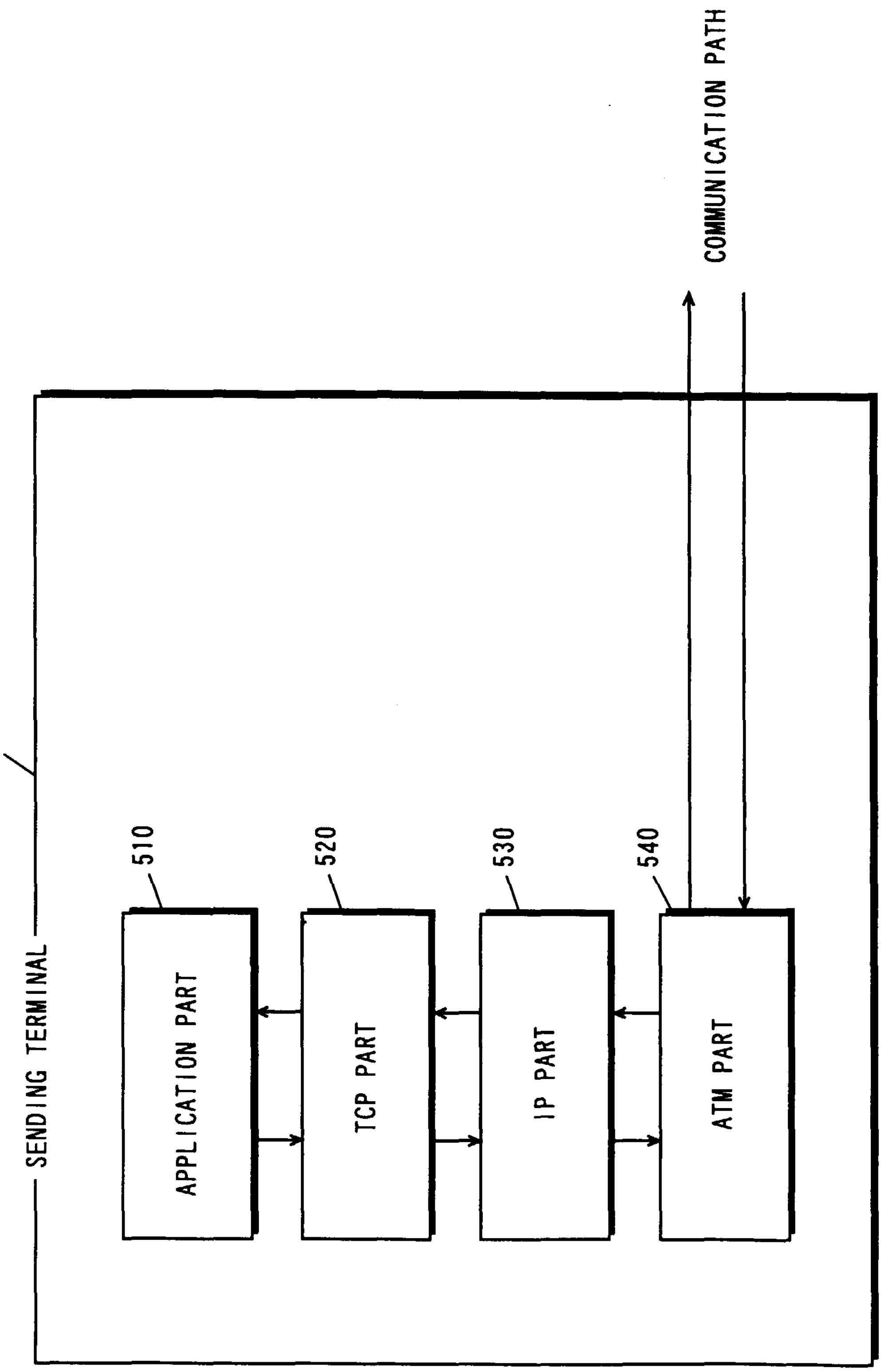
500
SENDING TERMINAL
510
APPLICATION PART
520
TCP PART
530
IP PART
540
ATM PART
COMMUNICATION PATH

FIG. 8

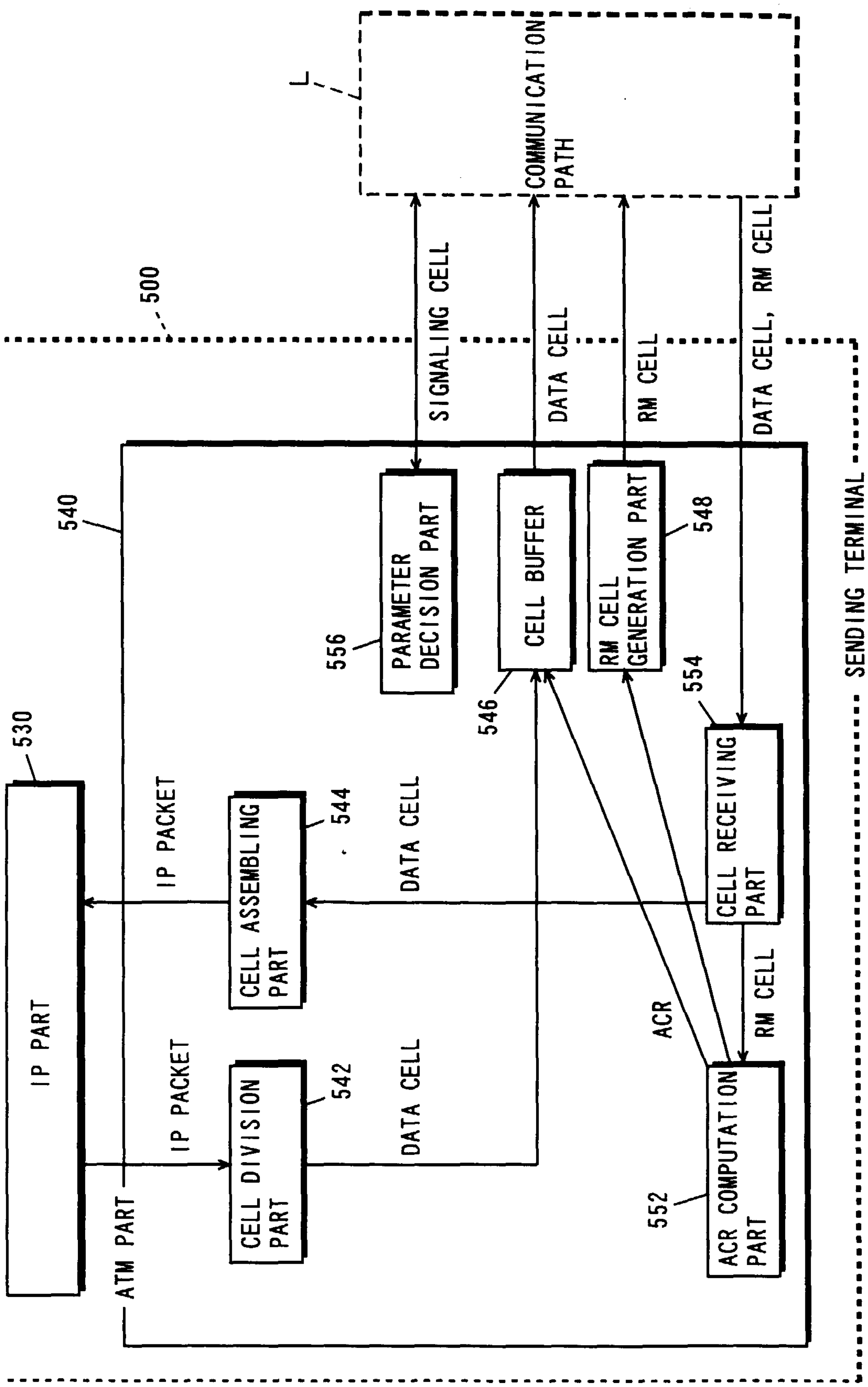
L
COMMUNICATION PATH
500
SIGNALING CELL
DATA CELL
RM CELL
DATA CELL, RM CELL
540
556
PARAMETER DECISION PART
CELL BUFFER
546
RM CELL GENERATION PART
548
554
CELL RECEIVING PART
530
IP PART
IP PACKET
CELL ASSEMBLING PART
544
DATA CELL
IP PACKET
CELL DIVISION PART
542
DATA CELL
ACR
RM CELL
ACR COMPUTATION PART
552
ATM PART
SENDING TERMINAL

F I G. 9

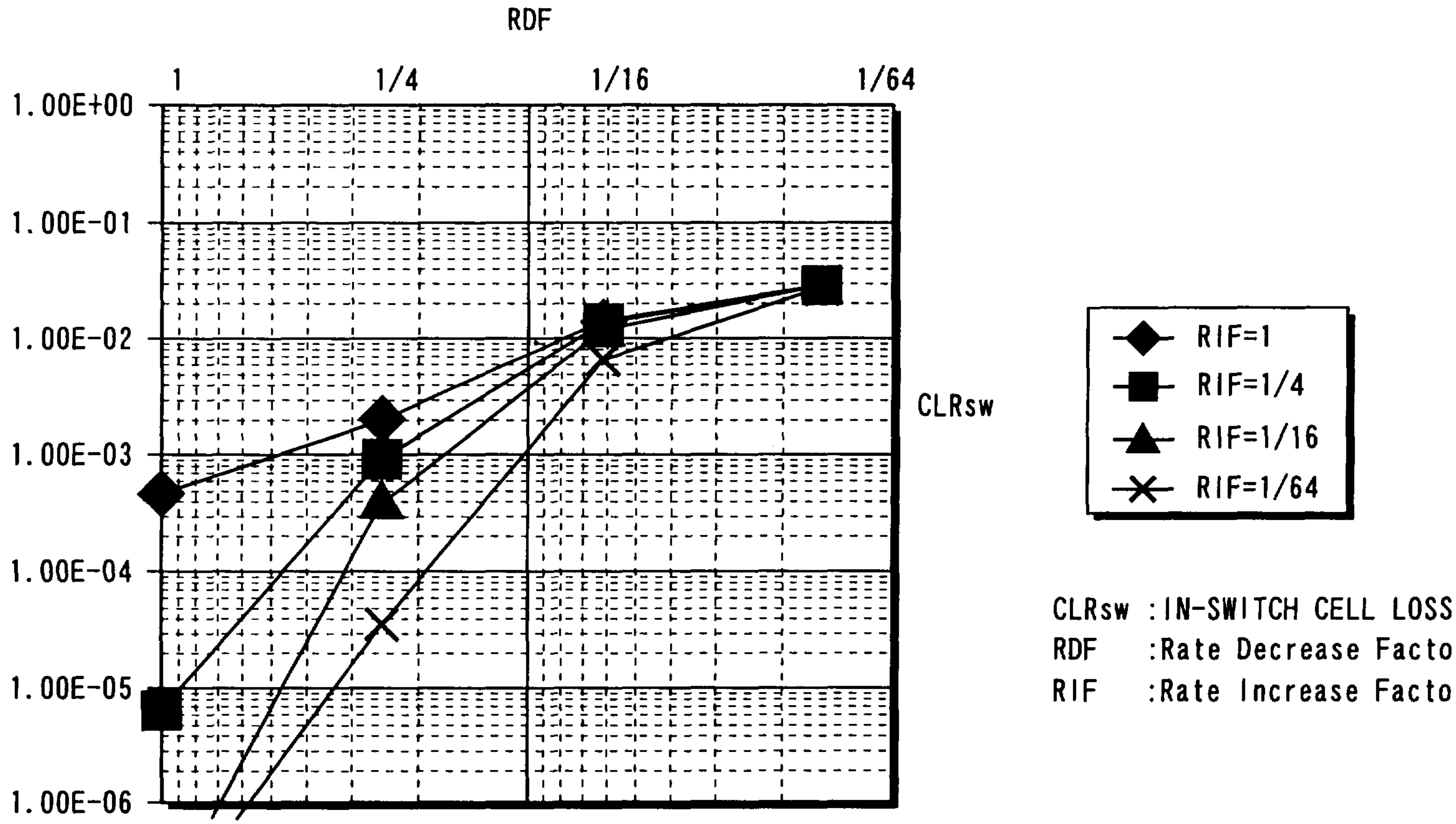


CLRsw :IN-SWITCH CELL LOSS RATIO
RDF :Rate Decrease Factor
RIF :Rate Increase Factor

F I G. 1 0

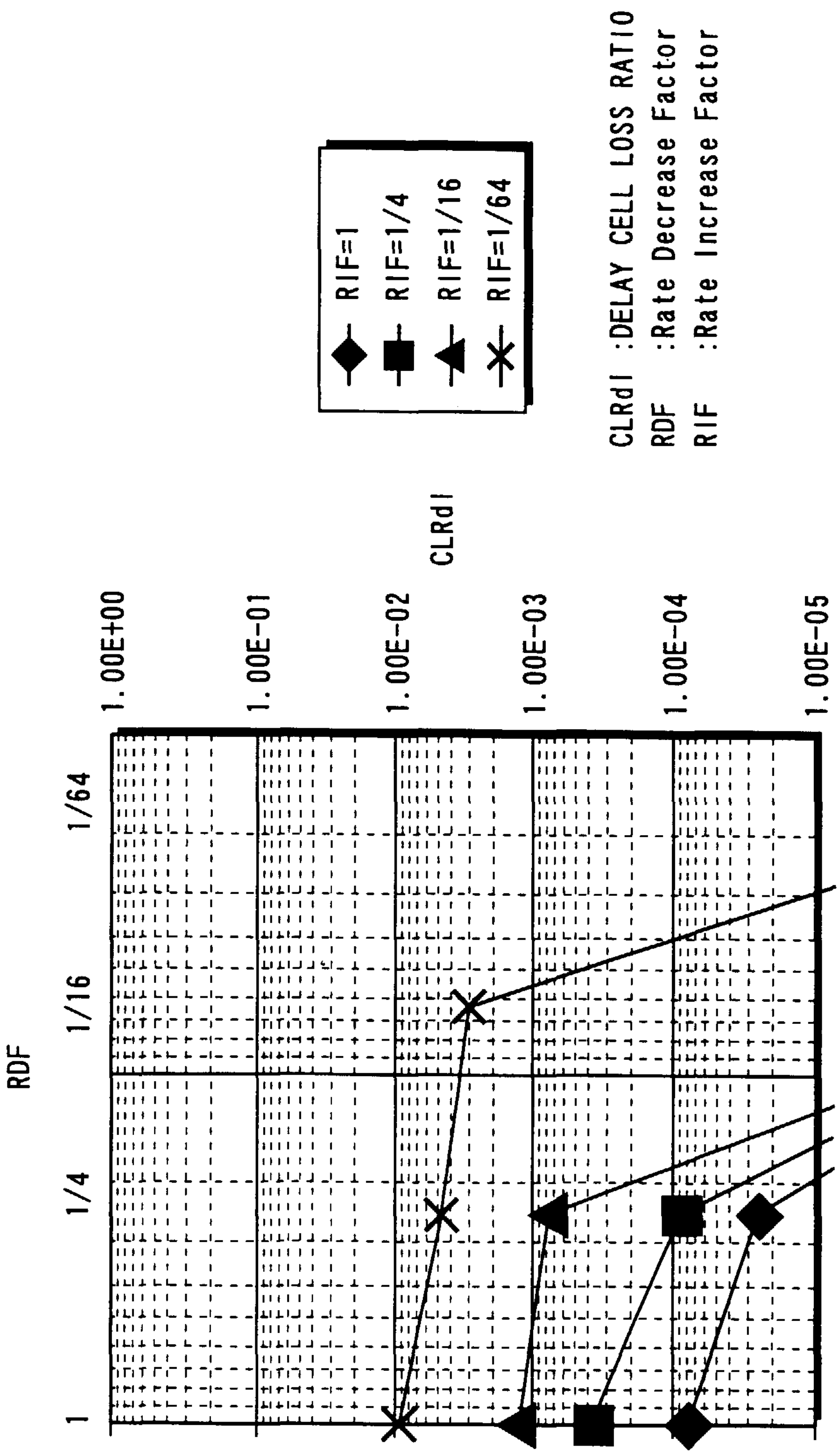
RDF
1/64
1/16
1/4
1
CLRdl
1.00E+00
1.00E-01
1.00E-02
1.00E-03
1.00E-04
1.00E-05
RIF=1
RIF=1/4
RIF=1/16
RIF=1/64
CLRdl :DELAY CELL LOSS RATIO
RDF :Rate Decrease Factor
RIF :Rate Increase Factor

FIG. 11

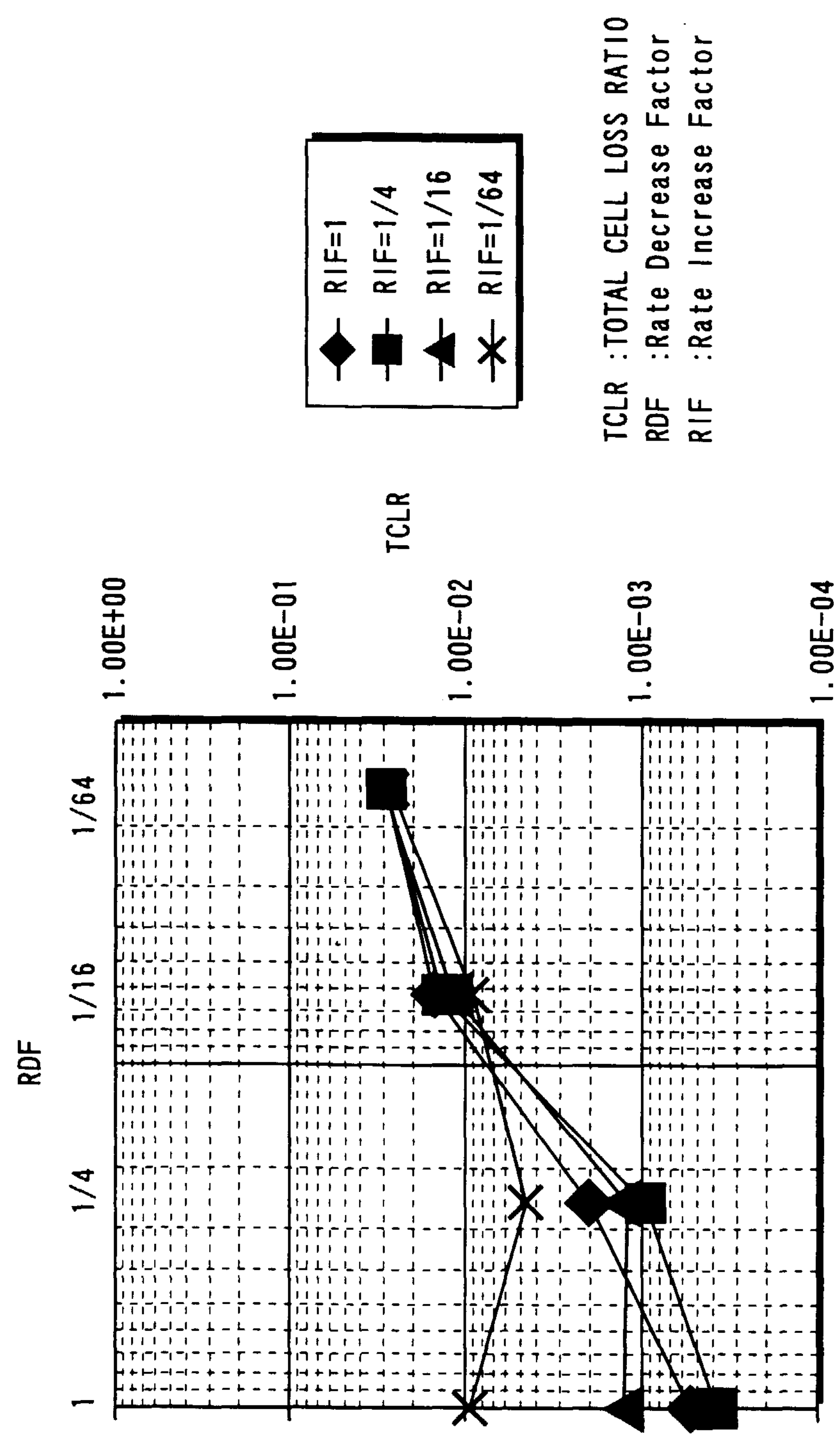
RDF
1/64
1/16
1/4
1
TCLR
1.00E+00
1.00E-01
1.00E-02
1.00E-03
1.00E-04
RIF=1
RIF=1/4
RIF=1/16
RIF=1/64
TCLR :TOTAL CELL LOSS RATIO
RDF :Rate Decrease Factor
RIF :Rate Increase Factor

FIG. 12

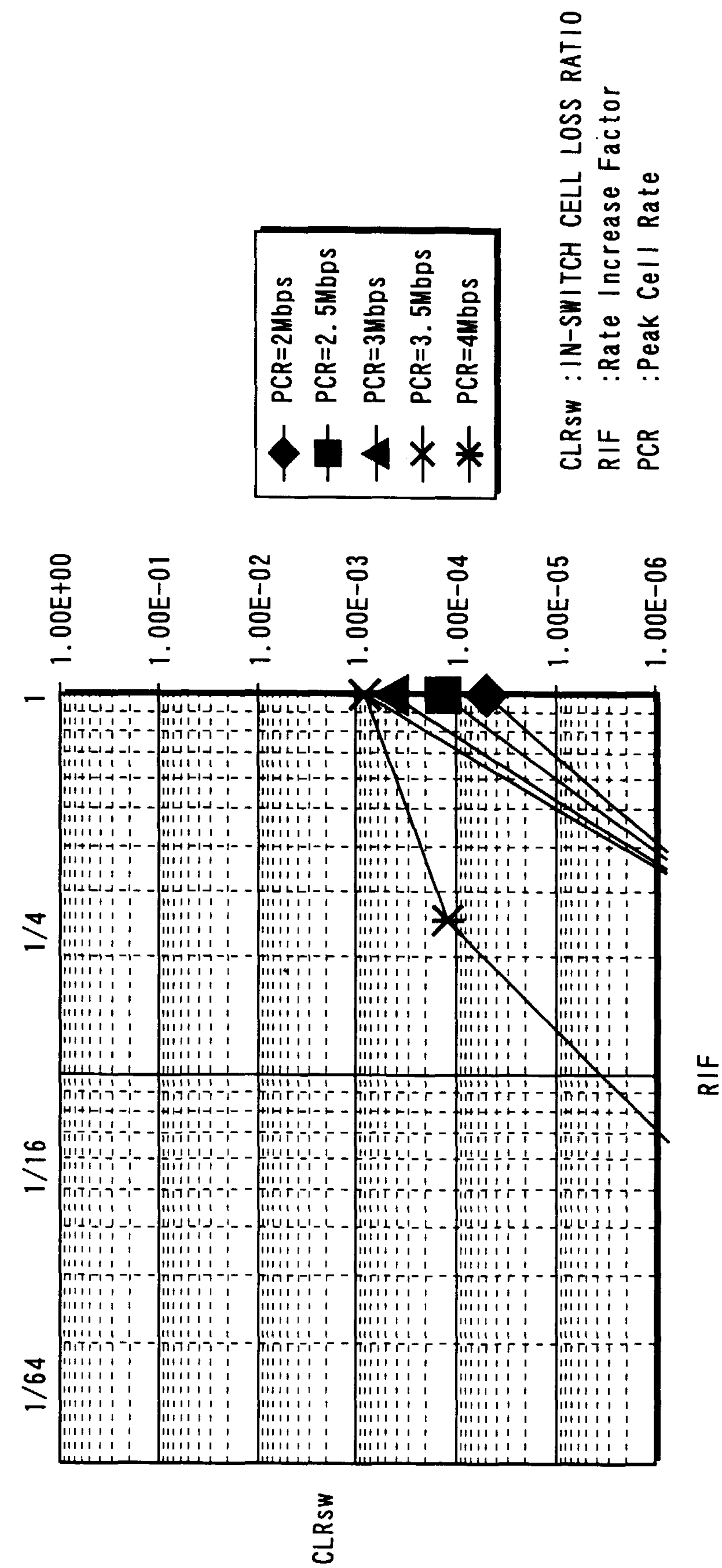
PCR=2Mbps
PCR=2.5Mbps
PCR=3Mbps
PCR=3.5Mbps
PCR=4Mbps
CLRsw :IN-SWITCH CELL LOSS RATIO
RIF :Rate Increase Factor
PCR :Peak Cell Rate
1.00E+00
1.00E-01
1.00E-02
1.00E-03
1.00E-04
1.00E-05
1.00E-06
1
1/4
1/16
1/64
RIF
CLRsw

# F I G. 1 3

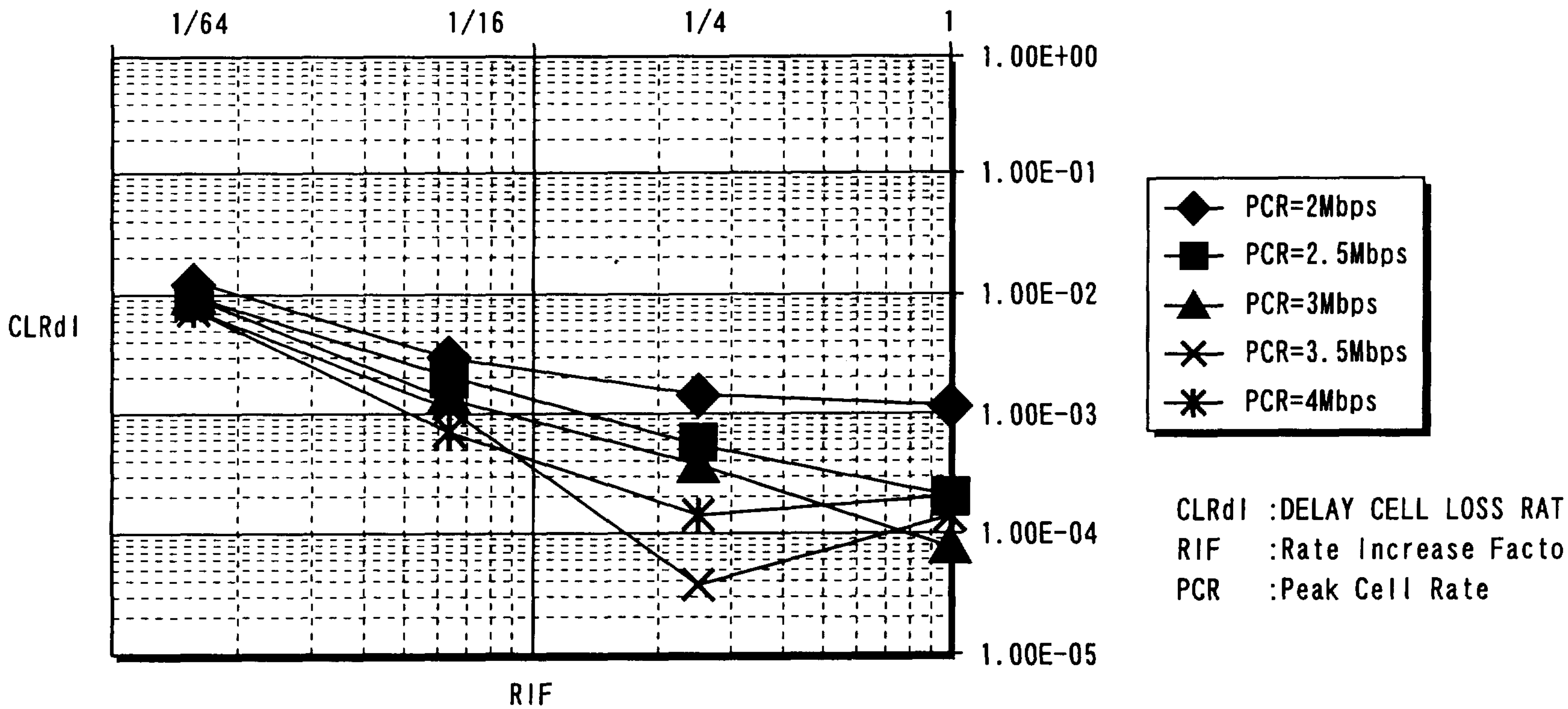


CLRdl :DELAY CELL LOSS RATIO
RIF :Rate Increase Factor
PCR :Peak Cell Rate

FIG. 14

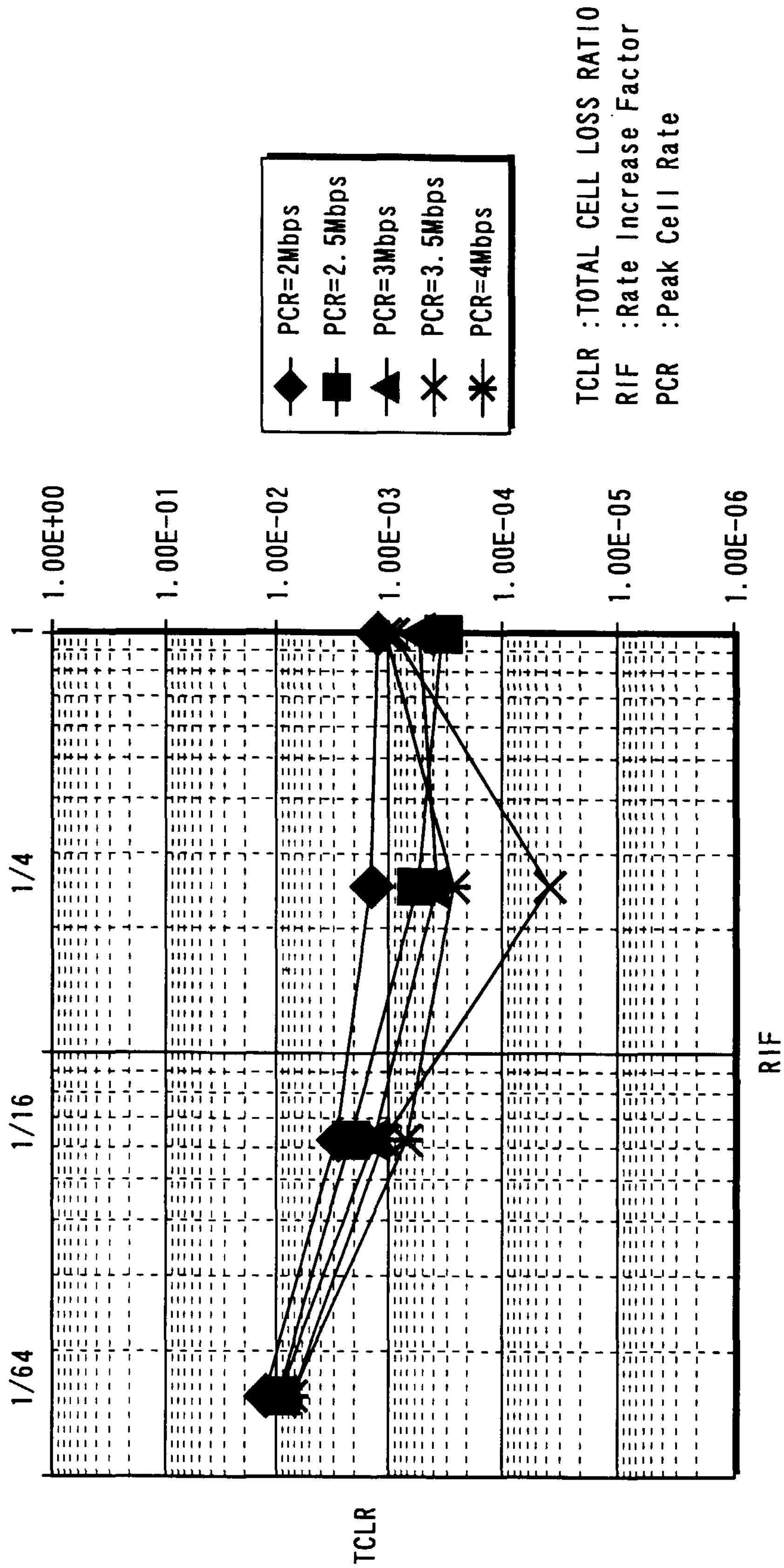
TCLR
RIF
1.00E+00
1.00E-01
1.00E-02
1.00E-03
1.00E-04
1.00E-05
1.00E-06
1
1/4
1/16
1/64
PCR=2Mbps
PCR=2.5Mbps
PCR=3Mbps
PCR=3.5Mbps
PCR=4Mbps
TCLR :TOTAL CELL LOSS RATIO
RIF :Rate Increase Factor
PCR :Peak Cell Rate

F I G. 1 5

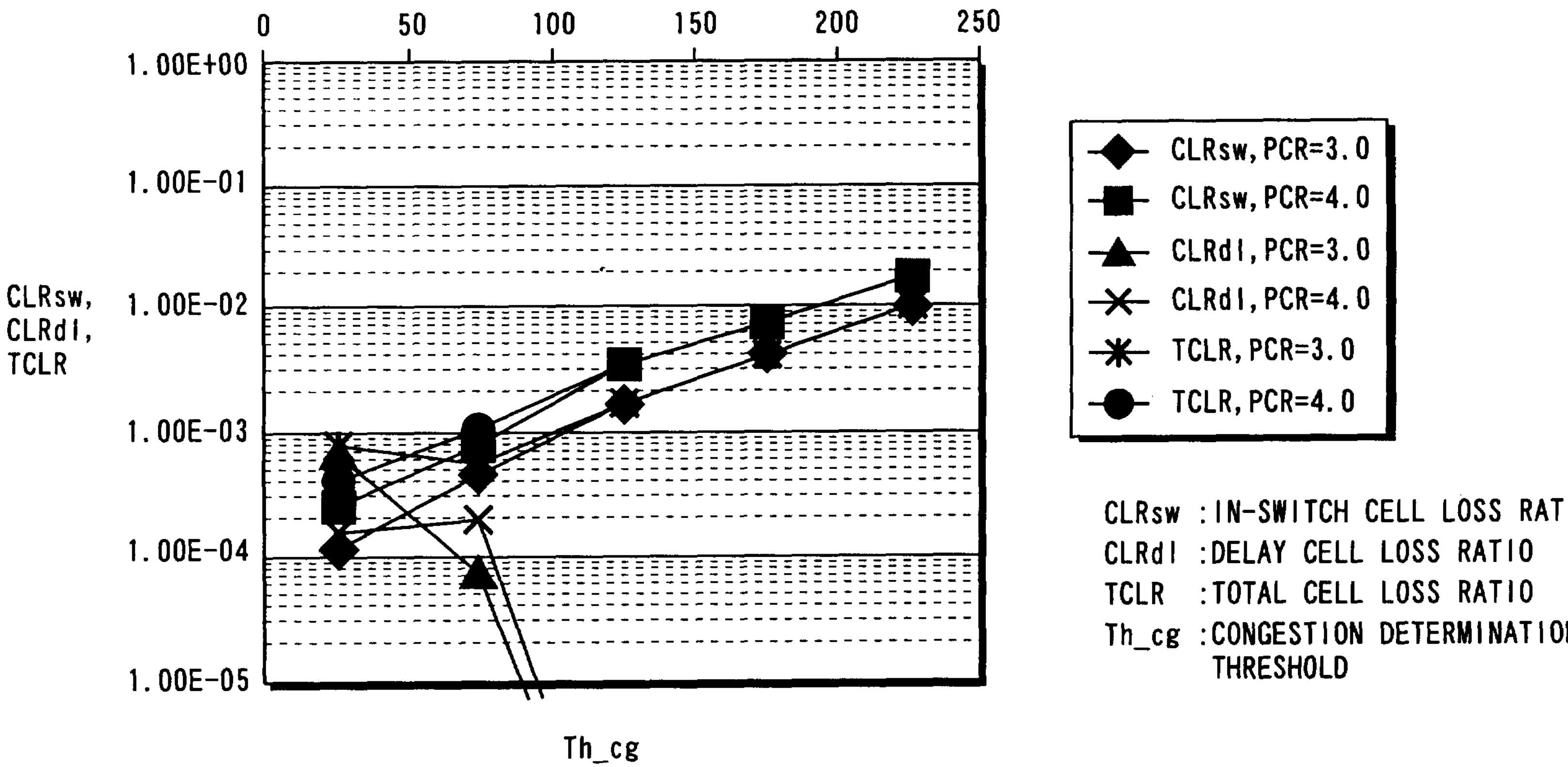


CLRsw : IN-SWITCH CELL LOSS RATIO
CLRdl : DELAY CELL LOSS RATIO
TCLR : TOTAL CELL LOSS RATIO
Th_cg : CONGESTION DETERMINATION THRESHOLD

FIG. 16

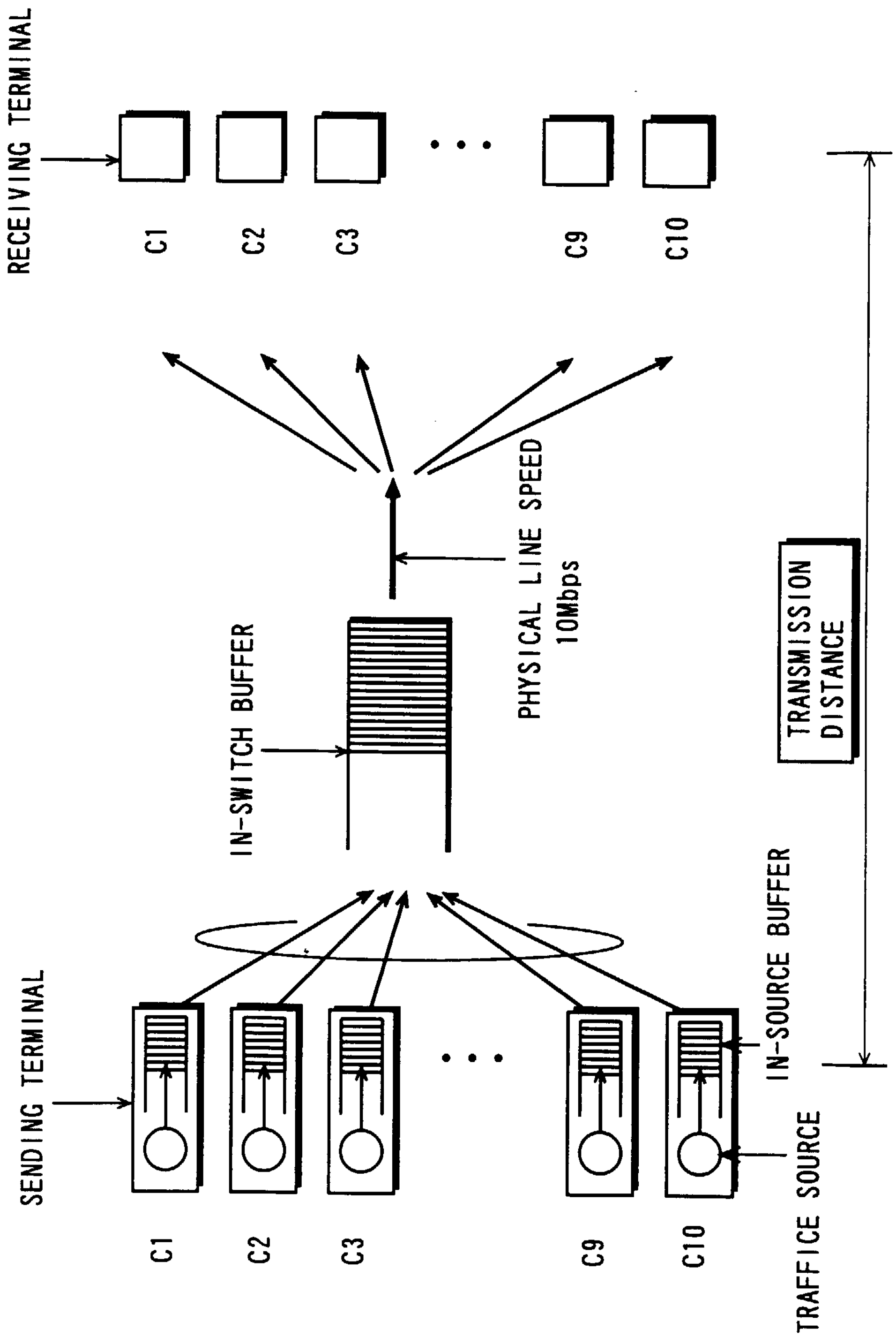
RECEIVING TERMINAL
C1
C2
C3
C9
C10
IN-SWITCH BUFFER
PHYSICAL LINE SPEED
10Mbps
TRANSMISSION DISTANCE
SENDING TERMINAL
IN-SOURCE BUFFER
TRAFFICE SOURCE
C1
C2
C3
C9
C10

F I G. 1 7

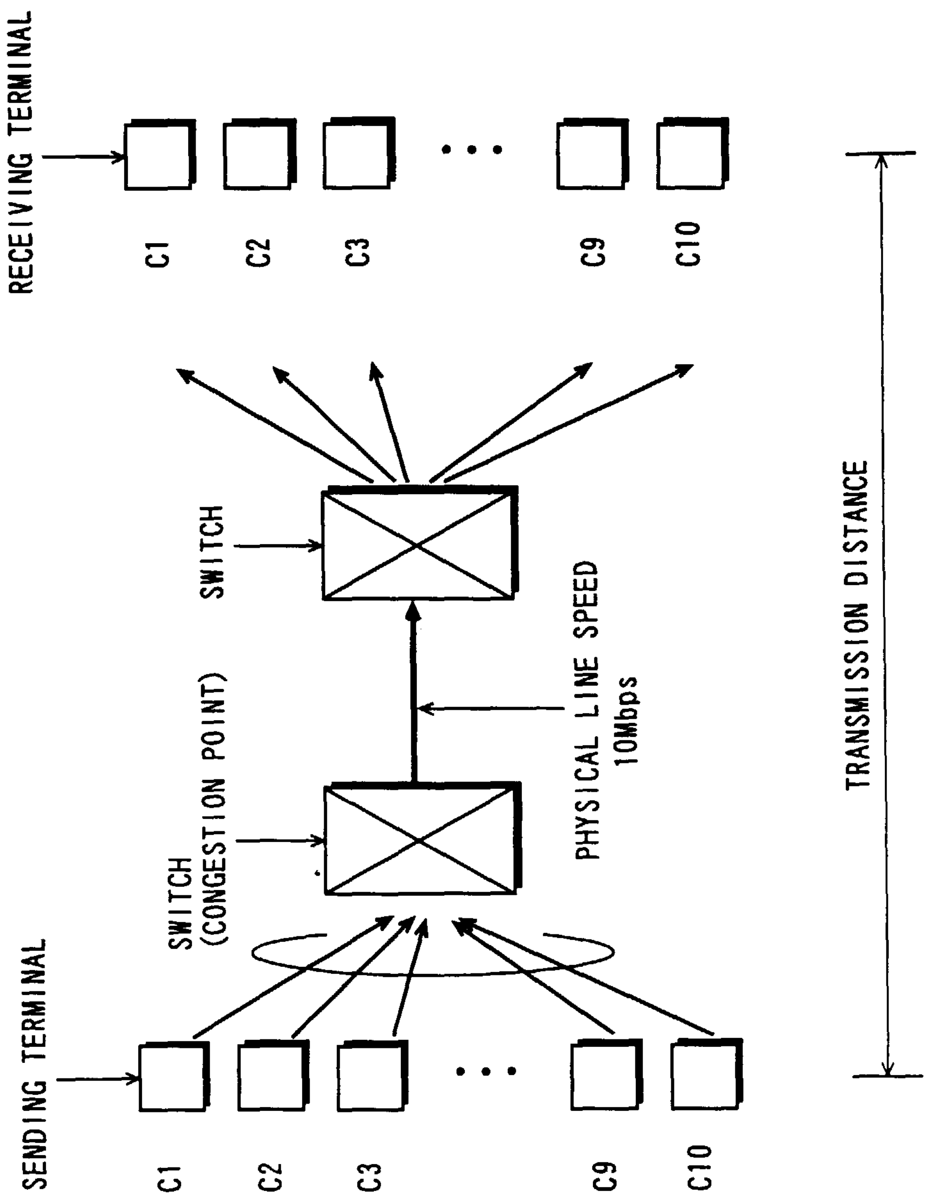
RECEIVING TERMINAL
C1
C2
C3
C9
C10
SWITCH
PHYSICAL LINE SPEED
10Mbps
SWITCH
(CONGESTION POINT)
SENDING TERMINAL
C1
C2
C3
C9
C10
TRANSMISSION DISTANCE

FIG. 18

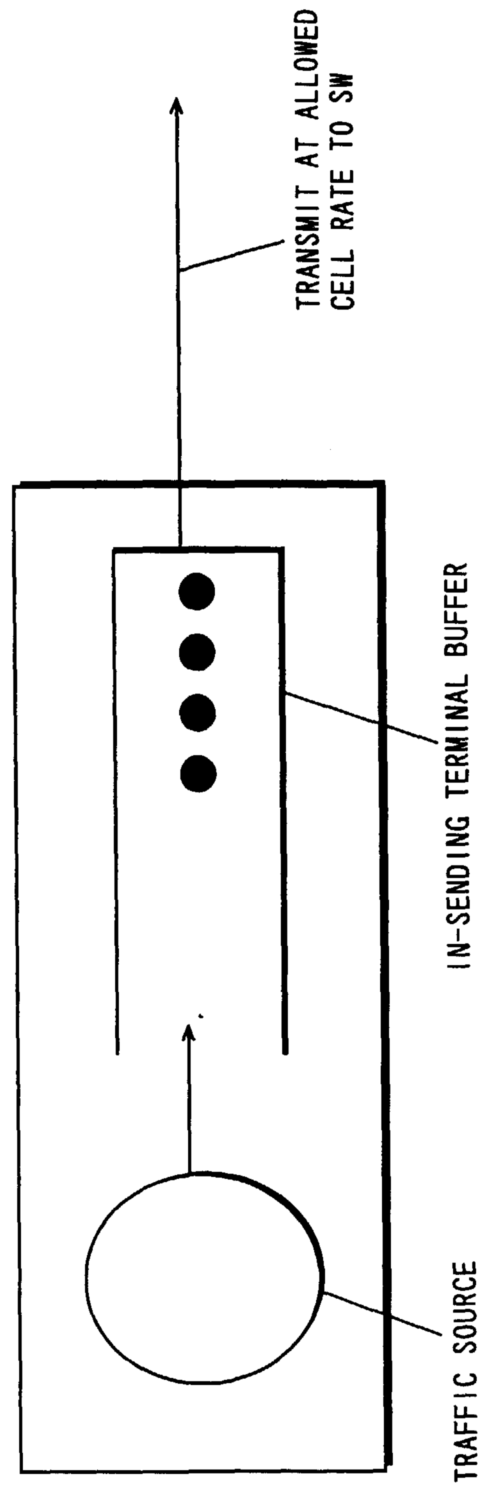
TRANSMIT AT ALLOWED
CELL RATE TO SW
IN-SENDING TERMINAL BUFFER
TRAFFIC SOURCE

FIG. 19

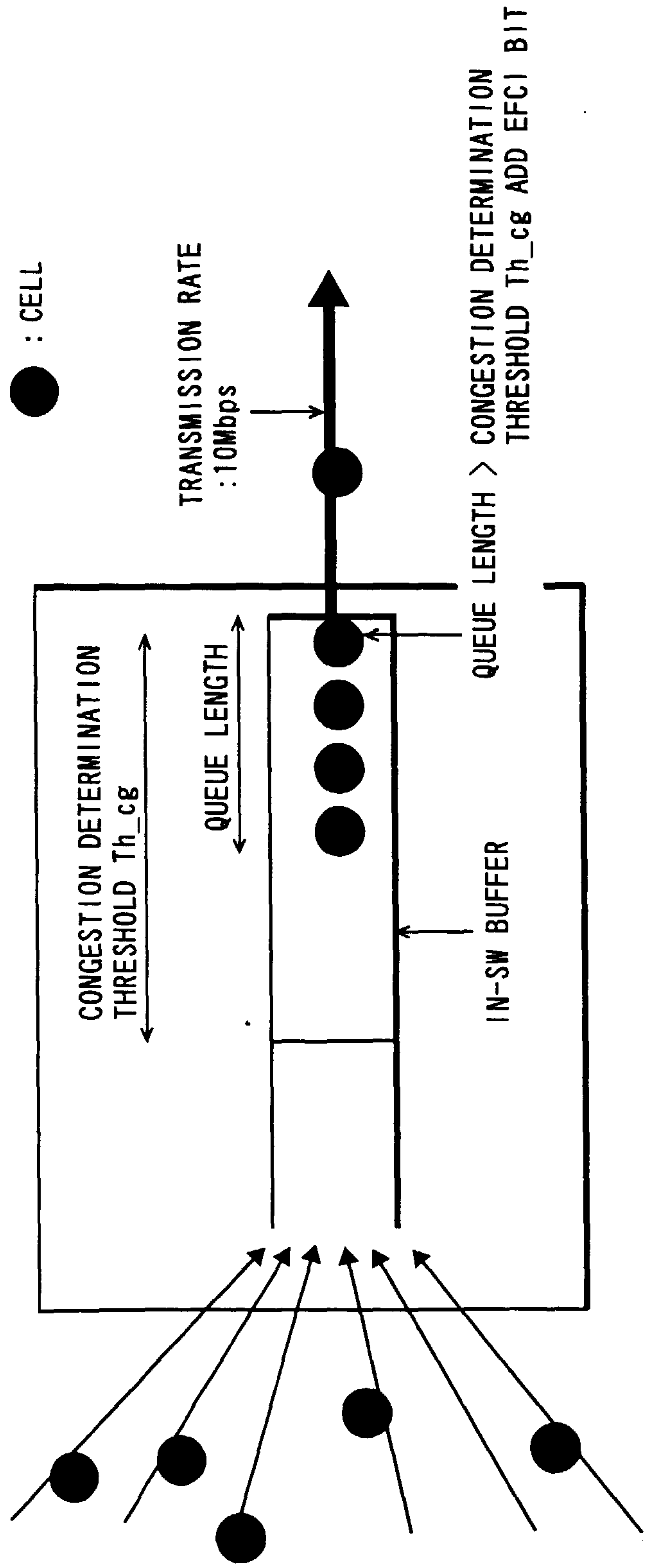
: CELL
TRANSMISSION RATE
:10Mbps
QUEUE LENGTH > CONGESTION DETERMINATION
THRESHOLD Th_cg ADD EFCI BIT
CONGESTION DETERMINATION
THRESHOLD Th_cg
QUEUE LENGTH
IN-SW BUFFER

FIG. 20

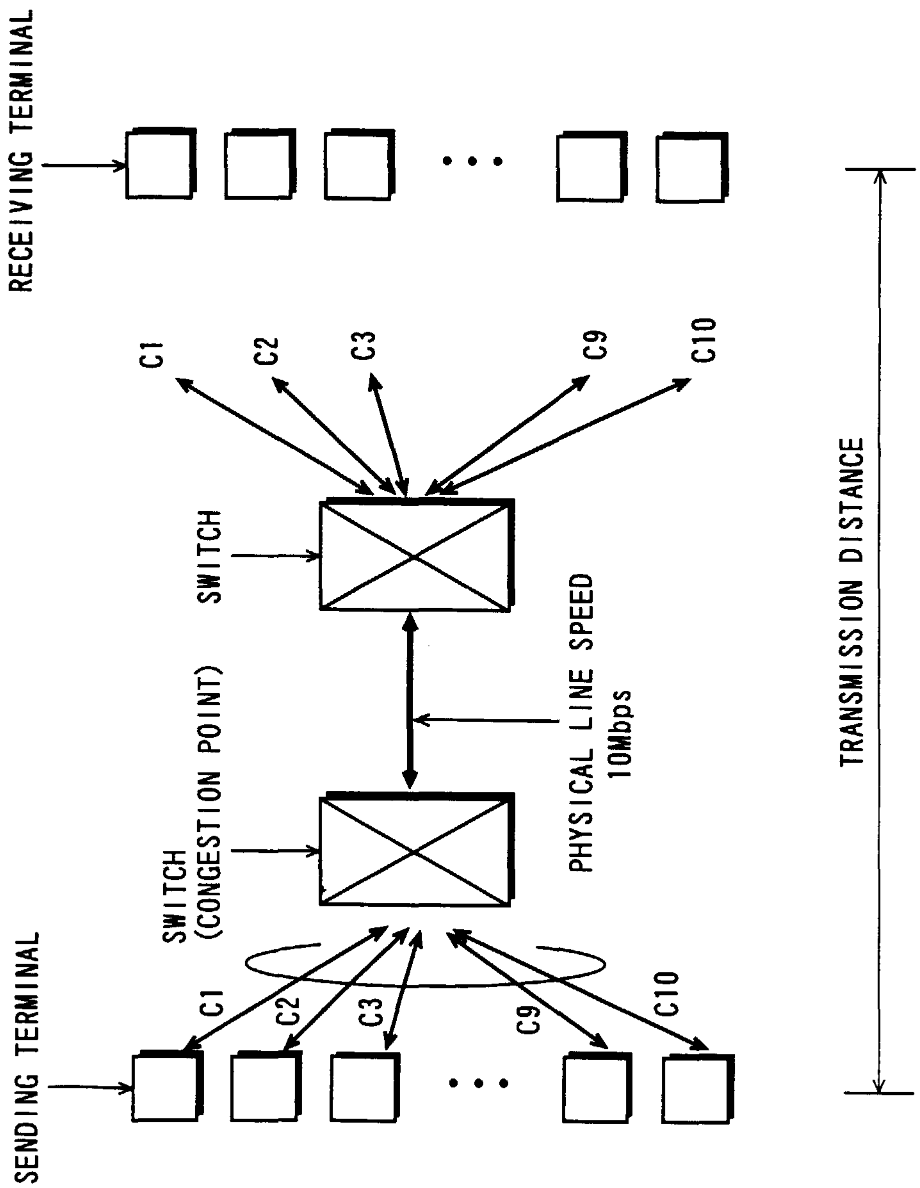
RECEIVING TERMINAL
SENDING TERMINAL
SWITCH
SWITCH
(CONGESTION POINT)
PHYSICAL LINE SPEED
10Mbps
TRANSMISSION DISTANCE
C1
C2
C3
C9
C10
C1
C2
C3
C9
C10

FIG. 21

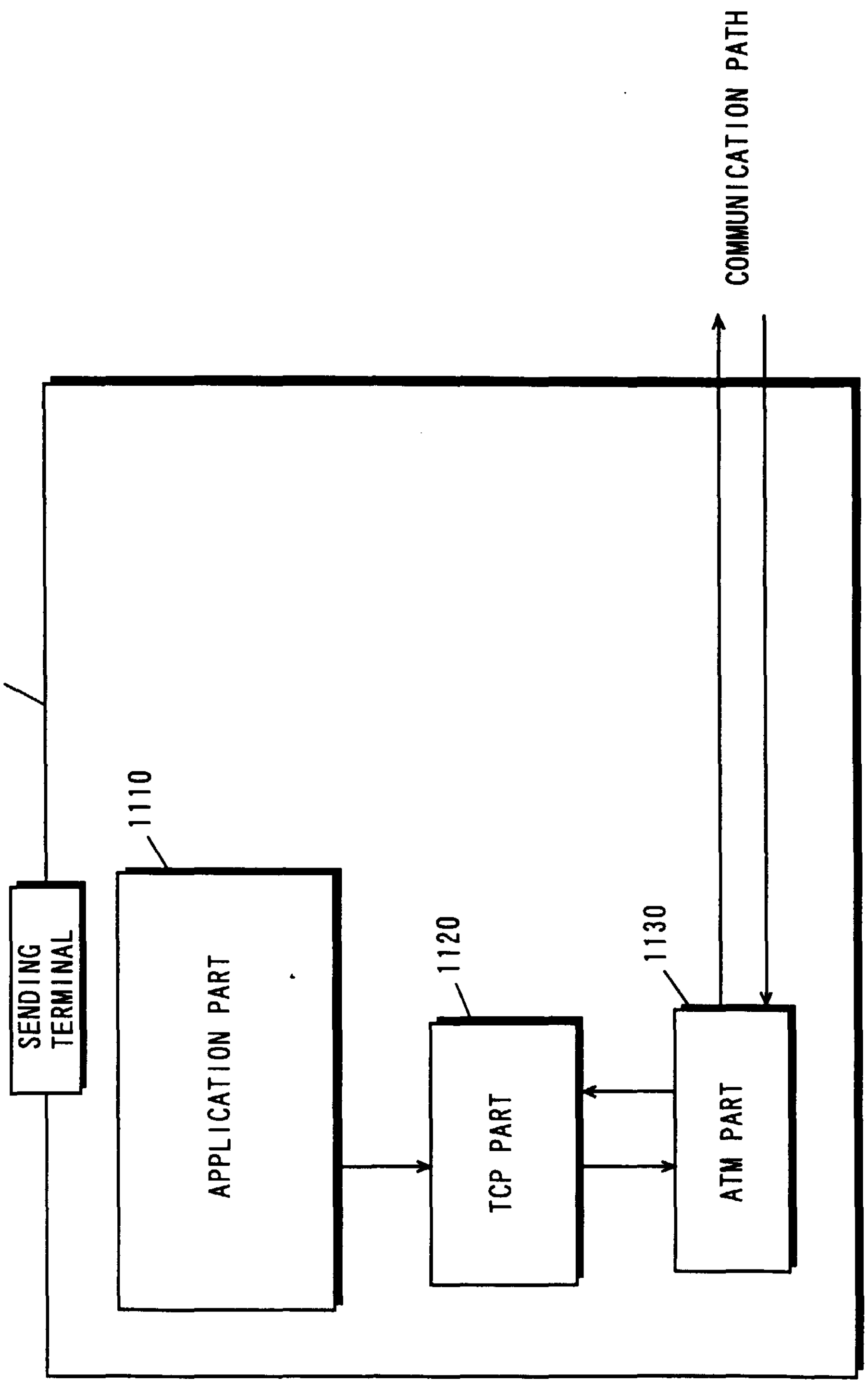
1100
1110
SENDING TERMINAL
APPLICATION PART
1120
TCP PART
1130
ATM PART
COMMUNICATION PATH

F I G. 2 2

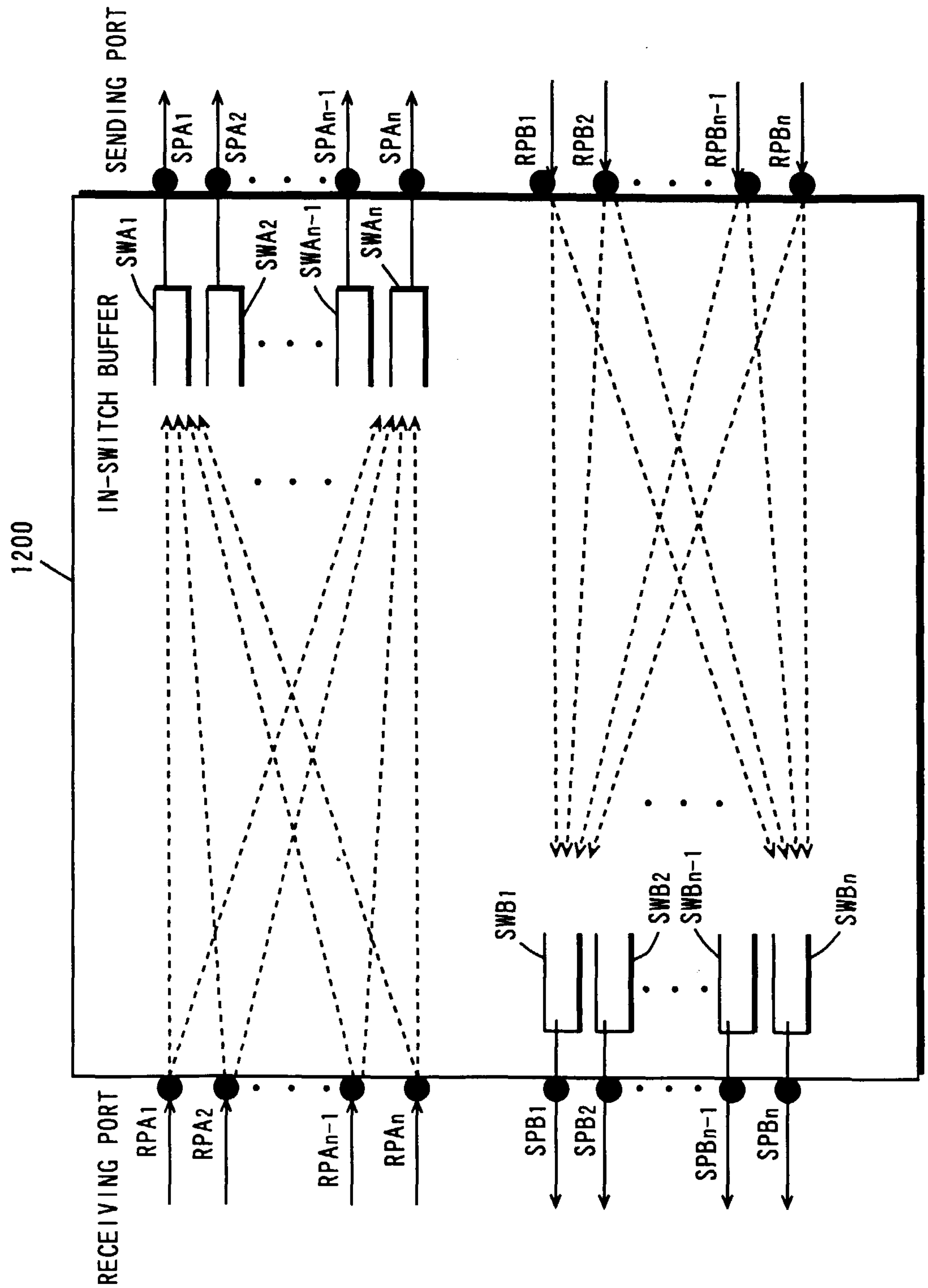
1200
SENDING PORT
RECEIVING PORT
IN-SWITCH BUFFER
SPA1
SPA2
SPAn-1
SPAn
SWA1
SWA2
SWAn-1
SWAn
RPA1
RPA2
RPAn-1
RPAn
RPB1
RPB2
RPBn-1
RPBn
SWB1
SWB2
SWBn-1
SWBn
SPB1
SPB2
SPBn-1
SPBn

FIG. 23

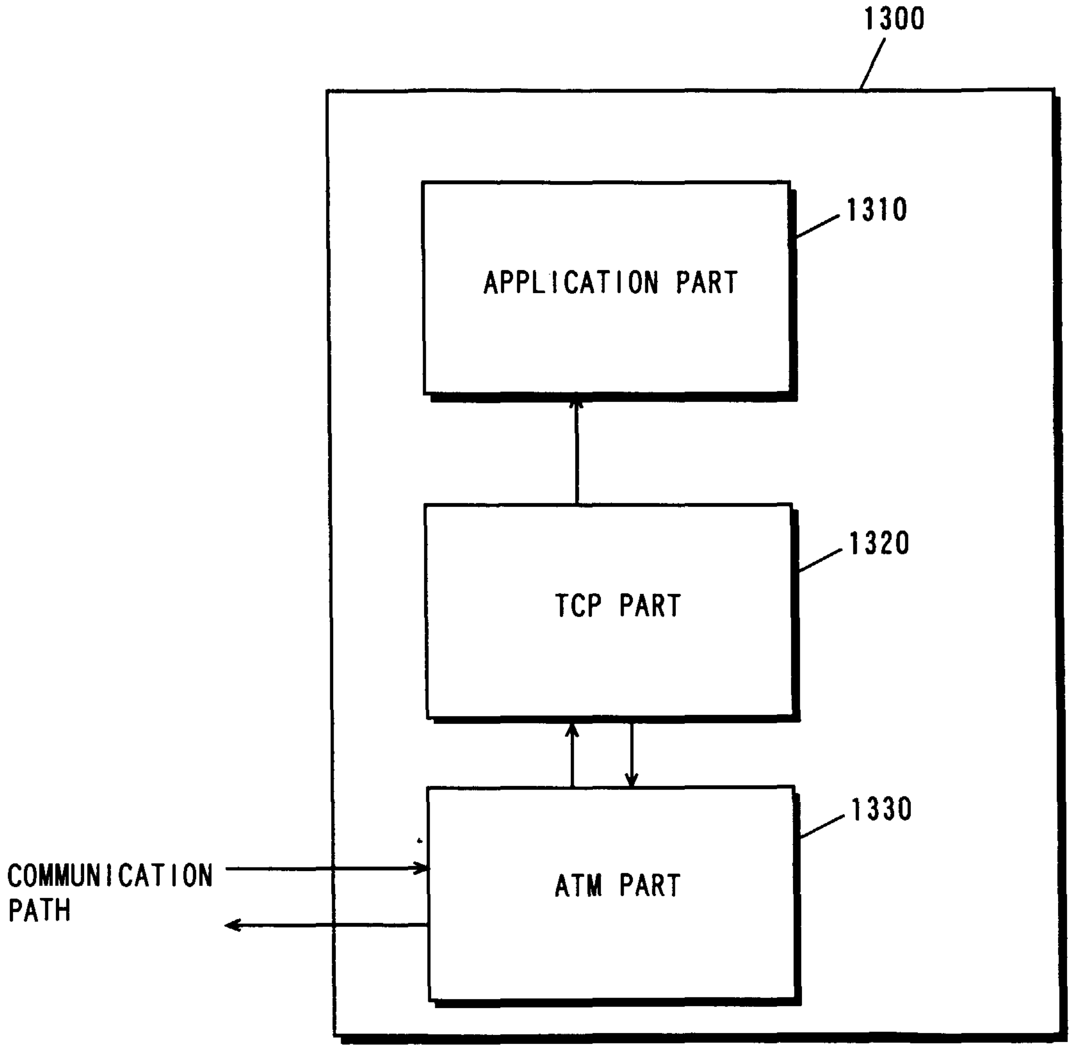
1300
1310
APPLICATION PART
1320
TCP PART
1330
ATM PART
COMMUNICATION PATH

F I G. 2 4

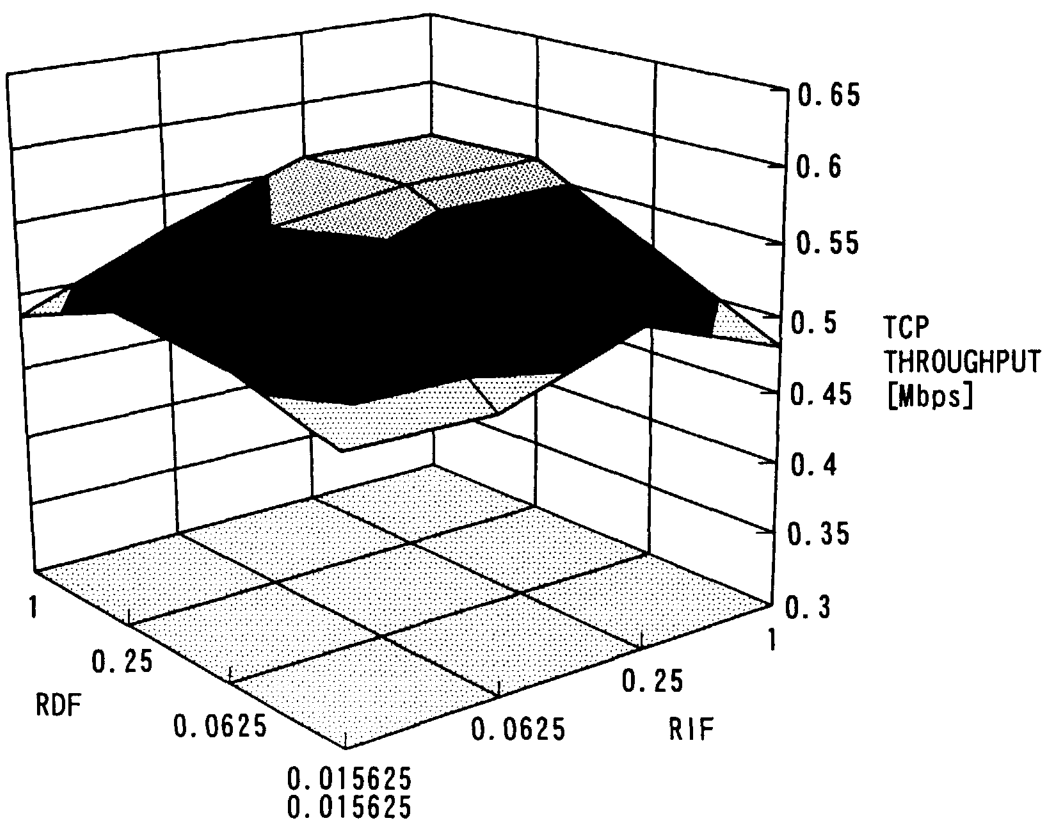


| RDF \ RIF | 0.015625 | 0.0625 | 0.25 | 1 |
|---|---|---|---|---|
| 0.015625 | 0.485486 | 0.484202 | 0.516584 | 0.480316 |
| 0.0625 | 0.507764 | 0.543031 | 0.524705 | 0.520616 |
| 0.25 | 0.516919 | 0.549647 | 0.561174 | 0.562945 |
| 1 | 0.486183 | 0.525836 | 0.559426 | 0.560045 |

(PCR=2Mbps, Th_cg=75, MCR=0.5Mbps,
TRANSMISSION DISTANCE=100km)

F I G. 2 5

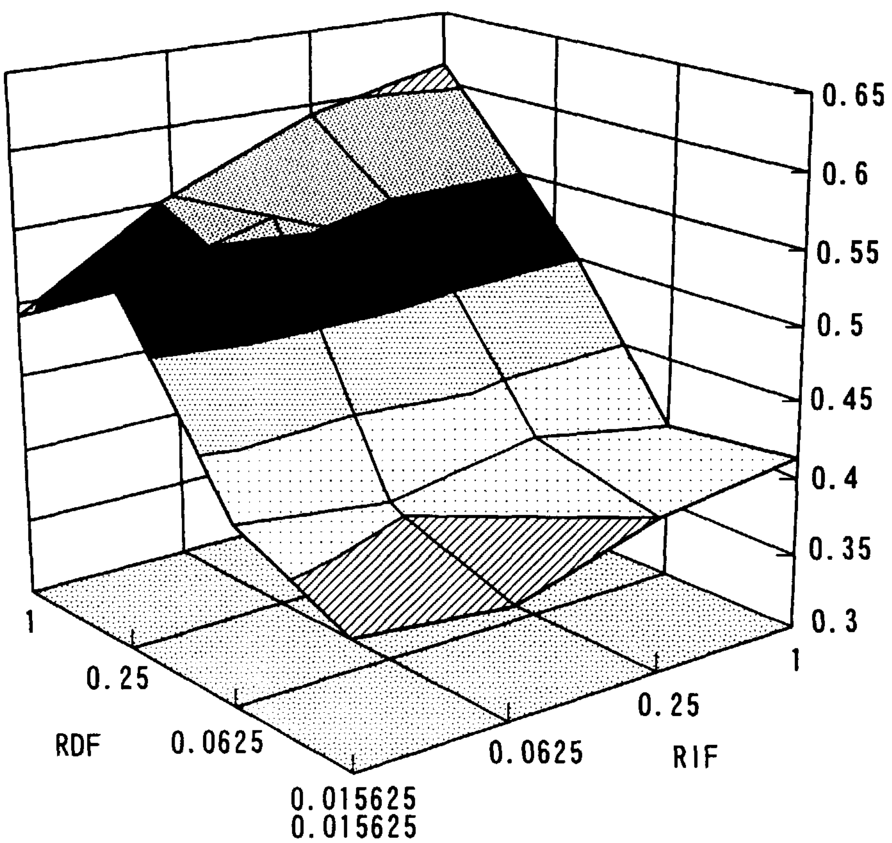


| RDF \ RIF | 0.015625 | 0.0625 | 0.25 | 1 |
|---|---|---|---|---|
| 0.015625 | 0.383539 | 0.373552 | 0.400961 | 0.413126 |
| 0.0625 | 0.416479 | 0.403718 | 0.421648 | 0.404006 |
| 0.25 | 0.534202 | 0.562197 | 0.535278 | 0.521755 |
| 1 | 0.491041 | 0.55274 | 0.592655 | 0.611671 |

(PCR=3Mbps, Th_cg=75, MCR=0.5Mbps,
TRANSMISSION DISTANCE=100km)

FIG. 26

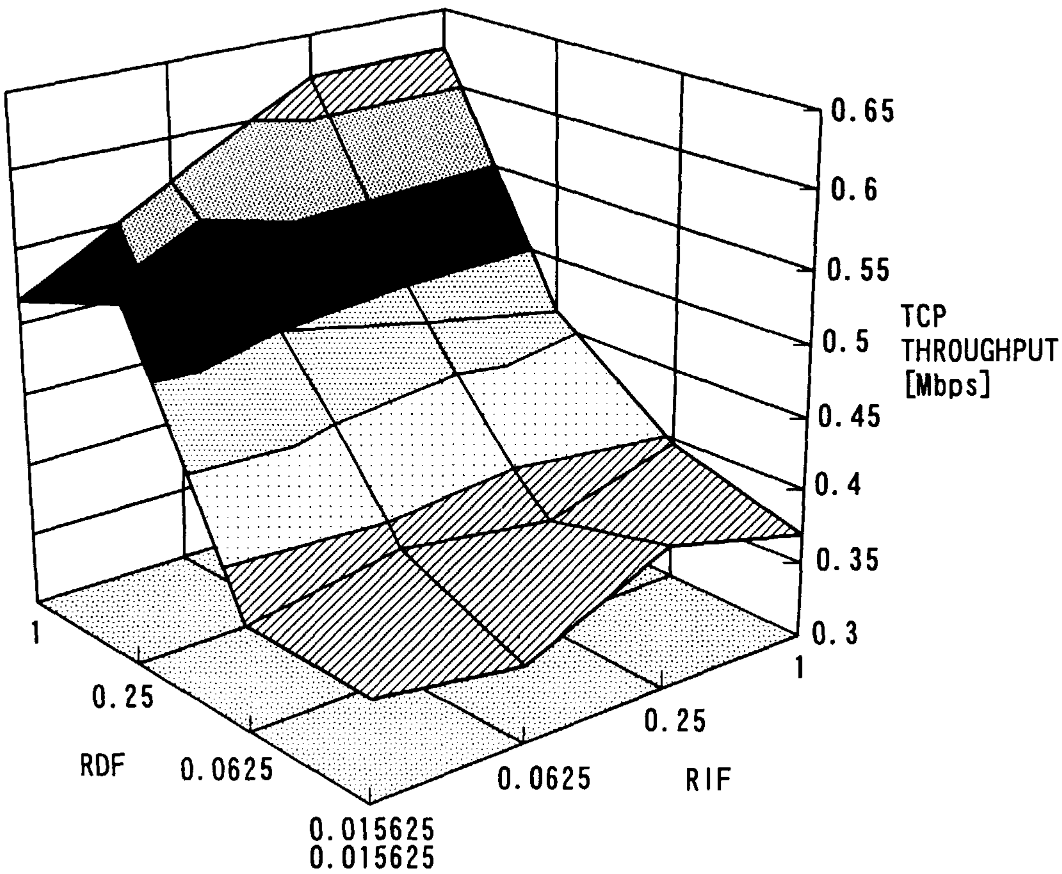


| RDF \ RIF | 0.015625 | 0.0625 | 0.25 | 1 |
|---|---|---|---|---|
| 0.015625 | 0.366705 | 0.351633 | 0.395365 | 0.368578 |
| 0.0625 | 0.370883 | 0.389863 | 0.374988 | 0.396078 |
| 0.25 | 0.542216 | 0.499628 | 0.478171 | 0.460994 |
| 1 | 0.514568 | 0.570683 | 0.621867 | 0.623842 |

(PCR=5Mbps, Th_cg=75, MCR=0.5Mbps, TRANSMISSION DISTANCE=100km)

F I G. 2 7

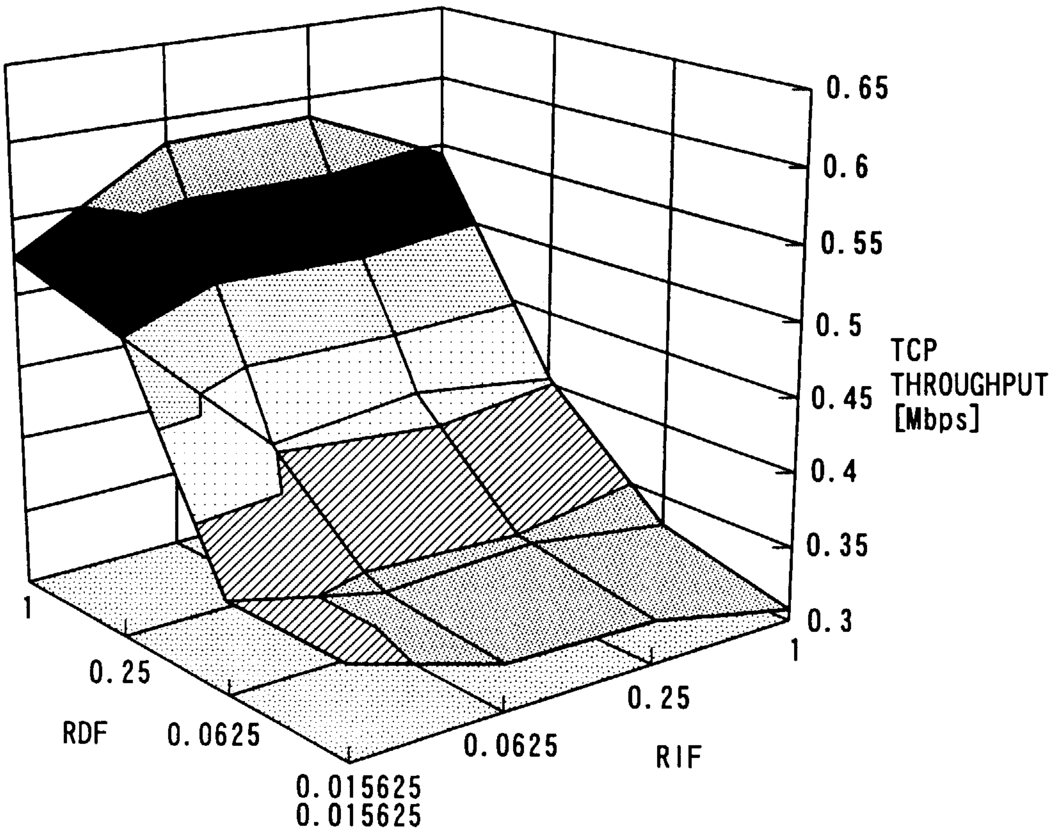


| RDF \ RIF | 0.015625 | 0.0625 | 0.25 | 1 |
|---|---|---|---|---|
| 0.015625 | 0.362977 | 0.331436 | 0.329504 | 0.30621 |
| 0.0625 | 0.362692 | 0.338286 | 0.343549 | 0.329648 |
| 0.25 | 0.501126 | 0.404215 | 0.417036 | 0.40258 |
| 1 | 0.523228 | 0.584589 | 0.58668 | 0.541914 |

(PCR=8Mbps, Th_cg=75, MCR=0.5Mbps,
TRANSMISSION DISTANCE=100km)

F I G. 2 8

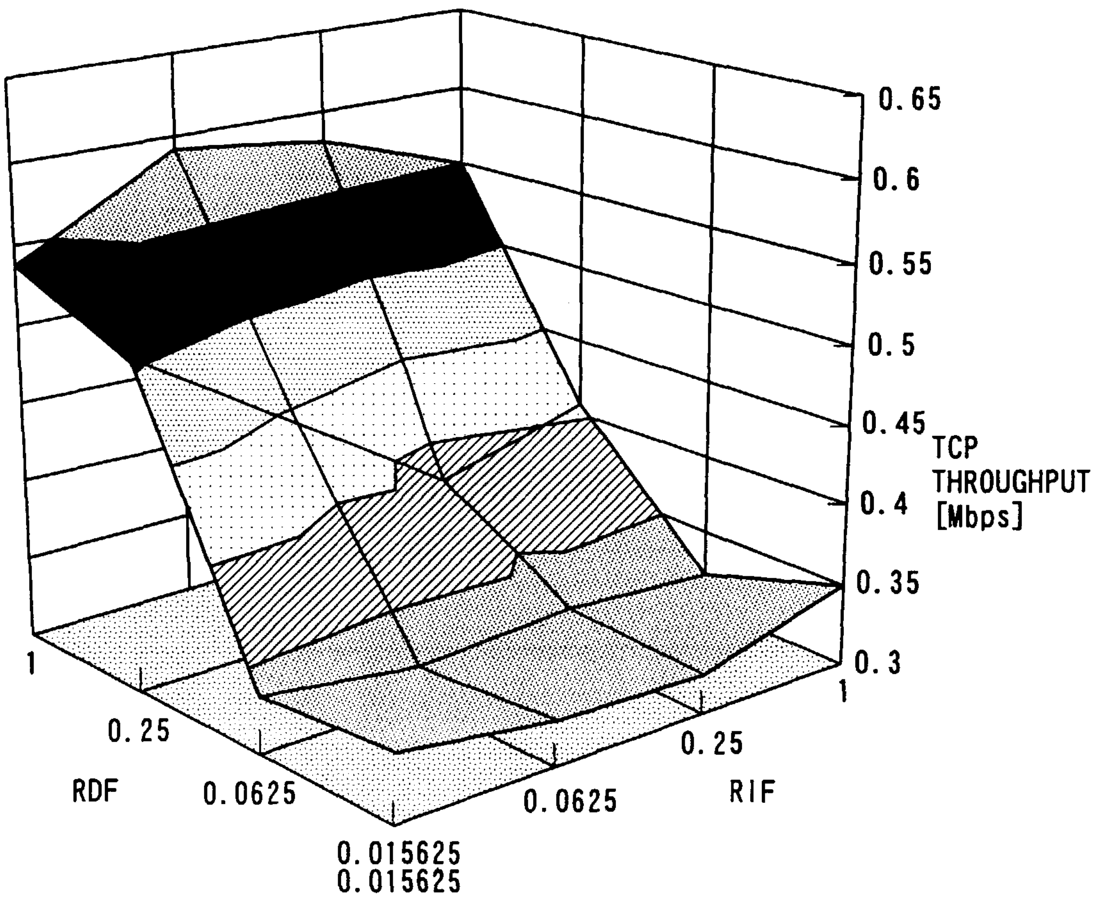


| RDF \ RIF | 0.015625 | 0.0625 | 0.25 | 1 |
|---|---|---|---|---|
| 0.015625 | 0.341909 | 0.327676 | 0.324446 | 0.350242 |
| 0.0625 | 0.336047 | 0.322479 | 0.328577 | 0.321395 |
| 0.25 | 0.504712 | 0.441914 | 0.378289 | 0.407586 |
| 1 | 0.53546 | 0.591471 | 0.57918 | 0.547055 |

(PCR=10Mbps, Th_cg=75, MCR=0.5Mbps,
TRANSMISSION DISTANCE=100km)

FIG. 29

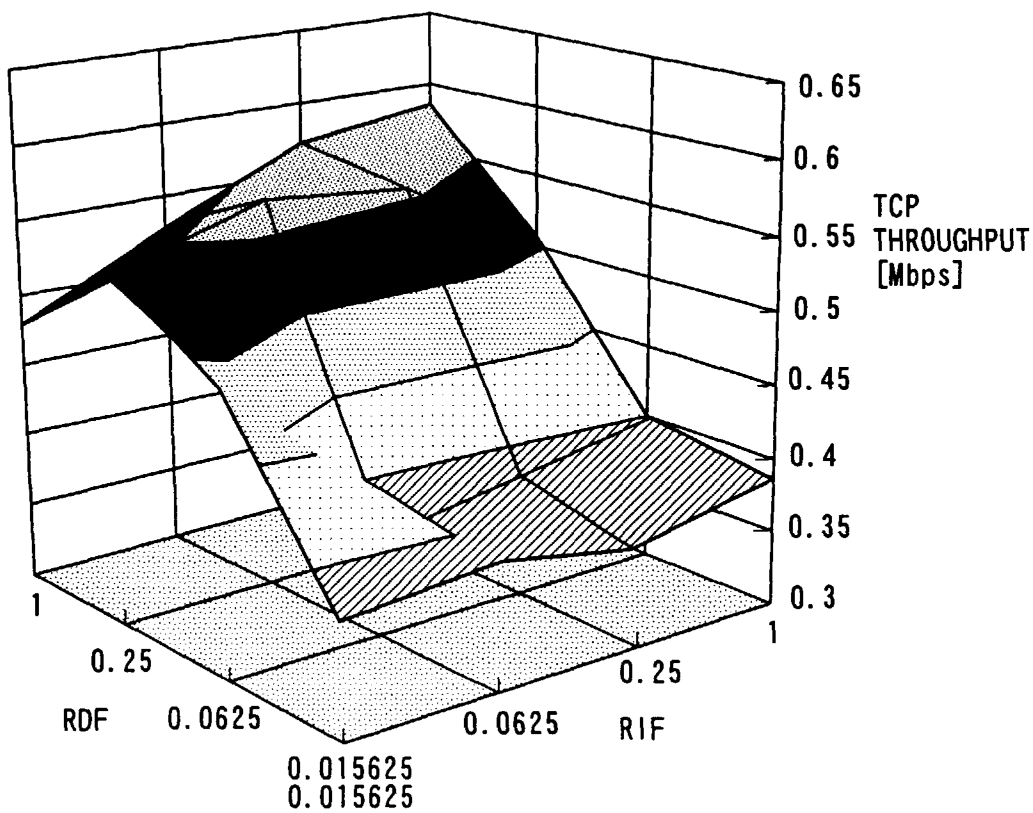


| RDF \ RIF | 0.015625 | 0.0625 | 0.25 | 1 |
|---|---|---|---|---|
| 0.015625 | 0.375375 | 0.384293 | 0.366741 | 0.385582 |
| 0.0625 | 0.48786 | 0.378423 | 0.387908 | 0.398655 |
| 0.25 | 0.536093 | 0.57038 | 0.557395 | 0.505785 |
| 1 | 0.478227 | 0.527871 | 0.570682 | 0.583326 |

(PCR=5Mbps, Th_cg=25, MCR=0.5Mbps,
TRANSMISSION DISTANCE=100km)

FIG. 30

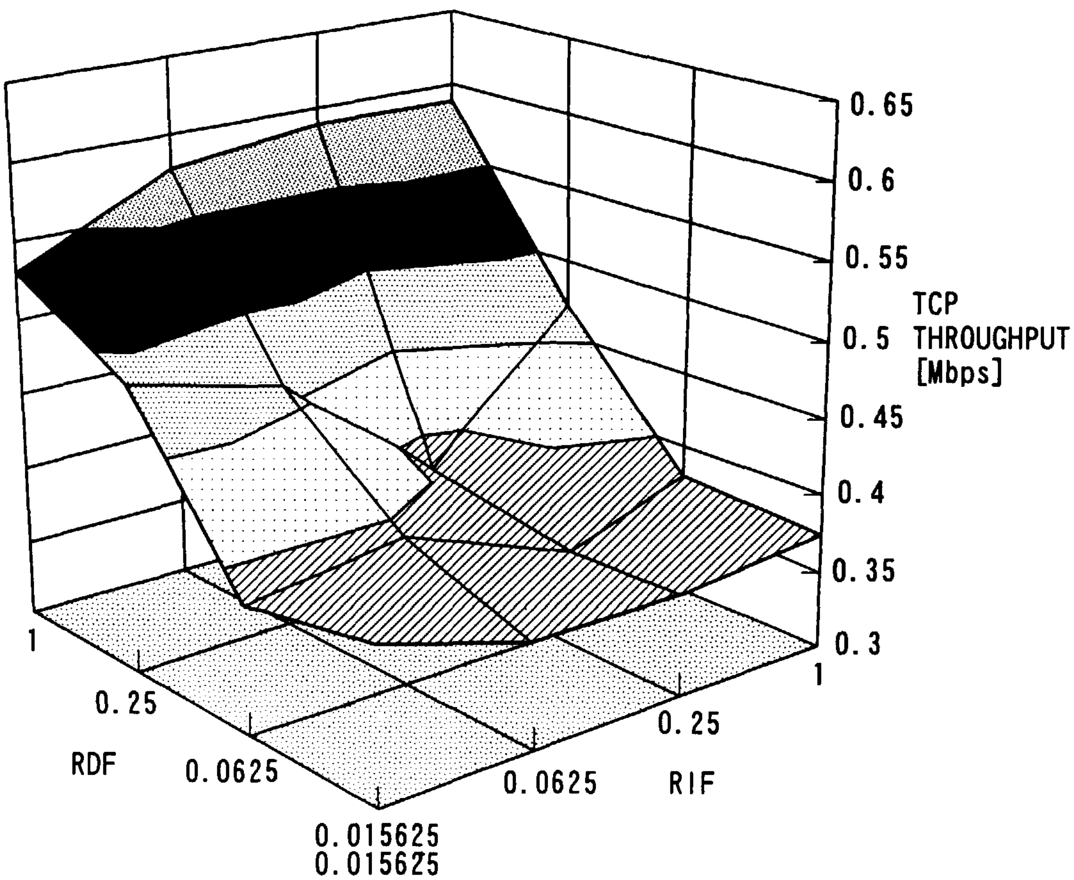


| RDF \ RIF | 0.015625 | 0.0625 | 0.25 | 1 |
|---|---|---|---|---|
| 0.015625 | 0.398218 | 0.367046 | 0.365374 | 0.373833 |
| 0.0625 | 0.383152 | 0.389677 | 0.351189 | 0.3764 |
| 0.25 | 0.486298 | 0.459656 | 0.379793 | 0.468227 |
| 1 | 0.529868 | 0.576852 | 0.587313 | 0.588919 |

(PCR=5Mbps, Th_cg=125, MCR=0.5Mbps, TRANSMISSION DISTANCE=100km)

F I G. 3 1

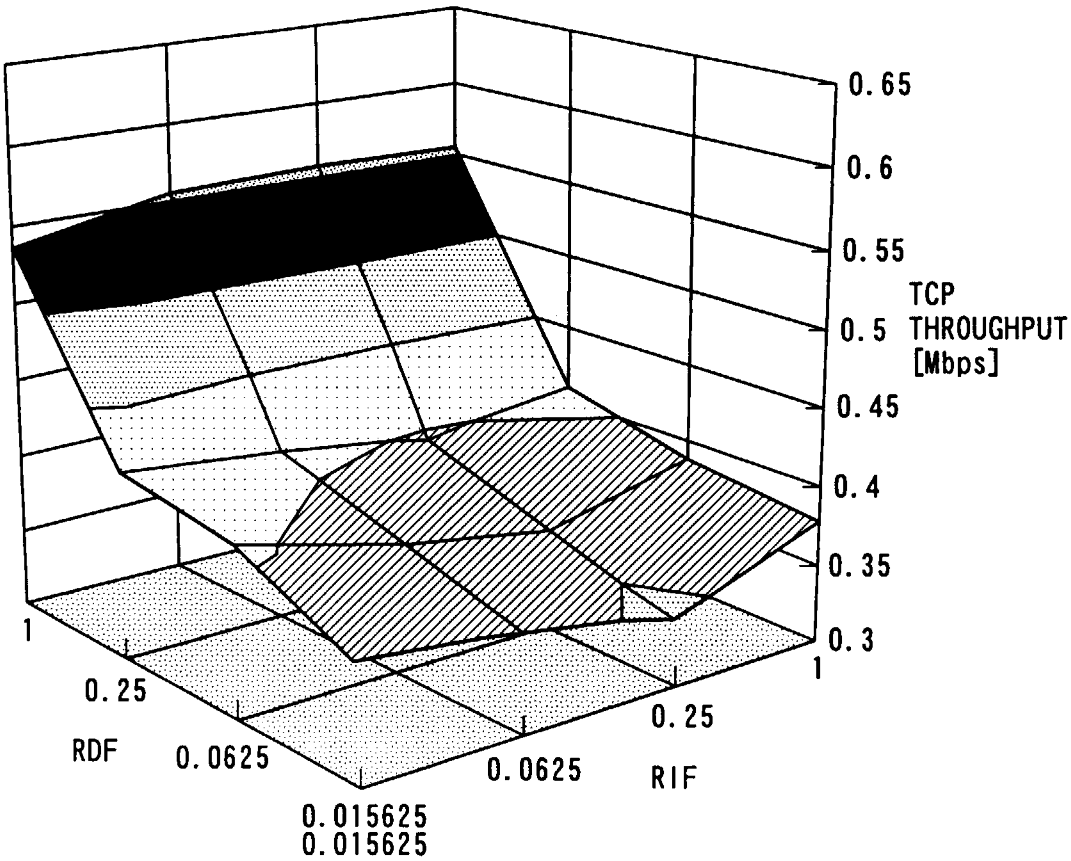


| RDF \ RIF | 0.015625 | 0.0625 | 0.25 | 1 |
|---|---|---|---|---|
| 0.015625 | 0.37377 | 0.36131 | 0.342928 | 0.377308 |
| 0.0625 | 0.406624 | 0.360567 | 0.359358 | 0.38718 |
| 0.25 | 0.418422 | 0.409446 | 0.395628 | 0.410181 |
| 1 | 0.534479 | 0.55406 | 0.556862 | 0.555155 |

(PCR=5Mbps, Th_cg=175, MCR=0.5Mbps,
TRANSMISSION DISTANCE=100km)

F I G. 3 2

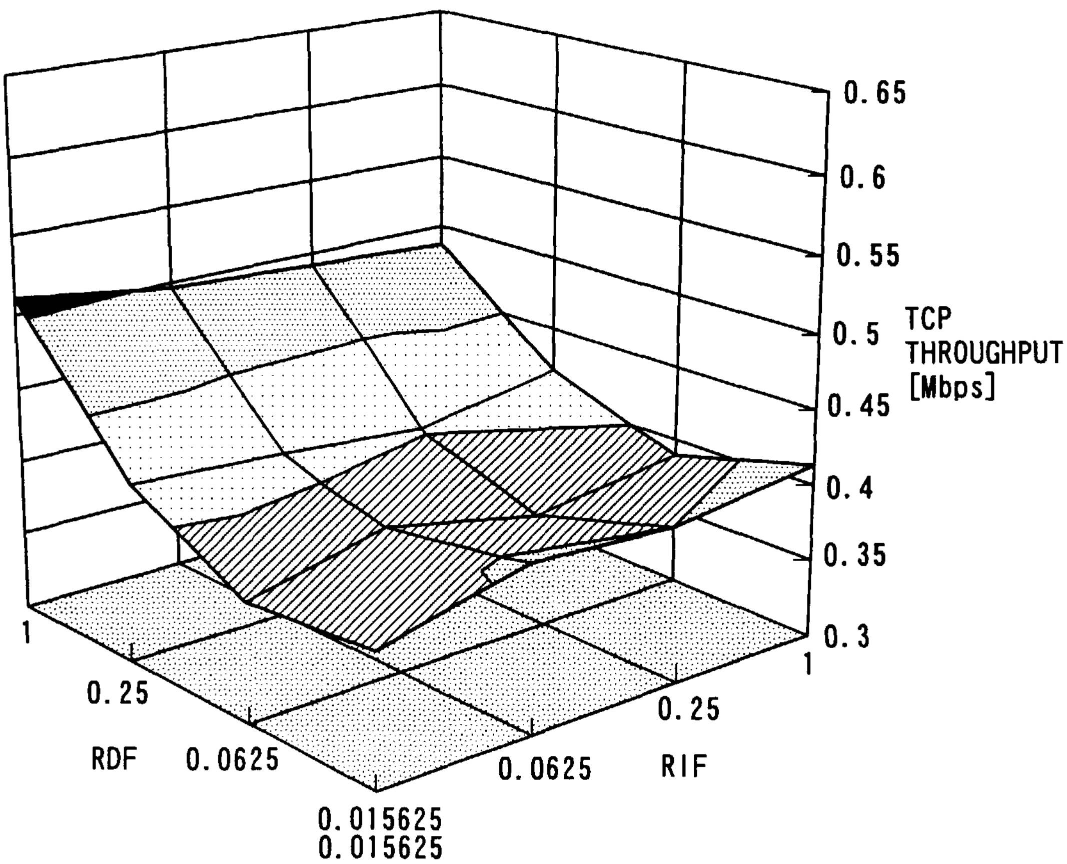


| RDF \ RIF | 0. 015625 | 0. 0625 | 0. 25 | 1 |
|---|---|---|---|---|
| 0. 015625 | 0. 384204 | 0. 405398 | 0. 400288 | 0. 411835 |
| 0. 0625 | 0. 376114 | 0. 38223 | 0. 363957 | 0. 388085 |
| 0. 25 | 0. 415942 | 0. 408632 | 0. 401649 | 0. 419283 |
| 1 | 0. 510172 | 0. 495837 | 0. 491576 | 0. 48697 |

(PCR=5Mbps, Th_cg=225, MCR=0. 5Mbps,
TRANSMISSION DISTANCE=100km)